# EUROPEAN PATENT APPLICATION

(11) **EP 4 840 340 A1**
(43) Date of publication of application: **18.11.2026**
(21) Application number: 25738890.0
(22) Date of filing: 06.01.2025
(51) Int. Cl.: A24F 40/53, A24F 40/46, A24F 40/57, A24D 1/02, A24D 1/20, A24D 3/17, A24C 5/54, G06K 7/10

(54) **AEROSOL GENERATION DEVICE**

(30) Priority: 11.01.2024 KR 20240004855; 11.01.2024 KR 20240004857; 01.04.2024 KR 20240044328; 01.04.2024 KR 20240044329
(71) Applicant: KT&G Corporation, Daedeok-gu Daejeon 34337 (KR)
(72) Inventor: JANG, Seok Su, Daejeon 34023 (KR); KIM, Dong Hun, Daejeon 34307 (KR); KWON, Chan Min, Daejeon 34120 (KR); OH, Jun Yeop, Seoul 02559 (KR)
(74) Representative: Schornack, Oliver
(86) International application number: PCT/KR2025/000236
(87) International publication number: WO 2025/150816

(57) **Abstract**

An aerosol generating device includes: a cavity into which an aerosol generating article is inserted which includes an identification material that emits light having a second wavelength different from a first wavelength when being excited by light having the first wavelength; a heater configured to heat the aerosol generating article inserted in the cavity; a sensor module including a light emitting unit configured to emit the light having the first wavelength toward the identification material of the aerosol generating article inserted in the cavity, and a light receiving unit arranged at a preset angle with the light emitting unit and configured to receive the light having the second wavelength emitted from the identification material; and a controller configured to determine information of the aerosol generating article based on a sensing value sensed through the light receiving unit, and to control power supply to the heater based on the determined information of the aerosol generating article. The light receiving unit may receive the light having the second wavelength emitted from the identification material while the light emitting unit emits the light having the first wavelength.

## Description

### Technical Field

Embodiments relate to an aerosol generating device that may accurately identify the presence and a type of an aerosol generating article.

### Background Art

Recently, there has been an increasing demand for an alternative method of overcoming disadvantages of general cigarettes. For example, there has been an increasing demand for systems that generate aerosols by heating a cigarette (or an "aerosol-generating article") using an aerosol-generating device, rather than by burning the cigarette.

Recently, variable aerosol generating devices including separate sensors have been provided to detect whether a cigarette has been inserted or removed, a type of a cigarette, and whether a cigarette has been counterfeited. In particular, as a type of a cigarette has become more diverse and there are counterfeited cigarettes in the market, the need for an aerosol generating device having a function of distinguishing the cigarettes is increasing. An aerosol generating device may obtain information on cigarettes through various sensors, such as an inductive sensor, a capacitive sensor, a resistive sensor, an infrared sensor, and a color sensor.

### Disclosure of Invention

### Technical Problem

An aerosol generating device for various types of cigarettes may perform different control operations depending on a type of a cigarette. Also, the aerosol generating device may start a control operation only for a genuine cigarette by distinguishing a counterfeit cigarette. Accordingly, the aerosol generating device needs to identify a type of a cigarette and whether the cigarette has been counterfeited through a separate sensor.

In particular, the aerosol generating device may perform a heating operation with a certain heating profile corresponding to a certain type of a cigarette. Therefore, sensing accuracy for a cigarette needs to be improved to provide an optimal sense of smoking from the cigarette.

In various embodiments according to the present disclosure, an aerosol generating device may be provided which obtains a sensing value from an aerosol generating article including an identification material that is excited when light in a preset wavelength range is absorbed, and determines information of the aerosol generating article based on the obtained sensing value.

Also, in various embodiments according to the present disclosure, an aerosol generating device may be provided which may quickly and accurately recognize information on an aerosol generating article by emitting light having a preset wavelength and simultaneously receiving light emitted from an identification material without noise.

The technical problems of the present disclosure are not limited to the aforementioned description, and other technical problems may be clearly understood by one of ordinary skill in the art from the present specification and the attached drawings.

### Solution to Problem

An aerosol generating device according to an embodiment may include a cavity into which an aerosol generating article is inserted which includes an identification material that emits light having a second wavelength different from a first wavelength when being excited by light having the first wavelength; a heater configured to heat the aerosol generating article inserted in the cavity; a sensor module including a light emitting unit configured to emit the light having the first wavelength toward the identification material of the aerosol generating article inserted in the cavity, and a light receiving unit arranged at a preset angle with the light emitting unit and configured to receive the light having the second wavelength emitted from the identification material; and a controller configured to determine information of the aerosol generating article based on a sensing value sensed through the light receiving unit, and to control power supply to the heater based on the determined information of the aerosol generating article. The light receiving unit may receive the light having the second wavelength emitted from the identification material while the light emitting unit emits the light having the first wavelength.

A path of the light having the first wavelength emitted from the light emitting unit may be misaligned with a path of the light having the second wavelength received by the light receiving unit.

The aerosol generating device according to an embodiment may further include a partition wall arranged between the light emitting unit and the light receiving unit and extending toward the cavity.

The aerosol generating device according to an embodiment may further include a sensor support unit fixed to an aerosol generating device body including the cavity and supporting the sensor module.

The sensor support unit may include a light emitting support unit supporting the light emitting unit and a light receiving support unit forming a preset angle with the light emitting support unit and supporting the light receiving unit.

The aerosol generating device according to an embodiment may further include a shielding portion arranged to surround the sensor module and configured to block an electric or magnetic field signal generated from an outside.

The shielding portion may include a first portion covering an upper portion of the sensor module, a second portion covering a lower portion of the sensor module, and a third portion connecting the first portion to the second portion and covering a side surface of the sensor module.

The aerosol generating device according to an embodiment may further include a lens arranged between the sensor module and the cavity, and through which the light having the first wavelength emitted from the light emitting unit and the light having the second wavelength emitted from the identification material pass.

The lens may include a first lens which focuses the light having the first wavelength onto the identification material, and a second lens which focuses the light having the second wavelength onto the light receiving unit.

The first lens may transmit the light having the first wavelength therethrough and absorb light other than the light having the first wavelength, and the second lens may transmit the light having the second wavelength therethrough and absorb light other than the light having the second wavelength.

The sensor module may be arranged to be movable in a direction in which the cavity extends.

The sensor module may be arranged to be movable in a circumferential direction of the cavity.

The first wavelength may be 10 nm to 340 nm, and the second wavelength may be 380 nm to 780 nm.

The aerosol generating device according to an embodiment may further include a filter configured to filter out the light having the first wavelength among light received by the light receiving unit.

An aerosol generating device according to another embodiment may include a cavity into which an aerosol generating article is inserted which includes an identification material that emits light having a second wavelength different from a first wavelength when being excited by light having the first wavelength; a heater configured to heat the aerosol generating article inserted in the cavity; a sensor module including a light emitting unit configured to emit the light having the first wavelength toward the identification material of the aerosol generating article inserted in the cavity, and a light receiving unit arranged at a preset angle with the light emitting unit and configured to receive the light having the second wavelength emitted from the identification material; and a controller configured to determine information of the aerosol generating article based on a sensing value sensed through the light receiving unit after the light emitting unit stops emitting light, and to control power supply to the heater based on the determined information of the aerosol generating article.

An aerosol generating article according to an embodiment may include an aerosol generating material for generating an aerosol by being heated, an identification material that absorbs light having a first wavelength irradiated from the outside of the aerosol generating article and emits light having a second wavelength different from the first wavelength, and a separation prevention portion surrounding a region where the identification material is arranged.

At least part of the separation prevention portion is transparent, and at least part thereof may be exposed to heat and discolored opaquely.

The identification material may emit the light having the second wavelength at an activation temperature or higher, and the separation prevention portion may be discolored at the activation temperature or higher.

The separation prevention portion may have an area greater than an area of the region where the identification material is arranged and may be arranged such that the region where the identification material is arranged is not exposed to the outside.

An end of the separation prevention portion may be separated from an end of the region where the identification material is arranged by 1 mm to 10 mm.

The separation prevention portion may include at least one material selected from a group consisting of nitrocellulose, polyamide, propyl acetate, isopropyl alcohol, ethyl acetate, and 1,2-cyclohexane dicarboxylic acid diisononyl ester (DINCH).

The first wavelength may be 10 nm to 340 nm, and the second wavelength may be 380 nm to 780 nm.

The identification material may include at least one organic material selected from a group consisting of a quinazolinone-based compound, a thiophene-based compound, a sulfobenzoic acid-based compound, and a naphthyridine-based compound.

A difference between a longest absorption wavelength (Absₘₐₓ) of the identification material and a dominant wavelength (DWL) of the light emitted from the identification material may be 20 % or more based on the longest absorption wavelength.

The identification material may include a plurality of particles each having a diameter of 0.1 µm to about 10 µm.

A wrapper for packaging the aerosol generating article may be included, and the identification material may be arranged on an outer surface of the wrapper.

The identification material may be arranged in a circumferential direction of the aerosol generating article, and the region where the identification material is arranged may extend from 1 mm to 10 mm in a longitudinal direction of the aerosol generating article.

The aerosol generating article may include an aerosol generating rod and a filter rod that are arranged in order in the longitudinal direction of the aerosol generating article, and a length from a downstream end of the region where the identification material is arranged to a boundary between the aerosol generating rod and the filter rod may be 0 mm to 5 mm.

The identification material may include a first identification material and a second identification material, and the first identification material and the second identification material may emit light having different wavelengths, and a difference between the wavelength of light emitted from the first identification material and the wavelength of light emitted from the second identification material may be 15 nm or more.

The identification material may include a first identification material and a second identification material, and the first identification material may be separated from the second identification material in the longitudinal direction of the aerosol generating article.

### Advantageous Effects of Invention

According to various embodiments of the present disclosure, an aerosol generating device may detect a type of an inserted aerosol generating article and perform heating according to a temperature profile corresponding to the detected type of the aerosol generating article, and thus, an optimal sense of smoking may be provided to a user.

Also, according to various embodiments of the present disclosure, an aerosol generating device may emit light having a preset wavelength and simultaneously receive light emitted from an identification material without noise, and thus, information on an aerosol generating article may be rapidly and accurately recognized.

Also, because an identification material according to the present disclosure does not substantially emit light before light having a preset wavelength is irradiated thereon, the identification material does not affect the appearance of an aerosol generating article, and thus, the identification material may provide information on the aerosol generating article to an aerosol generating device without being recognized by a user.

Also, an aerosol generating device according to the present disclosure may determine information on an aerosol generating article based on a sensing value from an identification material, and thus, identification accuracy of the aerosol generating article may be improved.

Effects according to the spirit of the present disclosure are not limited to the above-mentioned effects, and other effects not mentioned will be clearly understood by those skilled in the art from the following description.

### Brief Description of Drawings

FIGS. 1 to 3 are views illustrating examples of aerosol generating articles.
FIGS. 4A to 4D are cross-sectional side views of an aerosol generating article illustrating examples of arrangement position/method of an identification material.
FIGS. 5A to 5D are perspective views of an aerosol generating article illustrating examples of an arrangement position/method of an identification material.
FIGS. 6A and 6B are views in which a tobacco rod, a filter rod, and a wrapper are separated from an aerosol generating article.
FIG. 7 is a schematic side view of an aerosol generating system according to an embodiment.
FIG. 8 is a schematic side view of an aerosol generating system using a heating method that is different from a heating method of the aerosol generating system in FIG. 7.
FIG. 9A is a perspective view illustrating an example of an aerosol generating device to which a sensor module is applied.
FIG. 9B is a perspective view illustrating some components of the aerosol generating device illustrated in FIG. 9A.
FIG. 10 is a perspective view illustrating another example of an aerosol generating device to which a sensor module is applied.
FIG. 11 is a perspective view illustrating another example of an aerosol generating device to which a sensor module is applied.
FIG. 12 is a flowchart in which an aerosol generating system according to an embodiment determines information on an aerosol generating article and controls power supply to a heater.
FIG. 13A illustrates an example of a graph of a wavelength of light that is emitted from a first identification material when light having a wavelength in a first wavelength range is irradiated.
FIG. 13B illustrates an example of a graph of a wavelength of a light that is emitted from a second identification material when light having a wavelength in the first wavelength range is irradiated.
FIG. 14A illustrates an example of a graph of a wavelength of light that is emitted from a third identification material when light having a wavelength in the first wavelength range is irradiated.
FIG. 14B illustrates an example of a graph of a wavelength of light that is emitted from a third identification material as light having a wavelength in the first wavelength range is irradiated.
FIG. 15 is a flowchart of another specific example in which an aerosol generating system according to an embodiment determines information of an aerosol generating article.
FIG. 16 is a schematic side view of an aerosol generating system including an example of a sensor module.
FIG. 17 is a schematic side view of an aerosol generating system including a plurality of sensor modules.
FIG. 18 is a schematic cross-sectional plan view of an aerosol generating system including another example of a sensor module.
FIG. 19 is a schematic cross-sectional plan view of an aerosol generating system including a plurality of sensor modules.
FIG. 20 is a schematic side view of an aerosol generating system including a shielding portion.
FIG. 21 is a schematic cross-sectional plan view of an aerosol generating system including a support unit, a fixing unit, and a partition wall.
FIG. 22 is a schematic cross-sectional plan view of an aerosol generating system including a lens.
FIG. 23A is a side view of a sensor module according to an embodiment, FIG. 23B is a plan view of a sensor module according to an embodiment, and FIG. 23C is a block diagram of a sensor module according to an embodiment.
FIGS. 24A and 24B are graphs illustrating detection results of a sensor module according to an embodiment.
FIG. 25 is a side view of a sensor module according to an embodiment.
FIG. 26 is a side view of a sensor module according to an embodiment.
FIG. 27 is a side view of a sensor module according to an embodiment.
FIG. 28 is a side view of a sensor module according to an embodiment.
FIG. 29 is a side view of a sensor module according to an embodiment.
FIG. 30 is a block diagram of an aerosol generating device according to another embodiment.

### Best Mode for Carrying out the Invention

An aerosol generating device according to an embodiment may include a cavity into which an aerosol generating article is inserted which includes an identification material that emits light having a second wavelength different from a first wavelength when being excited by light having the first wavelength; a heater configured to heat the aerosol generating article inserted in the cavity; a sensor module including a light emitting unit configured to emit the light having the first wavelength toward the identification material of the aerosol generating article inserted in the cavity, and a light receiving unit arranged at a preset angle with the light emitting unit and configured to receive the light having the second wavelength emitted from the identification material; and a controller configured to determine information of the aerosol generating article based on a sensing value sensed through the light receiving unit, and to control power supply to the heater based on the determined information of the aerosol generating article. The light receiving unit may receive the light having the second wavelength emitted from the identification material while the light emitting unit emits the light having the first wavelength.

A path of the light having the first wavelength emitted from the light emitting unit may be misaligned with a path of the light having the second wavelength received by the light receiving unit.

The aerosol generating device according to an embodiment may further include a partition wall arranged between the light emitting unit and the light receiving unit and extending toward the cavity.

The aerosol generating device according to an embodiment may further include a sensor support unit fixed to an aerosol generating device body including the cavity and supporting the sensor module.

The sensor support unit may include a light emitting support unit supporting the light emitting unit and a light receiving support unit forming a preset angle with the light emitting support unit and supporting the light receiving unit.

The aerosol generating device according to an embodiment may further include a shielding portion arranged to surround the sensor module and configured to block an electric or magnetic field signal generated from an outside.

The shielding portion may include a first portion covering an upper portion of the sensor module, a second portion covering a lower portion of the sensor module, and a third portion connecting the first portion to the second portion and covering a side surface of the sensor module.

The aerosol generating device according to an embodiment may further include a lens arranged between the sensor module and the cavity, and through which the light having the first wavelength emitted from the light emitting unit and the light having the second wavelength emitted from the identification material pass.

The lens may include a first lens which focuses the light having the first wavelength onto the identification material, and a second lens which focuses the light having the second wavelength onto the light receiving unit.

The first lens may transmit the light having the first wavelength therethrough and absorb light other than the light having the first wavelength, and the second lens may transmit the light having the second wavelength therethrough and absorb light other than the light having the second wavelength.

The sensor module may be arranged to be movable in a direction in which the cavity extends.

The sensor module may be arranged to be movable in a circumferential direction of the cavity.

The first wavelength may be 10 nm to 340 nm, and the second wavelength may be 380 nm to 780 nm.

The aerosol generating device according to an embodiment may further include a filter configured to filter out the light having the first wavelength among light received by the light receiving unit.

An aerosol generating device according to another embodiment may include a cavity into which an aerosol generating article is inserted which includes an identification material that emits light having a second wavelength different from a first wavelength when being excited by light having the first wavelength; a heater configured to heat the aerosol generating article inserted in the cavity; a sensor module including a light emitting unit configured to emit the light having the first wavelength toward the identification material of the aerosol generating article inserted in the cavity, and a light receiving unit arranged at a preset angle with the light emitting unit and configured to receive the light having the second wavelength emitted from the identification material; and a controller configured to determine information of the aerosol generating article based on a sensing value sensed through the light receiving unit after the light emitting unit stops emitting light, and to control power supply to the heater based on the determined information of the aerosol generating article.

### Mode for the Invention

Regarding the terms in the various embodiments, the general terms which are currently and widely used are selected in consideration of functions of structural elements in the various embodiments of the present disclosure. However, meanings of the terms can be changed according to intention, a judicial precedence, the appearance of a new technology, and the like. In addition, in certain cases, terms which can be arbitrarily selected by the applicant in particular cases. In such a case, the meaning of the terms will be described in detail at the corresponding portion in the description of the present disclosure. Therefore, the terms used in the various embodiments of the present disclosure should be defined based on the meanings of the terms and the descriptions provided herein.

In addition, unless explicitly described to the contrary, the word "comprise" and variations such as "comprises" or "comprising" will be understood to imply the inclusion of stated elements but not the exclusion of any other elements. In addition, the terms "-er", "-or", and "module" described in the specification mean units for processing at least one function and operation and can be implemented by hardware components or software components and combinations thereof.

As used herein, when an expression such as "at least any one" precedes arranged elements, it modifies all elements rather than each arranged element. For example, the expression "at least any one of a, b, and c" should be construed to include a, b, c, or a and b, a and c, b and c, or a, b, and c.

In an embodiment, an aerosol generating device may be a device that generates aerosols by electrically heating a cigarette accommodated in an interior space thereof.

The aerosol generating device may include a heater. In an embodiment, the heater may be an electro-resistive heater. For example, the heater may include an electrically conductive track, and the heater may be heated when currents flow through the electrically conductive track.

The heater may include a tube-shaped heating element, a plate-shaped heating element, a needle-shaped heating element, or a rod-shaped heating element, and may heat the inside or outside of a cigarette according to the shape of a heating element.

A cigarette may include a tobacco rod and a filter rod. The tobacco rod may be formed of sheets, strands, and tiny bits cut from a tobacco sheet. Also, the tobacco rod may be surrounded by a heat conductive material. For example, the heat conductive material may be, but is not limited to, a metal foil such as aluminum foil.

The filter rod may include a cellulose acetate filter. The filter rod may include at least one segment. For example, the filter rod may include a first segment configured to cool aerosols, and a second segment configured to filter a certain component in aerosols.

In another embodiment, the aerosol generating device may be a device that generates aerosols by using a cartridge containing an aerosol generating material.

The aerosol generating device may include a cartridge that contains an aerosol generating material, and a main body that supports the cartridge. The cartridge may be detachably coupled to the main body, but is not limited thereto. The cartridge may be integrally formed or assembled with the main body, and may also be fixed to the main body so as not to be detached from the main body by a user. The cartridge may be mounted on the main body while accommodating an aerosol generating material therein. However, the present disclosure is not limited thereto. An aerosol generating material may also be injected into the cartridge while the cartridge is coupled to the main body.

The cartridge may contain an aerosol generating material in any one of various states, such as a liquid state, a solid state, a gaseous state, a gel state, or the like. The aerosol generating material may include a liquid composition. For example, the liquid composition may be a liquid including a tobacco-containing material having a volatile tobacco flavor component, or a liquid including a non-tobacco material.

The cartridge may be operated by an electrical signal or a wireless signal transmitted from the main body to perform a function of generating aerosols by converting the phase of an aerosol generating material inside the cartridge into a gaseous phase. The aerosols may refer to a gas in which vaporized particles generated from an aerosol generating material are mixed with air.

In another embodiment, the aerosol generating device may generate aerosols by heating a liquid composition, and generated aerosols may be delivered to a user through a cigarette. That is, the aerosols generated from the liquid composition may move along an airflow passage of the aerosol generating device, and the airflow passage may be configured to allow aerosols to be delivered to a user by passing through a cigarette.

In another embodiment, the aerosol generating device may be a device that generates aerosols from an aerosol generating material by using an ultrasonic vibration method. At this time, the ultrasonic vibration method may mean a method of generating aerosols by converting an aerosol generating material into aerosols with ultrasonic vibration generated by a vibrator.

The aerosol generating device may include a vibrator, and generate a short-period vibration through the vibrator to convert an aerosol generating material into aerosols. The vibration generated by the vibrator may be ultrasonic vibration, and the frequency band of the ultrasonic vibration may be in a frequency band of about 100 kHz to about 3.5 MHz, but is not limited thereto.

The aerosol generating device may further include a wick that absorbs an aerosol generating material. For example, the wick may be arranged to surround at least one area of the vibrator, or may be arranged to contact at least one area of the vibrator.

As a voltage (for example, an alternating voltage) is applied to the vibrator, heat and/or ultrasonic vibrations may be generated from the vibrator, and the heat and/or ultrasonic vibrations generated from the vibrator may be transmitted to the aerosol generating material absorbed in the wick. The aerosol generating material absorbed in the wick may be converted into a gaseous phase by heat and/or ultrasonic vibrations transmitted from the vibrator, and as a result, aerosols may be generated.

For example, the viscosity of the aerosol generating material absorbed in the wick may be lowered by the heat generated by the vibrator, and as the aerosol generating material having a lowered viscosity is granulated by the ultrasonic vibrations generated from the vibrator, aerosols may be generated, but is not limited thereto.

In another embodiment, the aerosol generating device is a device that generates aerosols by heating an aerosol generating article accommodated in the aerosol generating device in an induction heating method.

The aerosol generating device may include a susceptor and a coil. In an embodiment, the coil may apply a magnetic field to the susceptor. As power is supplied to the coil from the aerosol generating device, a magnetic field may be formed inside the coil. In an embodiment, the suspector may be a magnetic body that generates heat by an external magnetic field. As the suspector is positioned inside the coil and a magnetic field is applied to the suspector, the suspector generates heat to heat an aerosol generating article. In addition, optionally, the suspector may be positioned within the aerosol generating article.

In another embodiment, the aerosol generating device may further include a cradle.

The aerosol generating device may configure a system together with a separate cradle. For example, the cradle may charge a battery of the aerosol generating device. Alternatively, the heater may be heated when the cradle and the aerosol generating device are coupled to each other.

Hereinafter, the present disclosure will now be described more fully with reference to the accompanying drawings, in which exemplary embodiments of the present disclosure are shown such that one of ordinary skill in the art may easily work the present disclosure. The present disclosure may be implemented in a form that can be implemented in the aerosol generating devices of the various embodiments described above or may be implemented in various different forms, and is not limited to the embodiments described herein.

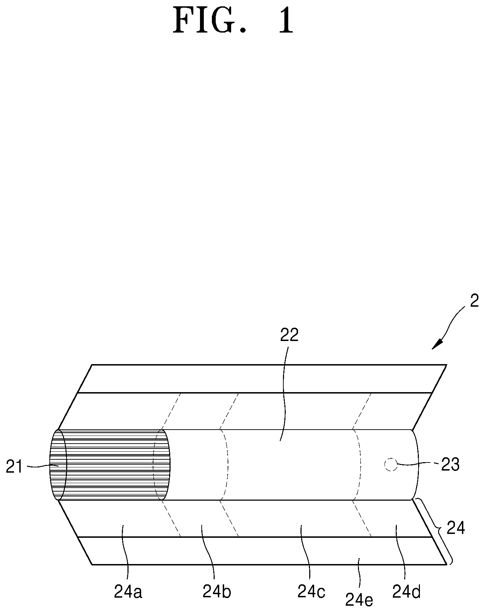

Hereinafter, the examples of the aerosol generating article 2 will be described with reference to FIGS. 1 to 3.

FIGS. 1 to 3 are views illustrating examples of aerosol generating articles.

FIG. 1 illustrates that the filter rod 22 includes a single segment, but is limited thereto. In other words, the filter rod 22 may include a plurality of segments. For example, the filter rod 22 may include a first segment configured to cool an aerosol and a second segment configured to filter a certain component included in the aerosol. Also, as necessary, the filter rod 22 may further include at least one segment configured to perform other functions.

The aerosol generating article 2 may be packaged by at least one wrapper 24. The wrapper 24 may have at least one hole through which external air may be introduced or internal air may be discharged. For example, the aerosol generating article 2 may be packaged by one wrapper 24. As another example, the aerosol generating article 2 may be doubly packaged by two or more wrappers 24. For example, the tobacco rod 21 may be packaged by a first wrapper 24a, and the filter rod 22 may be packaged by wrappers 24b, 24c, 24d. Also, the entire aerosol generating article 2 may be re-packaged by another single wrapper 24e. When the filter rod 22 includes a plurality of segments, each segment may be packaged by wrappers 24b, 24c, 24d.

The tobacco rod 21 may include an aerosol generating material. For example, the aerosol generating material may include at least one of glycerin, propylene glycol, ethylene glycol, dipropylene glycol, diethylene glycol, triethylene glycol, tetraethylene glycol, and oleyl alcohol, but it is not limited thereto. Also, the tobacco rod 21 may include other additives, such as flavors, a wetting agent, and/or organic acid. Also, the tobacco rod 21 may include a flavored liquid, such as menthol or a moisturizer, which is injected to the tobacco rod 21.

The tobacco rod 21 may be manufactured in various forms. For example, the tobacco rod 21 may be formed as a sheet or a strand. Also, the tobacco rod 21 may be formed as a pipe tobacco, which is formed of tiny bits cut from a tobacco sheet. Also, the tobacco rod 21 may be surrounded by a heat conductive material. For example, the heat conductive material may be, but is not limited to, a metal foil such as aluminum foil. For example, the heat conductive material surrounding the tobacco rod 21 may uniformly distribute heat transmitted to the tobacco rod 21, and thus, the heat conductivity applied to the tobacco rod may be increased and taste of the tobacco may be improved. Also, the heat conductive material surrounding the tobacco rod 21 may function as a susceptor heated by the induction heater. Here, although not illustrated in the drawings, the tobacco rod 21 may further include an additional susceptor, in addition to the heat conductive material surrounding the tobacco rod 21.

The filter rod 22 may include a cellulose acetate filter. Shapes of the filter rod 22 are not limited. For example, the filter rod 22 may include a cylinder-type rod or a tube-type rod having a hollow inside. Also, the filter rod 22 may include a recess-type rod. When the filter rod 22 includes a plurality of segments, at least one of the plurality of segments may have a different shape.

The filter rod 22 may be formed to generate flavors. For example, a flavoring liquid may be injected onto the filter rod 22, or an additional fiber coated with a flavoring liquid may be inserted into the filter rod 22.

Also, the filter rod 22 may include at least one capsule 23. Here, the capsule 23 may generate a flavor or an aerosol. For example, the capsule 23 may have a configuration in which a liquid containing a flavoring material is wrapped with a film. For example, the capsule 23 may have a spherical or cylindrical shape, but is not limited thereto.

When the filter rod 22 includes a segment configured to cool the aerosol, the cooling segment may include a polymer material or a biodegradable polymer material. For example, the cooling segment may include pure polylactic acid alone, but the material for forming the cooling segment is not limited thereto. In some embodiments, the cooling segment may include a cellulose acetate filter having a plurality of holes. However, the cooling segment is not limited to the above-described example and is not limited as long as the cooling segment cools the aerosol.

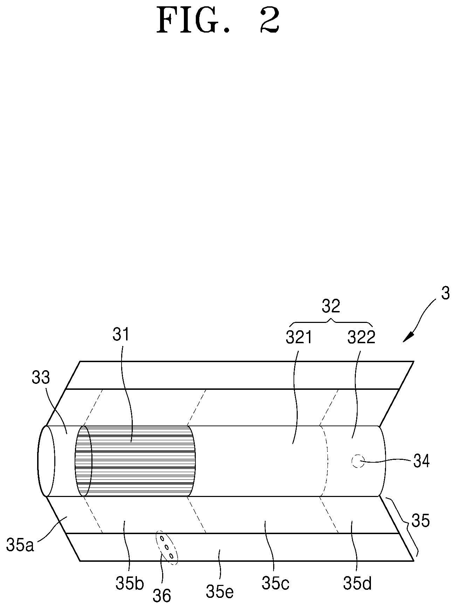

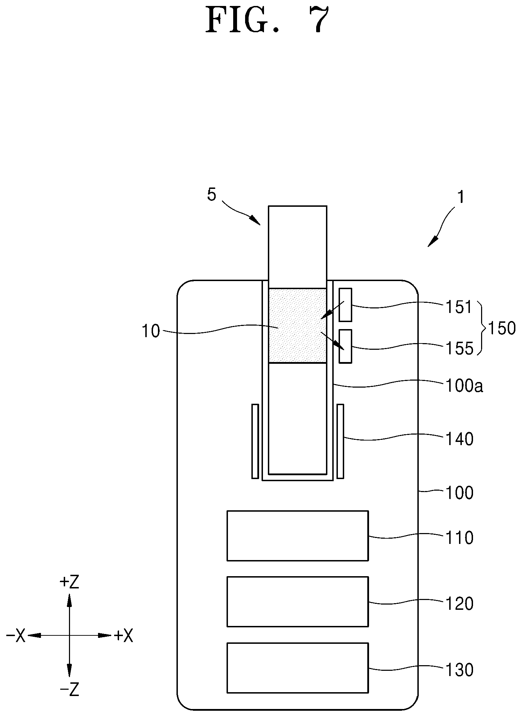

Referring to FIG. 2, the aerosol generating article 3 may further include a front-end plug 33. The front-end plug 33 may be located on one side of the tobacco rod 31 which is opposite to the filter rod 32. The front-end plug 33 may prevent the tobacco rod 31 from being detached outwards and prevent the liquefied aerosol from flowing from the tobacco rod 31 into the aerosol generating device 1 (See FIG. 7), during smoking.

The filter rod 32 may include a first segment 321 and a second segment 322. Here, the first segment 321 may correspond to the first segment of the filter rod 22 of FIG. 1, and the second segment 322 may correspond to the third segment of the filter rod 22 of FIG. 1.

A diameter and a total length of the aerosol generating article 3 may correspond to a diameter and a total length of the aerosol generating article 2 of FIG. 1. For example, the length of the front-end plug 33 is about 7 mm, the length of the tobacco rod 31 is about 15 mm, the length of the first segment 321 is about 12 mm, and the length of the second segment 322 is about 14 mm, but it is not limited thereto.

The aerosol generating article 3 may be packaged using at least one wrapper 35. The wrapper 35 may have at least one hole through which external air may be introduced or internal air may be discharged. For example, the front end plug 33 may be packaged by a first wrapper 35a, the tobacco rod 31 may be packaged by a second wrapper 35b, the first segment 321 may be packaged by a third wrapper 35c, and the second segment 322 may be packaged by a fourth wrapper 35d.

Further, the entire aerosol generating article 3 may be repackaged by a fifth wrapper 35e. In addition, at least one perforation 36 may be formed in the fifth wrapper 35e. For example, the perforation 36 may be formed in a region surrounding the tobacco rod 31, but is not limited thereto. The perforation 36 may serve to transfer heat generated by the heater 140 illustrated in FIG. 7 to the inside of the tobacco rod 31.

In addition, at least one capsule 34 may be included in the second segment 322. Here, the capsule 34 may generate a flavor or an aerosol. For example, the capsule 34 may have a configuration in which a liquid containing a flavoring material is wrapped with a film. For example, the capsule 34 may have a spherical or cylindrical shape, but is not limited thereto.

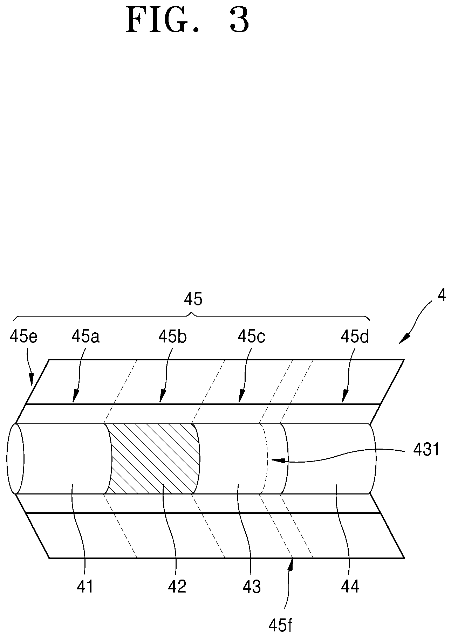

FIG. 3 is a view illustrating an example of an aerosol generating article.

Referring to FIG. 3, an aerosol generating article 4 may include a first aerosol generating rod 41, a second aerosol generating rod 42, a cooling rod 43, and a filter rod 44. Also, the aerosol generating article 4 may be wrapped by at least one wrapper 45.

The first aerosol generating rod 41, the second aerosol generating rod 42, the cooling rod 43, and the filter rod 44 may be arranged in order in a longitudinal direction of the aerosol generating article 4. Here, the longitudinal direction of the aerosol generating article 4 may be a direction in which a length of the aerosol generating article 4 extends. For example, the longitudinal direction of the aerosol generating article 4 may be a direction from the first aerosol generating rod 41 toward the filter rod 44.

An aerosol generated from the first aerosol generating rod 41 and the second aerosol generating rod 42 may sequentially pass through the first aerosol generating rod 41, the second aerosol generating rod 42, the cooling rod 43, and the filter rod 44 to form an airflow, and accordingly, a smoker may inhale the aerosol from the filter rod 44.

The first aerosol generating rod 41 may be heated to generate an aerosol. The first aerosol generating rod 41 may include an aerosol generating material. Also, the first aerosol generating rod 41 may include other additives, such as a humectant and/or an organic acid, and may include a flavoring liquid, such as menthol. For example, the aerosol generating material may include at least one of glycerin, propylene glycol, ethylene glycol, dipropylene glycol, diethylene glycol, triethylene glycol, tetraethylene glycol, and oleyl alcohol.

The first aerosol generating rod 41 may include an aerosol generating substrate impregnated with an aerosol generating material. The aerosol generating substrate may include a crimped sheet, and the aerosol generating material may be included in the first aerosol generating rod 41 in a state of being impregnated in the crimped sheet. Also, other additives, such as a flavoring agent, a humectant, and/or organic acid and a flavoring liquid may be included in the first aerosol generating rod 41 in a state of being absorbed in the crimped sheet.

The aerosol generating substrate in a wound state may be inside the first aerosol generating rod 41. The wound aerosol generating substrate may be wound around an axis extending in a length direction of the aerosol generating article 4 but is not limited thereto.

The crimped sheet may be a sheet composed of a polymer material. For example, the polymer material may include at least one of paper, cellulose acetate, lyocell, and polylactic acid. For example, the crimped sheet may be a paper sheet that does not generate an off-flavor due to heat even when heated to a high temperature.

The first aerosol generating rod 41 may extend from about 7 mm to about 20 mm from the end of the aerosol generating article 4, and the second aerosol generating rod 42 may extend from about 7 mm to about 20 mm from the end of the first aerosol generating rod 41. However, the present disclosure is not limited to the numerical range, and a length by which each of the first aerosol generating rod 41 and the second aerosol generating rod 42 extends may be appropriately adjusted within a range that may be easily changed by a person skilled in the art.

The second aerosol generating rod 42 may be heated to generate an aerosol including nicotine. For example, the second aerosol generating rod 42 may include tobacco material. The tobacco material may have a form of a tobacco strand, a tobacco particle, a tobacco sheet, tobacco beads, tobacco granule, tobacco powder, or a tobacco extract but is not limited thereto.

For example, the second aerosol generating rod 42 may include a plurality of tobacco strands, and the plurality of tobacco strands may include a plate-shaped cut leaflets. The plate-shaped cut leaflets may be manufactured by shredding a plate-shaped leaf sheet. The plate-shaped cut leaflets may be manufactured by a following process. A tobacco raw material is crushed to manufacture a slurry mixed with an aerosol generating material (for example, glycerin, propylene glycol, and so on), a flavoring liquid, a binder (for example, guar gum, xanthan gum, carboxymethyl cellulose, or so on), water, and so on. Natural pulp or cellulose may be added to the slurry, and one or more binders may be mixed and used. The slurry may be cast to form a sheet, and then dried to manufacture a plate-shaped leaf sheet. The manufactured plate-shaped leaf sheet may be cut or shredded to manufacture a plate-shaped cut leaflets. The tobacco raw material may include a tobacco leaf, a tobacco stem, and/or tobacco powder generated during tobacco processing. The plate-shaped leaf sheet may also include another additive, such as wood cellulose fibers.

Also, the second aerosol generating rod 42 may include tobacco cut leaflets manufactured by mixing and processing various types of tobacco leaves, and then finely cutting the tobacco leaves. Also, the second aerosol generating rod 42 may include a mixture of a plate-shaped cut leaflets and tobacco cut leaflets.

In another example, the second aerosol generating rod 42 may include a plurality of tobacco granules. The tobacco granules may be particles, each having a diameter of about 100 µm to about 2,000 µm. The tobacco granules may be manufactured by extruding a mixture of crushed tobacco leaf, a pH adjusting agent, and a solvent.

The plurality of tobacco granules may be arranged between a filter material. The filter material may include, for example, a bundle of fibers including strands of cellulose acetate fibers. The plurality of tobacco granules may be arranged in a uniformly dispersed form among the plurality of cellulose fibers. In another example, the filter material may include a crimped paper sheet. The crimped paper sheet in a wound state may be arranged inside the second aerosol generating rod 42. The crimped paper sheet may be wound about an axis extending in a longitudinal direction of the aerosol generating article 4. The plurality of tobacco granules may be arranged in a dispersed manner inside the wound paper sheet.

Also, the second aerosol generating rod 42 may include an aerosol generating substrate impregnated with a liquid aerosol generating composition. The aerosol generating substrate may include a crimped sheet, and the liquid aerosol generating composition in a state in which the crimped sheet is impregnated may be included in the second aerosol generating rod 42. The above description given on the aerosol generating substrate included in the first aerosol generating rod 41 may be equally applied to an aerosol generating substrate included in the second aerosol generating rod 42.

The liquid aerosol generating composition may include nicotine. The nicotine may include freebase nicotine and nicotine salt. The freebase nicotine may mean neutral nicotine to which no protons are added. For example, when a strong base, such as ammonia, is added to a positively charged nicotine salt, the strong base may be converted into a cation, and the nicotine salt may become freebase nicotine in a neutral state.

Also, the liquid aerosol generating composition may include an aerosol generating material. The above description given on the aerosol generating substrate included in the first aerosol generating rod 41 may be equally applied to the aerosol generating material.

The liquid aerosol generating composition may be impregnated in an amount of about 0.05 g to about 1.0 g per 1 g of the aerosol generating substrate. For example, the liquid aerosol generating composition may be impregnated in an amount of about 0.1 g to about 0.8 g per 1 g of the aerosol generating substrate.

The cooling rod 43 may cool the aerosol generated from the first aerosol generating rod 41 and the second aerosol generating rod 42. The cooling rod 43 may be made of a biodegradable polymer material and may have a cooling function. For example, the cooling rod 43 may be made of a polylactic acid (PLA) fiber but is not limited thereto.

Alternatively, the cooling rod 43 may be made of a cellulose acetate filter. However, the cooling rod 43 is not limited to the examples described above, and a material that performs a function of cooling an aerosol may be applied thereto without limitation. For example, the cooling rod 43 may be a tube filter having a hollow or a paper-formed pipe.

At least one hole 431 may be formed in an outer surface of the cooling rod 43. At least one hole 431 may be formed in a circumferential direction of the cooling rod 43 and formed in one or more rows. Through at least one hole 431, external air may be introduced inside the cooling rod 43. The external air introduced inside the cooling rod 43 may be mixed with a high-temperature aerosol generated from the first aerosol generating rod 41 and the second aerosol generating rod 42 to cool the aerosol.

The filter rod 44 may filter out some components included in an aerosol passing through the filter rod 44. The filter rod 44 may include a filter material. For example, the filter rod 44 may be a cellulose acetate filter. The filter rod 44 may be manufactured by adding a plasticizer (for example, triacetin) to cellulose acetate tow.

There is no limitation on a shape of the filter rod 44. For example, the filter rod 44 may be a cylindrical rod or a tube-type rod having a hollow space therein. Alternatively, the filter rod 44 may be a recessed rod having a hollow space with an open end. When the filter rod 44 is composed of a plurality of segments, at least one of the plurality of segments may have a different shape.

The filter rod 44 may also generate a flavor. For example, the filter rod 44 may include a flavoring liquid, and a separate fiber including the flavoring liquid may be inserted into the filter rod 44.

Also, the filter rod 44 may include at least one capsule. Here, the capsule may generate a flavor or an aerosol. For example, the capsule may have a structure in which a liquid including a fragrance is wrapped by a film. The capsule may have a spherical or cylindrical shape but is not limited thereto.

The aerosol generating article 4 may include the wrapper 45 surrounding at least part of the first aerosol generating rod 41 to the filter rod 44. Also, the aerosol generating article 4 may include the wrapper 45 surrounding all of the first aerosol generating rod 41 to the filter rod 44. The wrapper 45 may be at the outermost portion of the aerosol generating article 4, and the wrapper 45 may be a single wrapper but may be a combination of a plurality of wrappers.

The aerosol generating article 4 may be wrapped overlappingly by two or more wrappers. For example, the first aerosol generating rod 41 may be wrapped by a first wrapper 45a, the second aerosol generating rod 42 may be wrapped by a second wrapper 45b, the cooling rod 43 may be wrapped by a third wrapper 45c, and the filter rod 44 may be wrapped by a fourth wrapper 45d. In addition, the aerosol generating article 4 may be re-wrapped entirely by a fifth wrapper 45e.

The first wrapper 45a may surround the first aerosol generating rod 41, and the second wrapper 45b may surround the second aerosol generating rod 42. The first wrapper 45a and the second wrapper 45b may each be a combination of paper and metal foil, such as aluminum foil. For example, the first wrapper 45a and the second wrapper 45b may each be a stacked sheet in which paper and metal foil are stacked. The first wrapper 45a and the second wrapper 45b may be a stacked sheet in which paper is arranged on one side of metal foil, or may be a stacked sheet in which paper is arranged on both sides of metal foil.

The paper of the first wrapper 45a may include an oil-resistant material. For example, the paper of the first wrapper 45a may include polyvinyl alcohol (PVOH) or silicone. A surface of the paper of the first wrapper 45a may be coated with polyvinyl alcohol or silicone.

The third wrapper 45c may surround the cooling rod 43. The third wrapper 45c may include a paper roll. The paper roll of the third wrapper 45c may be a porous roll or a non-porous roll. The third wrapper 45c may have at least one perforation 45f. For example, the third wrapper 45c may wrap the cooling rod 43 having at least one hole 431 formed therein, and at least one perforation 45f formed in the third wrapper 45c may be formed at a position corresponding to at least one hole 431 formed in the cooling rod 43.

The fourth wrapper 45d may surround the filter rod 44. The fourth wrapper 45d may include hard paper having a greater thickness and basis weight than a general paper roll. For example, the hard paper may have a thickness of about 70 um to about 150 um, and a basis weight of about 50 g/m² to about 100 g/m². Also, the hard paper may include an oil-resistant material. For example, surface treatment may be performed on the hard paper by using an oil-resistant material, such as polyvinyl alcohol or silicone.

The fifth wrapper 45e may collectively surround the first aerosol generating rod 41 wrapped by the first wrapper 45a, the second aerosol generating rod 42 wrapped by the second wrapper 45b, the cooling rod 43 wrapped by the third wrapper 45c, and the filter rod 44 wrapped by the fourth wrapper 45d. The fifth wrapper 45e may prevent the outside of the aerosol generating article 4 from being contaminated by an aerosol generated from the aerosol generating article 4. Liquid materials may be generated inside the aerosol generating article 4 by a user's puff. For example, an aerosol generated from the aerosol generating article 4 may be cooled by external air, and accordingly, the liquid materials (for example, moisture and so on) may be generated. As the fifth wrapper 45e wraps the outside of the aerosol generating article 4, the generated liquid materials may be prevented from leaking out of the aerosol generating article 4.

Embodiments of the present disclosure relate to an aerosol generating article and an aerosol generating device that may distinguish between aerosol generating articles of different types and identify an aerosol generating article that is suitable for use with the aerosol generating device and an aerosol generating article that is unsuitable for use with the aerosol generating device.

To this end, an aerosol generating article according to an embodiment may include an identification material. The identification material may be arranged in a component of an aerosol generating article. For example, the identification material may be arranged on a wrapper, a filter rod, a cigarette rod, a front-end plug, and/or an aerosol generating rod. The following embodiments are described based on an example in which an identification material is arranged in a wrapper, but the component in which the identification material may be arranged as described above may be changed.

The identification material may have physical, chemical, or optical properties. The identification material may have a property of changing the properties of a wavelength of the received light and emitting the light. Specifically, the identification material may be excited by absorbing light having a preset wavelength range. In the present disclosure, 'exciting of a material' may mean that a state of the material changes from a ground state to an excited state. Thereafter, in a process in which a state of the identification material changes from the excited state to the ground state, light having a preset wavelength range may be emitted from the identification material. For example, the identification material may be a material included in a lanthanide series and may include a material composed of at least one element among atomic numbers 57 to 71.

In an embodiment, the identification material may include taggant. The taggant may have an identifiable spectroscopic signature when absorbing and/or emitting light. The taggant may absorb a wavelength in a certain range when light is irradiated by a light emitting unit of an aerosol generating device. The taggant may be excited by absorbing light and may emit at least one wavelength of light that is shifted from a wavelength of the excited light. In this case, the light emitted from the taggant may be in the form of photoluminescence, phosphorescence, or fluorescence.

The light having a wavelength in a certain range emitted from the taggant may be received by a light receiving unit of the aerosol generating device. Based on a wavelength of the light received by the light receiving unit, the aerosol generating device may identify the type of the aerosol generating article.

The wavelength in a certain range which is emitted from the taggant may be determined by the amount, concentration, type, and/or composition ratio of a taggant material.

The taggant may include an organic material. In an embodiment, the taggant may include one or more organic materials selected from a group consisting of a quinazolinone-based compound, a thiophene-based compound, a sulfobenzoic acid-based compound, and a naphthyridine-based compound.

The quinazolinone-based compound may include a quinazolinone derivative or a salt thereof. For example, the quinazolinone-based compound may include 4(3H)-quinazolinone, 6-chloro-2-(5-chloro-2-hydroxyphenyl); 4(3H)-quinazolinone, 6-chloro-2-(4-chloro-2-hydroxyphenyl); 4(3H)-quinazolinone, 7-chloro-2-(5-chloro-2-hydroxyphenyl); and 2-(5-chloro-2-hydroxy-phenyl)-3H-quinazolin-4-on;

The thiophene-based compound may include a thiophene derivative or a salt thereof. For example, the thiophene-based compound may include 2,5-bis(5-tert-butyl-2-benzoxazolyl)thiophene.

The sulfobenzoic acid-based compound may include a sulfobenzoic acid derivative or a salt thereof. For example, the sulfobenzoic acid-based compound may include benzoic acid, 2-[(2-hydroxy-5-sulfobenzoyl)amino]-, and monosodium salt.

The naphthyridine-based compound may include a naphthyridine derivative or a salt thereof. For example, the naphthyridine-based compound may include a 1,8-naphthyridine derivative; and a 1,5-naphthyridine derivative.

The taggant may also include an inorganic material. In an embodiment, the taggant may include one or more inorganic materials selected from a group consisting of a rare earth element, actinide metal oxide, and ceramic. For example, the rare earth element may include a lanthanide series selected from a group consisting of lanthanum, cerium, praseodymium, neodymium, promethium, samarium, europium, gadolinium, terbium, dysprosium, holmium, erbium, thulium, ytterbium, nitride, and lutetium.

Also, the taggant may be a material in which an organic material is mixed with an inorganic material. In an embodiment, the taggant may include a material in which an organic material and an inorganic material are covalently bonded, coordinately bonded, or ionically bonded, or a covalently bonded material. For example, the taggant may be a material in which inorganic and organic materials of the lanthanide series are coordinately bonded. For example, the taggant may include europium, tris[7-chloro-1-cyclopropyl-6-fluoro-1,4-dihydro-4-(oxo-kappa0)-1,8-naphthyridine.

In the identification material, a difference between the longest absorption wavelength (Absₘₐₓ) of light that is irradiated on the identification material and a dominant wavelength (DWL) of light that is emitted may be about 20 % or more based on the longest absorption wavelength. When the difference between the longest absorption wavelength and the dominant wavelength of the identification material has the numerical range described above, significant identification accuracy may be achieved. When the difference between the longest absorption wavelength and the dominant wavelength of the identification material is less than about 20 %, the light reflected by a component other than the identification material may act as noise and reduce the identification accuracy. For example, in the identification material, the difference between the longest absorption wavelength of the light that is irradiated on the identification material and the dominant wavelength of the light that is emitted may be about 25 % to about 70 % based on the longest absorption wavelength. Also, in the identification material, a difference between the longest absorption wavelength of the light that is irradiated on the identification material and the dominant wavelength of the light that is emitted may be about 30 % to about 65 % based on the longest absorption wavelength.

### Experimental Example: Light emission experiment of Identification Material Including Taggant

After light was irradiated on an identification material including the taggant, a wavelength of the light that was emitted was checked. A wavelength of the irradiated light was 365 nm, and a dominant wavelength (DWL) of the emitted light was measured, and the results are shown in Table 1 below.

Example 1 shown in Table 1 is 4(3H)-quinazolinone,6-chloro-2-(5-chloro-2-hydroxyphenyl) that is a quinazolinone-based compound, Example 2 is 2-(5-chloro-2-hydroxy-phenyl)-3H-quinazolin-4-on that is a quinazolinone-based compound, Example 3 is a mixture (85-90:10-15 weight ratio) of 2,5-bis(5-tert-butyl-2-benzoxazolyl)thiophene that is a thiophene-based compound, and benzoic acid, 2-[(2-hydroxy-5-sulfobenzoyl)amino]-, and monosodium salt that are sulfobenzoic acid-based compounds, and Example 4 is a mixture of europium, Tris[7-chloro-1-cyclopropyl-6-fluoro-1, 4-dihydro-4-(oxo-kappaO)-1, and 8-naphthyridine.

**[Table 1]**

| Classification | Longest absorption wavelength (nm, Absₘₐₓ) | CIE chromaticity coordinates | Dominant wavelength (nm, DWL) |
|---|---|---|---|
| Example 1 | 396 | X=0.4300±0.05 | 546.4±5 |
| | | y=0.5347±0.05 | |
| Example 2 | 382 | X=0.3232±0.05 | 518.8±5 |
| | | Y=0.5943±0.05 | |
| Example 3 | 364 | X=0.1590±0.05 | 471.3±5 |
| | | Y=0.1825±0.05 | |
| Example 4 | 382 | X=0.6633±0.02 | 622±5 |
| | | Y=0.3155±0.02 | |

As shown in Table 1, it may be seen in Example 1 to Example 4 that light is absorbed and excited, and light having a different wavelength from a wavelength of the absorbed light is emitted. Also, it may be seen in Example 1 to Example 4 that a difference between the longest absorption wavelength (Absₘₐₓ) of the irradiated light and a dominant wavelength of the emitted light is about 20 % or more based on the longest absorption wavelength (Example 1: about 38 %, Example 2: about 36 %, Example 3: about 29 %, and Example 4: about 63 %).

A component (for example, a wrapper) of an aerosol generating article may be manufactured by adding a taggant to a paper slurry or paste before the component is dried, or by painting the component with the taggant or spraying the taggant onto the component. The taggant may be included in a component of an aerosol generating article in units of nanogram.

In an embodiment, an aerosol generating article 5 may include a taggant of a preset first content or more. Accordingly, the aerosol generating article 5 may include a sufficient amount of taggant to emit light in a certain wavelength range. For example, when the taggant is sprayed onto a surface, the sprayed solution may include the taggant having a concentration between about 1 ppm and about 1000 ppm. In another example, the taggant having a concentration of 6 mg/mm² or greater may also be included on a wrapper.

In an embodiment, an identification material solution may be applied to a surface of a component of the aerosol generating article. Here, the identification material solution may mean a liquid composition including an identification material. For example, the identification material solution may be used to coat a surface of the wrapper of the aerosol generating article. In another example, the identification material solution may be printed on the surface of the wrapper of the aerosol generating article.

For example, the identification material solution may be manufactured according to a manufacturing method including a step of preparing an identification material, an operation of mixing the identification material with an OP varnish to prepare a primary solution, and a step of mixing the primary solution with a diluent to manufacture the identification material solution. The manufactured identification material may be applied to a component of an aerosol generating article.

The step of preparing the identification material may be a step of preprocessing the identification material to have a shape or physical properties suitable for being applied to the component of the aerosol generating article. For example, the identification material included in the identification material solution may include a plurality of particles each having a diameter of about 0.1 µm to about 10 µm. The identification material may be milled to have the diameter in the aforementioned range. When an identification material has the diameter in the aforementioned range, the identification material may be uniformly dispersed and arranged on a surface of an aerosol generating article to which an identification material solution is applied, and printability may be improved. When an identification material has a diameter less than about 0.1 µm, it may be difficult to detect the light emitted from the identification material. When an identification material has a diameter greater than about 10 µm, it may be difficult to uniformly distribute the identification material, and printability may be degraded. An identification material may have a diameter of, for example, about 0.5 µm to about 5 µm, or about 0.7 µm to about 3 µm.

An identification material solution may include an OP varnish (overprint varnish). In the present disclosure, the OP varnish may mean liquid coating that solidifies upon curing. For example, the OP varnish may include one or more materials selected from a group consisting of nitrocellulose, polyamide, propyl acetate, isopropyl alcohol, ethyl acetate, and 1,2-cyclohexane dicarboxylic acid diisononyl ester (DINCH).

The identification material solution may include a diluent. The diluent may be used in gravure printing or offset printing known in the art. For example, the diluent may include one or more materials selected from a group consisting of water, an alcohol having 1 to 4 carbon atoms, a vegetable oil, a fatty amine, propyl acetate, isopropyl alcohol, and ethyl acetate. The vegetable oil may include one or more oils selected from a group consisting of linseed oil, soybean oil, castor oil, corn oil, tung oil, otticita oil, and coconut oil. The fatty amine may be one or more materials selected from a group consisting of oleyl amine, stearyl amine, and oleyl diamine.

For example, the identification material solution may include about 0.01 wt% to about 20 wt% of an identification material, about 10 wt% to about 40 wt% of an OP varnish, and about 50 wt% to about 85 wt% of a diluent, but is not limited thereto. The identification material solution may include about 0.05 wt% to about 10 wt% of an identification material, about 15 wt% to about 30 wt% of an OP varnish, and about 60 wt% to about 80 wt% of a diluent.

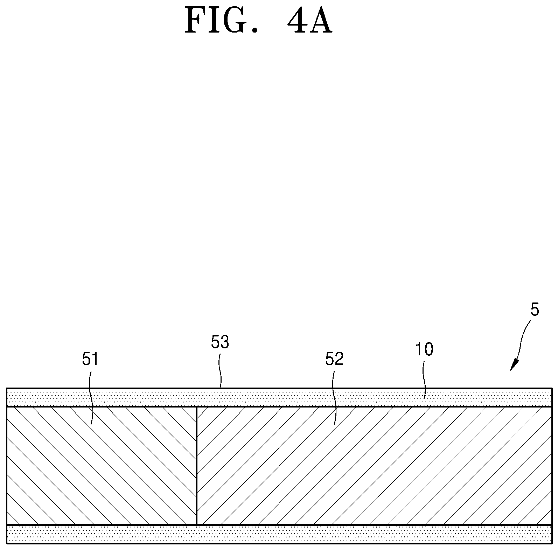

Hereinafter, various embodiments regarding an arrangement position/method of an identification material are sequentially described with reference to FIGS. 4A to 5D.

FIGS. 4A to 4D are cross-sectional views of the aerosol generating article 5 illustrating examples of an arrangement position/method of an identification material.

Referring to FIGS. 4A to 4D, the aerosol generating article 5 may include an identification material 10, a tobacco rod 51, a filter rod 52, and a wrapper 53. At least one of components of the aerosol generating article 5 illustrated in FIGS. 4A to 4D is identical or similar to at least one of the components of the aerosol generating article described above, and accordingly, redundant descriptions thereof are omitted below. Also, it is natural that some components and structures may be replaced, added, or omitted within a range easily understandable to those skilled in the art with reference to the drawings and descriptions below.

Referring to FIG. 4A, the identification material (taggant) 10 may be uniformly arranged on the entire region of the wrapper 53 in a length direction of the wrapper 53. Accordingly, a sensor module of an aerosol generating device may detect the entire region of the wrapper 53 where the identification material 10 is arranged, and accordingly, the degree of freedom for the arrangement structure of the sensor module may be improved. Accordingly, the ease of a process of manufacturing the aerosol generating device may be improved.

Also, because the identification material 10 is exposed to an outer surface of the wrapper 53, the sensor module of the aerosol generating device may easily recognize the identification material 10. That is, the sensitivity of a sensor module may be improved.

The identification material 10 illustrated in FIG. 4A may be uniformly arranged on the entire region of the wrapper 53 by being added to a paper slurry or paste during a process of manufacturing the wrapper 53.

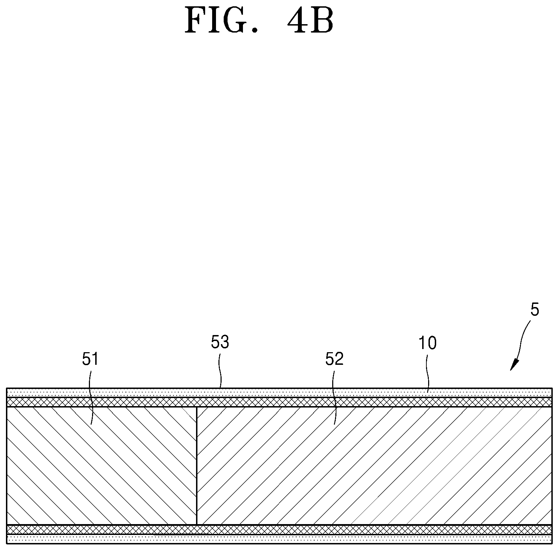

Referring to FIG. 4B, the identification material 10 may be arranged on an outer surface of the wrapper 53 in a longitudinal direction of the wrapper 53. Accordingly, a sensor module of an aerosol generating device may detect the entire region in the longitudinal direction of the wrapper 53 where the identification material 10 is arranged, and accordingly, the degree of freedom for an arrangement structure of the sensor module may be improved.

Also, because the identification material 10 is exposed to the outer surface of the wrapper 53, a sensor module of an aerosol generating device may easily recognize the identification material 10. That is, the sensitivity of a sensor module may be improved.

Also, based on the improved sensitivity, the use amount of the identification material 10 may be reduced compared to the embodiment illustrated in FIG. 4A.

The identification material 10 illustrated in FIG. 4B may be arranged in a length direction of the wrapper 53 by being sprayed onto a surface of the wrapper 53.

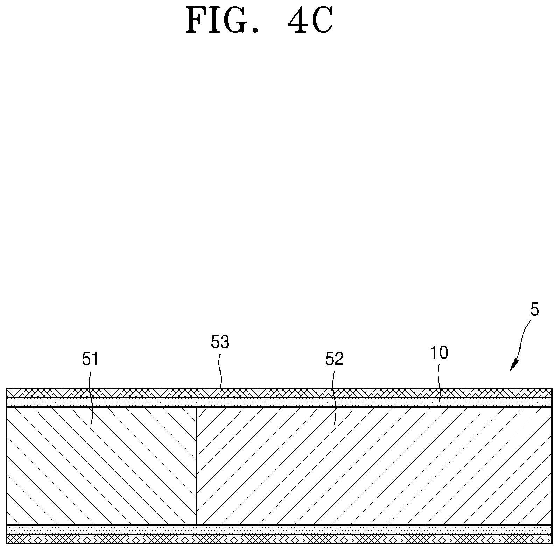

Referring to FIG. 4C, the identification material 10 may be arranged on an inner surface of the wrapper 53 in a length direction of the wrapper 53. Accordingly, the identification material 10 may not be separated from the wrapper 53 without a separate adhesive. Accordingly, the accuracy of an operation, in which an aerosol generating device identifies the identification material 10, may be improved, and a process of adhering the identification material 10 to the wrapper 53 during a process of manufacturing the aerosol generating article 5 may be omitted.

The identification material 10 illustrated in FIG. 4C may be arranged on an inner surface of the wrapper 53 by being sprayed onto the inner surface of the wrapper 53. In this case, a thickness of the wrapper 53 may be set to an appropriate thickness such that a sensor module of an aerosol generating device may identify the identification material 10 on the inner surface of the wrapper 53. For example, the thickness of the wrapper 53 may be in the range from about 10 µm to about 200 µm.

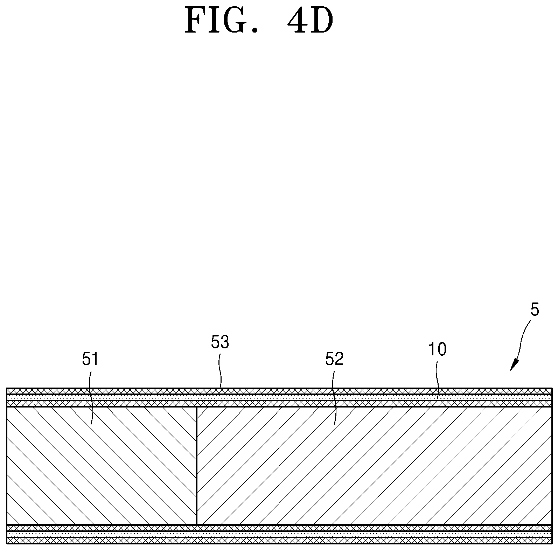

Referring to FIG. 4D, two wrappers 53 may surround overlappingly the aerosol generating article 5. The identification material 10 may be arranged in a length direction between the overlapped two wrappers 53. Accordingly, the identification material 10 may not be separated from the wrapper 53 even without a separate adhesive. Therefore, the accuracy of an operation, in which an aerosol generating device identifies the identification material 10, may be improved, and a process of adhering the identification material 10 to the wrapper 53 during a process of manufacturing the aerosol generating article 5 may be omitted.

Also, because the identification material 10 is arranged close to an outer surface of the wrapper 53 compared to the embodiment illustrated in FIG. 4C, a sensor module of the aerosol generating device may easily recognize the identification material 10.

That is, the sensitivity of the sensor module may be improved compared to the embodiment illustrated in FIG. 4C.

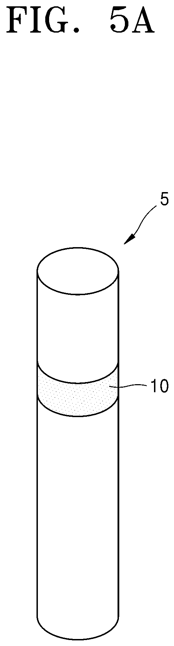

FIGS. 5A to 5D are perspective views of the aerosol generating article 5 illustrating examples of an arrangement position/method of an identification material.

The aerosol generating article 5 illustrated in FIGS. 5A to 5D may be at least one of the aerosol generating articles described above, and accordingly, redundant descriptions thereof are omitted below.

Also, the aerosol generating article 5 may be combined with at least one of the configurations or features of the embodiments described above, unless the configurations or features are technically obviously impossible. For example, embodiments illustrated in FIGS. 5A to 5D are described based on an identification material 10 arranged on an outer surface of a wrapper but are not limited thereto, and the identification material 10 illustrated in FIGS. 5A to 5D may also be arranged on an inner surface of the wrapper.

Referring to FIG. 5A, the identification material 10 may be arranged in a circumferential direction of an aerosol generating article 5, but may be arranged only on a part in a longitudinal direction of the aerosol generating article 5. In this case, a sensor module of an aerosol generating device may be arranged at a preset position in the circumferential direction of the aerosol generating article 5 to recognize the identification material 10, and thus, the degree of freedom of an arrangement structure of the sensor module may be improved.

Also, the use amount of the identification material 10 may be reduced compared to the embodiment in which the identification material 10 is arranged in the entire region in a length direction of a wrapper.

For example, the region in which the identification material 10 is arranged may extend by about 1 mm to about 10 mm in a length direction of the aerosol generating article 5. For example, the region in which the identification material 10 is arranged may extend by about 2 mm to about 7 mm in a longitudinal direction of the aerosol generating article 5.

Also, the aerosol generating article 5 may include an aerosol generating rod and a filter rod that are sequentially aligned in a longitudinal direction of the aerosol generating article 5, and the identification material 10 may be arranged in a region extending, in a direction toward the aerosol generating rod, from a boundary between the aerosol generating rod and the filter rod.

A length from a downstream end of a region, in which the identification material 10 is arranged, to the boundary between the aerosol generating rod and the filter rod may be from about 0 mm to about 5 mm. The heat, which is applied to the aerosol generating article 5 in the aforementioned range, may be prevented from being transferred to the identification material 10. For example, the length from the downstream end of the region, in which the identification material 10 is arranged, to the boundary between the aerosol generating rod and the filter rod may be from about 1 mm to about 3 mm.

Here, "upstream" and "downstream" may be determined based on a direction in which air flows when a user inhales an aerosol by using the aerosol generating article 5. For example, when a user inhales an aerosol by using the aerosol generating article 5 illustrated in FIG. 5A, air may move from the bottom of the aerosol generating article 5 toward the top based on FIG. 5A. In addition, a person skilled in the art will easily understand that "upstream" and "downstream" may be relative depending on a relationship between components.

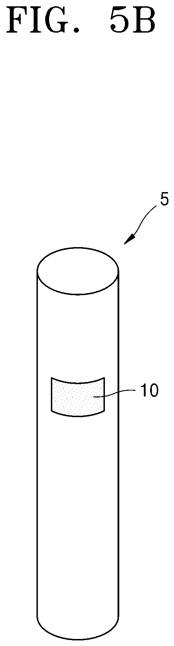

Referring to FIG. 5B, the identification material 10 may be arranged only in a part of the aerosol generating article 5 in a circumferential direction and a longitudinal direction. Accordingly, the use amount of the identification material 10 may be further reduced compared to the embodiment illustrated in FIG. 5A.

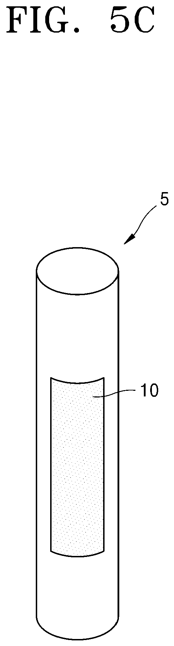

Referring to FIG. 5C, the identification material 10 may extend in the longitudinal direction of the aerosol generating article 5 but may be arranged only in a part of the aerosol generating article 5 in the circumferential direction. In this case, a sensor module of an aerosol generating device may be arranged at a preset position of the aerosol generating article 5 in the longitudinal direction to recognize the identification material 10, and thus, the degree of freedom of an arrangement structure of the sensor module may be improved.

Also, the use amount of the identification material 10 may be reduced compared to the embodiment in which the identification material 10 is arranged in the entire region of a wrapper in a length direction.

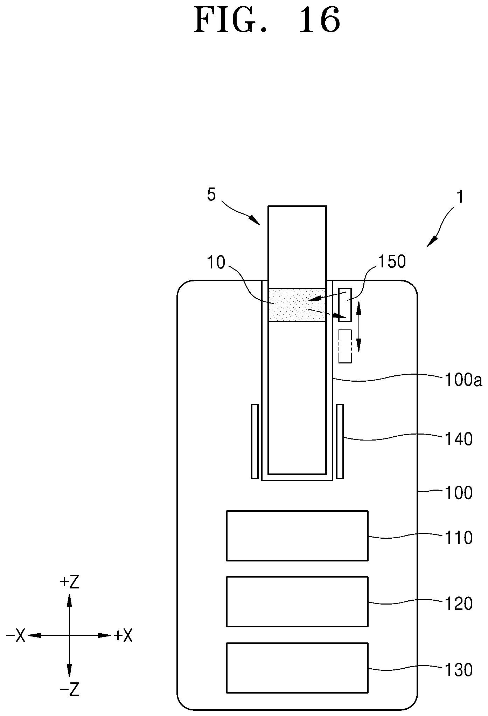

In addition, because the identification material 10 described with reference to FIGS. 5A to 5C is arranged only in one region of the aerosol generating article 5, a structure of a sensor module of an aerosol generating device for recognizing the identification material 10 may be implemented to be changed without being fixed to a certain position. Specific descriptions thereof are made below with reference to FIGS. 16 to 19.

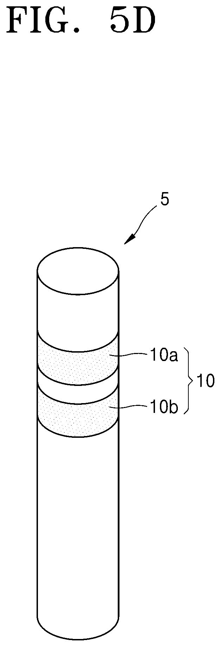

Referring to FIG. 5D, the identification material 10 may include a first identification material 10a and a second identification material 10b separated from each other in a length direction. The first identification material 10a and the second identification material 10b may each be a taggant and may be arranged as in the embodiment described with reference to FIGS. 4a to 5C without being limited to the arrangement method illustrated in FIG. 5D.

The first identification material 10a may have a different function from the second identification material 10b. To this end, the first identification material 10a may have an amount, a concentration, a type, and/or a composition ratio which are different from the second identification material 10b. As a result, wavelengths of certain ranges of the lights emitted from the first identification material 10a and the second identification material 10b may be different from each other, and a sensor module of an aerosol generating device may recognize the wavelengths of certain ranges of the lights emitted from the first identification material 10a and the second identification material 10b.

A difference between a wavelength value of the light emitted from the first identification material 10a and a wavelength value of the light emitted from the second identification material 10b may be about 15 nm or more. When the wavelength value of the light emitted from the first identification material 10a and the wavelength value of the light emitted from the second identification material 10b are less than about 15 nm, the accuracy of a controller that distinguishes the type of identification material may be reduced. Here, the wavelength value of the light emitted from the first identification material 10a and the wavelength value of the light emitted from the second identification material 10b may each mean a dominant wavelength (DWL). For example, a difference between the wavelength value of the light emitted from the first identification material 10a and the wavelength value of the light emitted from the second identification material 10b may be about 30 nm or more, about 50 nm or more, or about 100 nm or more.

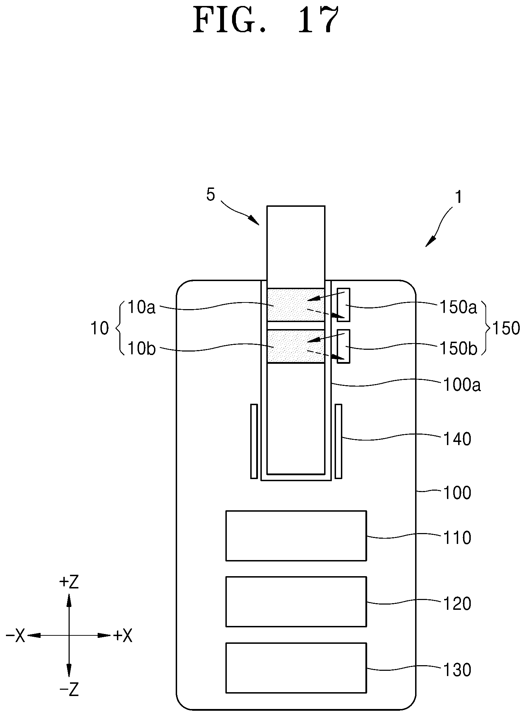

In addition, since a plurality of identification materials 10 illustrated in FIG. 5D are arranged in one region of the aerosol generating article 5, a sensor module of an aerosol generating device for recognizing the plurality of identification materials 10 may include multiple pieces or may be changed in position without being fixed to a certain position. Detailed descriptions thereof are made below with reference to FIG. 17.

Hereinafter, in an embodiment where an identification material is arranged on an outer surface of a wrapper, a separation prevention portion that prevents the identification material from being separated from a wrapper is described with reference to the attached drawings.

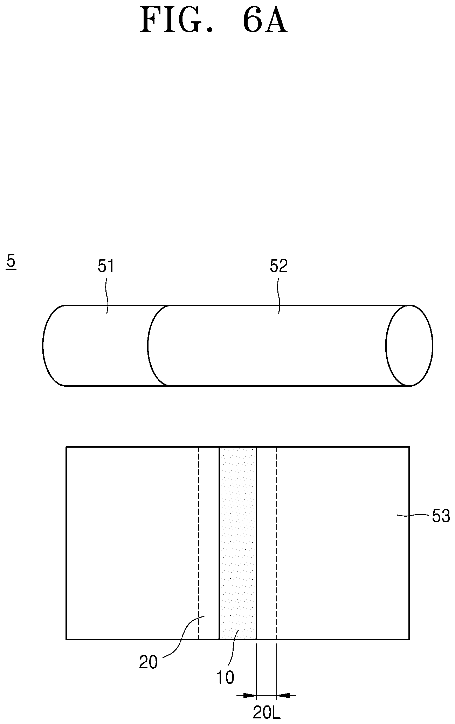

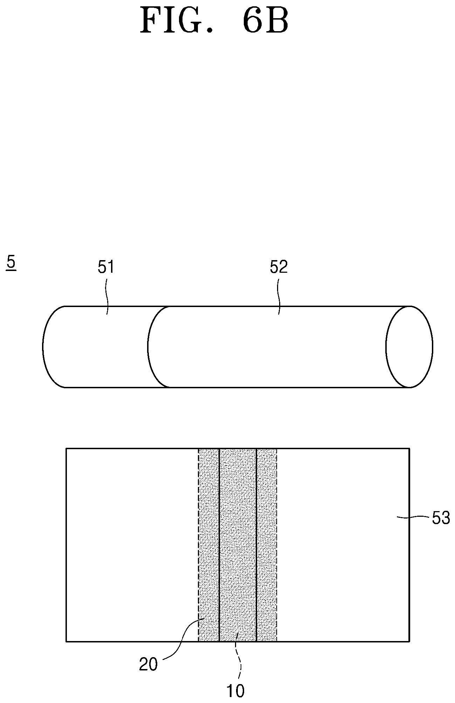

FIG. 6A and FIG. 6B are views of a tobacco rod, a filter rod, and a wrapper, which are separated from an aerosol generating article.

Referring to FIGS. 6A and 6B, an aerosol generating article 5 may include an identification material 10, a separation prevention portion 20, a tobacco rod 51, a filter rod 52, and a wrapper 53. At least one of components of the aerosol generating article 5 illustrated in FIGS. 6A and 6B is identical or similar to at least one of the components of the aerosol generating article described above, and accordingly, redundant descriptions thereof are omitted below. Also, it is natural that some components and structures may be replaced, added, or omitted within a range easily understandable to those skilled in the art with reference to the drawings and descriptions below.

The separation prevention portion 20 may perform a function of preventing the identification material 10 from being detached from the wrapper 53. The separation prevention portion 20 may be arranged on the wrapper 53 to cover a region where the identification material 10 is arranged. The separation prevention portion 20 may have a transparent property so as not to block light irradiated on the identification material 10 even when the separation prevention portion 20 covers the region where the identification material 10 is arranged.

As illustrated in FIG. 6B, color of the separation prevention portion 20 may change at the temperature at which the tobacco rod 51 is heated. For example, the separation prevention portion 20 may include a thermochromic material that is transparent before being heated but changes in color after being exposed to heat. Because the separation prevention portion 20 covers the identification material 10, the separation prevention portion 20 may block the identification material 10 when changing in color. Accordingly, a user may easily check whether the aerosol generating article 5 is being used with the naked eyes. For example, when the separation prevention portion 20 is heated at the temperature of 200 °C to 400 °C, the separation prevention portion 20 may change from a transparent color to an opaque brown color.

The temperature at which the separation prevention portion 20 changes in color may be higher than an activation temperature of the identification material 10. In the present disclosure, the activation temperature of the identification material 10 may be a critical temperature at which the identification material 10 emits light having a different wavelength from the irradiated light. When the temperature at which the separation prevention portion 20 changes in color is lower than the activation temperature of the identification material 10, the separation prevention portion 20 may change in color before the identification material 10 emits light and may block the light that is irradiated on the identification material 10, and accordingly, the sensor module may not recognize the identification material 10. According to an embodiment, the temperature at which the separation prevention portion 20 changes in color is higher than the activation temperature of the identification material 10, and accordingly, the sensor module may reliably recognize the identification material 10.

In an embodiment, an area of the separation prevention portion 20 may be greater than an area of a region where the identification material 10 is arranged, and the separation prevention portion 20 may be arranged such that the region where the identification material is arranged is not exposed to the outside. For example, an end of the separation prevention portion 20 may be separated from an end of the identification material 10 by a preset distance 20L. The preset distance 20L described above may be about 1 mm to about 10 mm.

When the preset distance 20L is less than about 1 mm, the identification material 10 may be more likely to be detached from the wrapper 53. Also, when the preset distance 20L exceeds about 10 mm, an area of the separation prevention portion 20 may be excessively expanded, and accordingly, the separation prevention portion 20 may be heated unintentionally.

In an embodiment, the separation prevention portion 20 may include an adhesive material. The separation prevention portion 20 may include the same material as an OP varnish of an identification material solution. For example, the separation prevention portion 20 may include at least one material selected from a group consisting of nitrocellulose, polyamide, propyl acetate, isopropyl alcohol, ethyl acetate, and 1,2-cyclohexane dicarboxylic acid diisononyl ester (DINCH).

Hereinafter, an aerosol generating device in which the aerosol generating article described above is used is described with reference to the attached drawings.

FIG. 7 is a schematic side view of an aerosol generating system according to an embodiment. In the present disclosure, the aerosol generating system may be used as meaning of including an aerosol generating article and an aerosol generating device.

Referring to FIG. 7, an aerosol generating device 1 may include an aerosol generating device body 100, a controller 110, a battery 120, a memory 130, a heater 140, and a sensor module 150. However, components of the aerosol generating device 1 are not limited thereto, and other components may be added, or at least one component may be omitted depending on embodiments.

Also, because at least one of components of the aerosol generating system illustrated in FIG. 7 is identical or similar to at least one of the components of the aerosol generating system described above, redundant descriptions thereof are omitted below. Also, it is natural that some components and structures may be replaced, added, or omitted within a range easily understandable to those skilled in the art with reference to the drawings and descriptions below.

The aerosol generating device body 100 may form the entire appearance of the aerosol generating device 1. The aerosol generating device body 100 may accommodate components of the aerosol generating device 1.

A cavity 100a, in which an aerosol generating article 5 may be accommodated, may be formed in the aerosol generating device body 100. The aerosol generating article 5 accommodated in the cavity 100a may be heated by the heater 140. The cavity 100a may be an elongated cavity for accommodating the aerosol generating article 5, a coupling region, an insertion region, or a heating region. The cavity 100a may have a shape corresponding to at least a partial region of the aerosol generating article 5. For example, the cavity 100a may have a shape extending from an opening in one direction (for example, in the -Z direction). The aerosol generating article 5 may be inserted into the cavity 100a in a length direction through the opening.

The aerosol generating article 5 accommodated in the cavity 100a may include the identification material 10 described above. The identification material 10 may be provided in at least a partial region of an outer surface of the aerosol generating article 5. When the aerosol generating article 5 is accommodated in the cavity 100a, the identification material 10 may be inside the aerosol generating device body 100.

The controller 110 may control all operations of the aerosol generating device 1. The controller 110 may be configured with an array including a plurality of logic gates, or may be configured with a combination of a general-purpose microcontroller and a memory storing a program that may be executed by the microcontroller but is not limited thereto.

The controller 110 may control the power supplied from the battery 120 to the heater 140. For example, the controller 110 may control the amount of power supplied from the battery 120 to the heater 140 and the time for which the power is supplied such that the heater 140 may be heated to a preset temperature or maintain a designated temperature.

In an embodiment, the controller 110 may receive a detection result from the sensor module 150. The memory 130 may be connected to the controller 110 and may store executable instructions. The controller 110 may control an operation of the aerosol generating device 1 by executing the instructions stored in the memory 130.

In an embodiment, the controller 110 may receive a detection result from the sensor module 150 and execute an instruction related to the sensor module 150 among instructions stored in the memory 130, and accordingly, the controller 110 may recognize identification information on the aerosol generating article 5 based on the amount of light emitted from the identification material 10. For example, the identification information may be information on the type, authenticity, and/or contained material of the aerosol generating article 5. The controller 110 may control an operation of the aerosol generating device 1 based on the recognized identification information.

Specifically, the controller 110 may control the power supply to the heater 140 based on the determined information of the aerosol generating article 5. The controller 110 may control differently an operation of the heater 140 based on the identification information by executing a command related to the operation of the heater 140 among commands stored in the memory 130.

The battery 120 may supply power used for the operation of the aerosol generating device 1. For example, the battery 120 may be electrically connected to the heater 140 to supply power to the heater 140 such that the heater 140 may be heated. Also, the battery 120 may also supply the power required to operate other components (for example, the controller 110) of the aerosol generating device 1. The battery 120 may be a rechargeable battery or a disposable battery. For example, the battery 120 may be a lithium polymer (LiPoly) battery, but the type of the battery 120 is not limited thereto.

The memory 130 may be a hardware that stores various data processed in the aerosol generating device 1 and store the data processed and data to be processed by the controller 110.

The memory 130 may have information on an appropriate temperature profile and operation based on various types of information, such as the type of the aerosol generating article 5, the type of a contained material, a content ratio of a material, a content of the material, and the degree of over-humidification. The controller 110 may execute a command of information (for example, an operation cycle, operation intensity, and so on) on an operation of the heater 140 from the memory 130 based on the identification material 10 to perform an operation corresponding to the aerosol generating article 5.

The heater 140 may receive power from the battery 120 and heat at least part of the aerosol generating article 5. For example, the heater 140 may be arranged on the outside of a tobacco rod of the aerosol generating article 5 and heat the tobacco rod.

The heater 140 is not limited to the example illustrated in FIG. 7. That is, although the heater 140 illustrated in FIG. 7 is arranged on the outside of the aerosol generating article 5, the heater 140 may also include a tubular heating element, a plate-shaped heating element, a needle-shaped heating element, or a rod-shaped heating element. In this case, the heater 140 may be inserted into the aerosol generating article 5 to heat the inside of the aerosol generating article 5.

The sensor module 150 may detect the identification material 10 of the aerosol generating article 5. Also, the sensor module 150 may detect whether the aerosol generating article 5 is inserted in the cavity 100a.

The sensor module 150 may be arranged in the aerosol generating device body 100 to recognize the identification material 10 of the aerosol generating article 5. The sensor module 150 may be arranged in the cavity 100a to be located at a corresponding position of the identification material 10.

The sensor module 150 may include a light emitting unit 151 and a light receiving unit 155.

The light emitting unit 151 may emit light having a first wavelength toward the cavity 100a. For example, the light emitting unit 151 may include at least one light emitting diode that emits light having the first wavelength when a current flows.

In an embodiment, at least part of the light having the first wavelength emitted from the light emitting unit 151 may be transferred to the identification material 10 of the aerosol generating article 5. The light having the first wavelength may be excited in the identification material 10, and the identification material 10 may emit light having a second wavelength different from the first wavelength. Optical characteristics, such as a wavelength and amount of light emitted from the identification material 10 may be determined according to an amount, concentration, type, and/or composition ratio of the identification material 10.

The light receiving unit 155 may receive the light emitted from the identification material 10 of the aerosol generating article 5. For example, the light receiving unit 155 may include at least one light receiving diode through which a current flows when light is irradiated thereon.

The light receiving unit 155 may detect optical characteristics (for example, the amount of light having the second wavelength) of the light emitted from the aerosol generating article 5 and recognize identification information on the aerosol generating article 5. The light receiving unit 155 may provide a detection result to the controller 110.

Hereinafter, the light having the first wavelength emitted from the light emitting unit 151 and the light having the second wavelength received by the light receiving unit 155 are described.

In an embodiment, the light having the first wavelength may be infrared light, and the light having the second wavelength may be infrared light having a wavelength that is different from the first wavelength. For example, the first wavelength may be in the range from 930 nm to 990 nm. The second wavelength may be in the range from 1000 nm to 1020 nm. For example, the first wavelength may be 980 nm, and the second wavelength may be 1012 nm.

Accordingly, the sensor module 150 may recognize the identification information of the aerosol generating article 5 without being visually exposed to a user by using the light having the first wavelength and the light having the second wavelength, which are infrared light.

In an embodiment, the light having the first wavelength may be ultraviolet light, and the light having the second wavelength may be infrared light. For example, the first wavelength may be in the range from 300 nm to 340 nm. The second wavelength may be in the range from 1000 nm to 1020 nm. For example, the first wavelength may be 320 nm, and the second wavelength may be 1012 nm.

In an embodiment, the light having the first wavelength may be ultraviolet light, and the light having the second wavelength may be visible light. In this case, the light receiving unit 155 may be a color sensor. The color sensor may include an RGB (Red Green Blue) sensor or an XYZ light sensor for measuring, determining, or distinguishing the color of an identification mark. The RGB sensor may include three color light sources and detect color information by reflecting light on a target object. The XYZ light sensor may include a light-to-digital converter and detect xy chromaticity coordinates according to a CIE (Commission Internationale de l'Eclairage) 1931 color space.

For example, the first wavelength may be in the range from 340 nm to 375 nm, and the second wavelength may be in the range from 380 nm to 780 nm. For example, the first wavelength may be 365 nm, and the second wavelength may be 613 nm to 627 nm (red light). In another example, the first wavelength may be 365 nm, and the second wavelength may be in the range from 540 nm to 551 nm (yellow light). Also, the first wavelength may be 365 nm, and the second wavelength may be in the range from 513 nm to 537 nm (green light). Also, the first wavelength may be 365 nm, and the second wavelength may be in the range from 437 nm to 477 nm (blue light).

In another example, the first wavelength may be in the range from 250 nm to about 260 nm, and the second wavelength may be in the range from 400 nm to about 750 nm. For example, the first wavelength may be 255 nm, and the second wavelength may be 580 nm (yellow light).

In an embodiment, the first wavelength may be in the range from 600 nm to 900 nm, and the second wavelength may be in the range from 1000 nm to 1020 nm. For example, the first wavelength may be 700 nm, and the second wavelength may be 1012 nm. In this case, the sensor module 150 may include a near-infrared (NIR) sensor.

As described above, the sensor module 150 may improve identification accuracy of the aerosol generating article 5 by using different types (or, having a relatively large wavelength change) of light as the light having the first wavelength and the light having the second wavelength.

For example, based on a sensing value of about 1012 nm received through the light receiving unit 155, the controller 110 may determine that the aerosol generating article 5 inserted in the aerosol generating device 1 is a first type of the aerosol generating article 5. in another example, based on the sensing value of about 1012 nm received through the light receiving unit 155, the controller 110 may determine that the aerosol generating article 5 inserted in the aerosol generating device 1 is a genuine article that is not counterfeited.

When the type of the aerosol generating article 5 is determined to be the first type of the aerosol generating article, the controller 110 may control power supply to the heater 140 based on a temperature profile corresponding to the first type of aerosol generating article. in another example, when the aerosol generating article 5 is determined to be a counterfeit article, the controller 110 may not supply power to the heater 140 or disconnect the power being supplied.

When the type of aerosol generating article 5 is detected based on a sensing value sensed through the light receiving unit 155, the battery 120 may supply power to the heater 140 according to a temperature profile corresponding to the detected type of the aerosol generating article 5. in another example, when the aerosol generating article 5 is determined to be a counterfeit article based on the sensing value sensed through the light receiving unit 155, the battery 120 may not supply power to the heater 140.

The light emitting unit 151 and the light receiving unit 155 may be arranged adjacent to the cavity 100a. For example, the light emitting unit 151 may be separated from the light receiving unit 155 by a preset distance in the z-axis direction along a direction in which the cavity 100a extends. In another example, the light emitting unit 151 may be separated from the light receiving unit 155 by a preset distance in the x-axis direction crossing the direction in which the cavity 100a extends to surround at least one region of the cavity 100a. In this case, 'at least one region of the cavity' may mean a region corresponding to a region where an identification material 10 is arranged in the aerosol generating article 5 when the aerosol generating article 5 is accommodated in the cavity 100a.

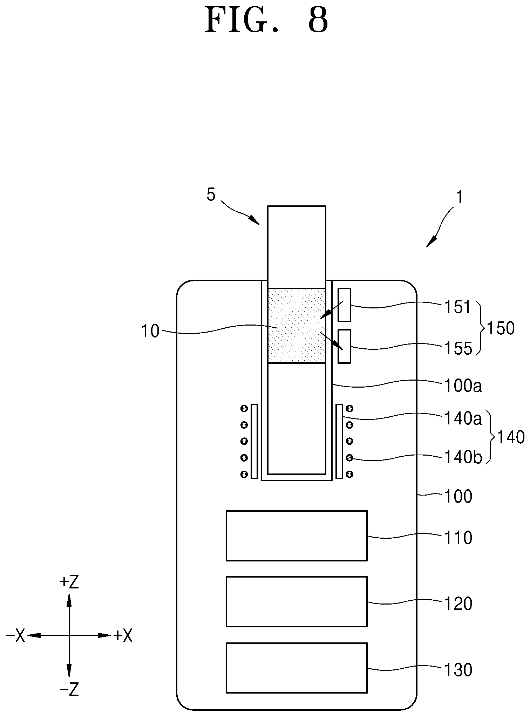

FIG. 8 is a schematic side view of an aerosol generating system using a different heating method from the aerosol generating system in FIG. 7.

Referring to FIG. 8, an aerosol generating device 1 may include an aerosol generating device body 100, a controller 110, a battery 120, a memory 130, a heater 140, and a sensor module 150. At least one component (for example, the sensor module 150) among components of the aerosol generating system illustrated in FIG. 8 is identical or similar to at least one of the components of the aerosol generating system of FIG. 7, and accordingly, redundant descriptions thereof are omitted below. Also, it is natural that some components and structures may be replaced, added, or omitted within a range easily understandable to those skilled in the art with reference to the drawings and descriptions below.

The aerosol generating device 1 may generate an aerosol by heating an aerosol generating article 5 accommodated in a cavity 100a by using an induction heating method. The induction heating method may mean a method of heating a magnetic body by applying an alternating magnetic field of which direction changes periodically to a magnetic body that is heated by an external magnetic field.

When an alternating magnetic field is applied to a magnetic body, energy loss may occur in the magnetic body due to eddy current loss and hysteresis loss, and the lost energy may be released from the magnetic body as heat energy. The greater the amplitude or frequency of the alternating magnetic field applied to the magnetic body, the more heat energy may be released from the magnetic body. The aerosol generating device 1 may release heat energy from the magnetic body by applying an alternating magnetic field to a magnetic body and may transfer the heat energy released from the magnetic body to the aerosol generating article 5.

For this purpose, the heater 140 may include a susceptor 140a and a coil 140b.

The susceptor 140a is a magnetic material that generates heat by a magnetic field. The susceptor 140a may be arranged inside the aerosol generating device body 100 and may surround the aerosol generating article 5 accommodated in the cavity 100a. In this case, the susceptor 140a may have a shape of a hollow cylinder, but the shape is not limited thereto.

In a modification embodiment, the susceptor 140a may also be arranged inside the aerosol generating article 5 accommodated in the cavity 100a. In this case, the susceptor 140a may have a shape of a slice, a thin slice, a strip, or so on and be included in the aerosol generating article 5.

At least part of the susceptor 140a may be formed of a ferromagnetic substance. For example, the susceptor 140a may include a metal or carbon. The susceptor 140a may include at least one of ferrite, a ferromagnetic alloy, stainless steel, and aluminum (Al). Also, the susceptor 140a may include at least one of graphite, molybdenum, silicon carbide, niobium, a nickel alloy, a metal film, ceramic such as zirconia, a transition metal such as nickel (Ni) or cobalt (Co), and a metalloid such as boron (B) or phosphorus (P).

The coil 140b may heat the susceptor 140a by applying an alternating magnetic field to the susceptor 140a. The coil 140b may be arranged to surround the outside of the susceptor 140a. The battery 120 may include a battery unit that supplies a direct current to the coil 140b and a converter that converts the direct current supplied from the battery unit into an alternating current supplied to the coil 140b.

The sensor module 150 may recognize the identification material 10 of the aerosol generating article 5 accommodated in the cavity 100a, and the controller 110 may control the power supply to the coil 140b based on information of the aerosol generating article 5.

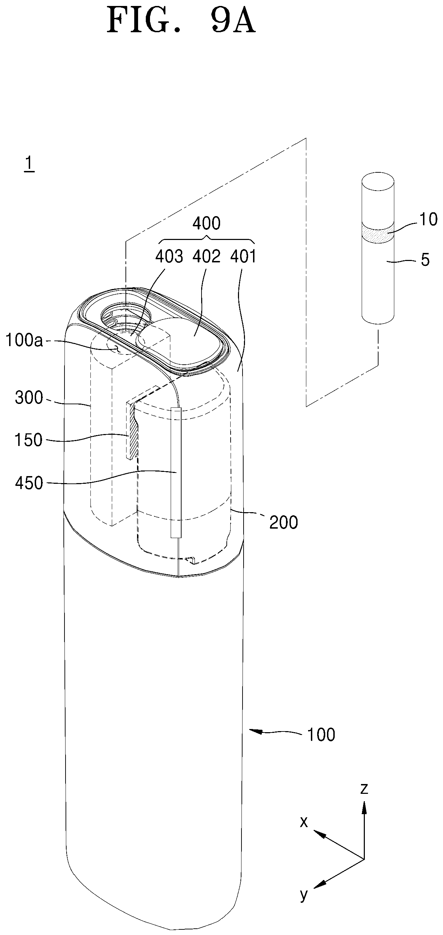

Hereinafter, examples of an aerosol generating system to which the sensor module 150 is applied are sequentially described with reference to FIGS. 9A to 11B.

FIG. 9A is a perspective view illustrating an example of an aerosol generating device to which a sensor module is applied.

Referring to FIG. 9A, an aerosol generating device 1 may include an aerosol generating device body 100, a sensor module 150, a cartridge 200, a heater assembly 300, and a cap 400. At least one component (for example, the sensor module 150) among components of the aerosol generating system illustrated in FIG. 9A is identical or similar to at least one of the components of the aerosol generating system described above, and accordingly, redundant descriptions thereof are omitted below. Also, it is natural that some components and structures may be replaced, added, or omitted within a range easily understandable to those skilled in the art with reference to the drawings and descriptions below.

Components for operating the aerosol generating device 1 may be arranged inside the aerosol generating device body 100. For example, a battery (not illustrated) and a controller (not illustrated) may be arranged inside the aerosol generating device body 100. However, the battery and the controller are only examples of components arranged inside the aerosol generating device body 100, and other components (for example, a user interface, a sensor, and so on) may be arranged inside the aerosol generating device body 100 in addition to the components described above. The aerosol generating device body 100 may be located at a lower portion (for example, a portion facing the -z direction) of the cartridge 200 and the cap 400 and may support the cartridge 200 and the cap 400.

An aerosol generating material may be stored in the cartridge 200, and the aerosol generating material stored in the cartridge 200 may be supplied to a heating unit (not illustrated) included in the cartridge 200. Accordingly, the aerosol generating material may be aerosolized in a chamber (not illustrated) included in the cartridge 200 by a heating unit. In the present disclosure, an 'aerosol' may mean particles generated by mixing the vapor generated by heating an aerosol generating material with air, and the expression may be used with the same meaning hereinafter.

The aerosol generating material stored inside the cartridge 200 may include a tobacco-containing material including a volatile tobacco flavor component, or a liquid composition including a non-tobacco material.

According to an embodiment, the liquid composition may include any one of water, a solvent, ethanol, a plant extract, fragrance, a flavoring agent, and a vitamin mixture, or may include a mixture of the component. The fragrance may include menthol, peppermint, spearmint oil, various fruit flavoring ingredients, and so on but is not limited thereto. The flavoring agent may include an ingredient that may provide a variety of flavors or savors to a user. The vitamin mixture may be a mixture of at least one of vitamin A, vitamin B, vitamin C, and vitamin E but is not limited thereto. Also, the liquid composition may include an aerosol former, such as glycerin and propylene glycol.

For example, the liquid composition may include a solution of glycerin and propylene glycol which has a certain weight ratio and to which a nicotine salt is added. The liquid composition may also include two or more types of nicotine salt. The nicotine salt may be formed by adding a suitable acid, which includes organic acid or inorganic acid, to nicotine. The nicotine may be natural nicotine or synthetic nicotine and have any suitable weight concentration with respect to the total solution weight of the liquid composition.

Acid for forming the nicotine salt may be selected appropriately by considering a blood nicotine absorption rate, an operation temperature of the aerosol generating device 1, flavor or savor, solubility, and so on. For example, the acid for forming the nicotine salt may be single acid selected from a group consisting of benzoic acid, lactic acid, salicylic acid, lauric acid, sorbic acid, levulinic acid, pyruvic acid, formic acid, acetic acid, propionic acid, butyric acid, valeric acid, caproic acid, caprylic acid, capric acid, citric acid, myristic acid, palmitic acid, stearic acid, oleic acid, linoleic acid, linolenic acid, phenylacetic acid, tartaric acid, succinic acid, fumaric acid, gluconic acid, saccharic acid, malonic acid, and malic acid, or a mixture of two or more acids selected from the group but is not limited thereto.

The heater assembly 300 may include a cavity 100a that accommodates an aerosol generating article 5. Also, the heater assembly 300 may include the heater 140 in FIG. 7 or FIG. 8, and may heat a tobacco rod of the aerosol generating article 5 accommodated in the cavity 100a.

The heater assembly 300 may be connected to a chamber of the cartridge 200. Accordingly, an aerosol generated in the chamber may move to the heater assembly 300. The aerosol moved to the heater assembly 300 may pass through the aerosol generating article 5 accommodated in the cavity 100a formed in the heater assembly 300 to be discharged to the outside. A user may put his/her mouth on the aerosol generating article 5 and inhale an aerosol discharged to the outside of the aerosol generating device 1 through the aerosol generating article 5.

According to an embodiment, the sensor module 150 may be arranged in the heater assembly 300 to recognize the identification material 10 of the aerosol generating article 5 accommodated in the cavity 100a, and the controller 110 may control the power supply to the heater assembly 300 based on the information of the aerosol generating article 5.

Although not illustrated, the sensor module 150 may include a light emitting unit that emits the light having a first wavelength to the identification material 10 of the aerosol generating article 5, and a light receiving unit that receives light which has a second wavelength and is emitted from the identification material 10.

The cap 400 may be arranged to surround at least part of the cartridge 200, at least part of the aerosol generating device body 100, and at least part of the heater assembly 300. For example, the cap 400 may be coupled to the aerosol generating device body 100 to surround the entire outside of the cartridge 200 and the entire outside of the heater assembly 300. The cap 400 may protect the cartridge 200, the aerosol generating device body 100, and the heater assembly 300 from an external impact or the introduction of external foreign materials. The cap 400 may be detachably coupled to the aerosol generating device body 100.

The cap 400 may include a cap body 401, a door 402, and a cap hole 403.

The cap body 401 functions as a body of the cap 400 and may be detachably coupled to the aerosol generating device body 100. A door guide hole (not illustrated) may be formed in the cap body 401, into which at least part of the door 402 is inserted, to guide the movement of the door.

The door 402 may be located at an upper portion (for example, a portion facing the +z direction) of the cap body 401 and may open or close the cap hole 403. The door 402 may be inserted into the door guide hole of the cap body 401 and may move along one direction (for example, the x-axis direction).

The cap hole 403 may be formed at the upper portion (for example, the portion facing the +z direction) of the cap body 401 and may be connected to the cavity 100a of the heater assembly 300. In a state where the cap 400 is coupled to the aerosol generating device body 100, the aerosol generating article 5 may pass through the cap hole 403 to be accommodated in the cavity 100a of the heater assembly 300.

The cap 400 may further include a window 450.

The window 450 may include a transparent material, such as acrylic or glass. The window 450 may be formed along one direction (for example, the z-axis direction) on an outer surface of the cap body 401 at a corresponding position of the cartridge 200. A user may check the remaining amount of an aerosol generating material stored in the cartridge 200 through the window 450.

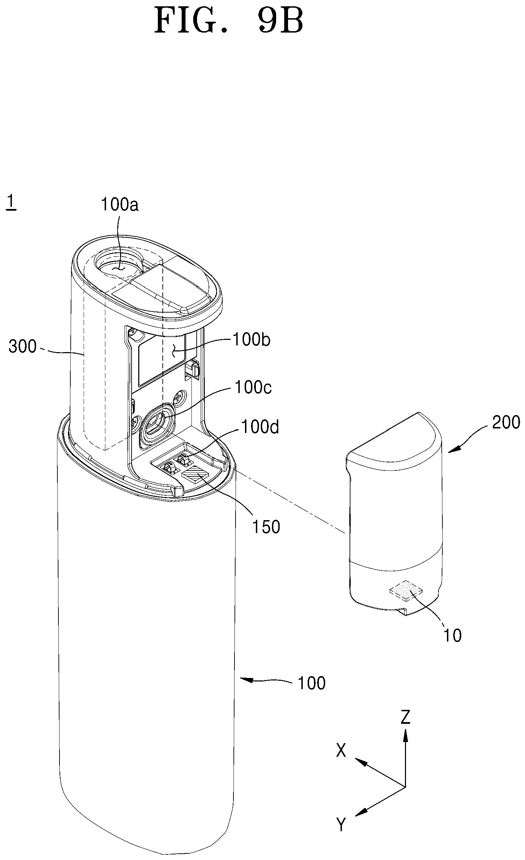

FIG. 9B is a perspective view illustrating separated some components of the aerosol generating device illustrated in FIG. 9A.

Referring to FIG. 9B, the cartridge 200 may be detachably coupled to the aerosol generating device body 100. The cartridge 200 may be coupled to the aerosol generating device body 100 by being inserted into the insertion portion 100b of the aerosol generating device body 100.

When the cartridge 200 is coupled to the aerosol generating device body 100, the cartridge 200 may be connected to the heater assembly 300 through the connection portion 100c of the aerosol generating device body 100. An aerosol generated in the chamber of the cartridge 200 may flow to the heater assembly 300 through the connection portion 100c, and as a result, the aerosol may pass through an aerosol generating article inserted into the cavity 100a to be discharged to the outside of the aerosol generating device 1.

When the cartridge 200 is coupled to the aerosol generating device body 100, the cartridge 200 may be electrically connected to a component of the aerosol generating device 1 through a terminal 100d of the aerosol generating device body 100. For example, the cartridge 200 may be connected to a controller and a battery through the terminal 100d. The controller may control the power supply to a heating unit (not illustrated) of the cartridge 200. At least part of the terminal 100d may be exposed toward the insertion portion 100b.

According to an embodiment, the sensor module 150 may be arranged on one surface of the aerosol generating device body 100 facing the insertion portion 100b and may recognize the identification material 10 arranged in the cartridge 200. An amount, concentration, type, and/or composition ratio of the identification material 10 may be determined according to the type of the aerosol generating material stored in the cartridge 200, and the controller 110 may control the power supply to the heating unit of the cartridge 200 based on the information of the aerosol generating material inside the cartridge 200.

Although not illustrated, the sensor module 150 may include a light emitting unit that emits the light having a first wavelength to the identification material 10 of the cartridge 200, and a light receiving unit that receives light which has a second wavelength and is emitted from the identification material 10.

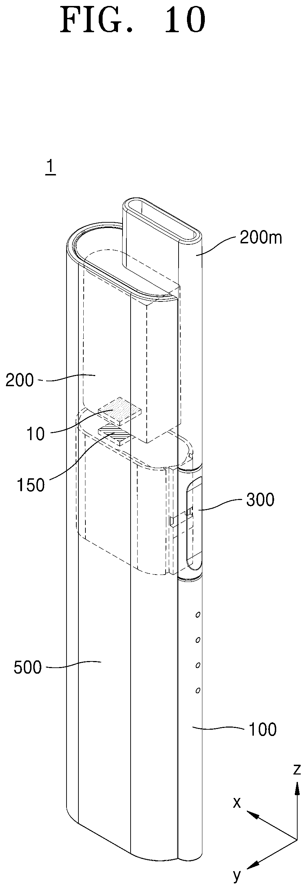

FIG. 10 is a perspective view illustrating another example of an aerosol generating device to which a sensor module is applied.

Referring to FIG. 10, an aerosol generating device 1 may include an aerosol generating device body 100, a sensor module 150, a cartridge 200, a heater assembly 300, and a cover 500. At least one component (for example, the sensor module 150) among components of the aerosol generating device illustrated in FIG. 10 is identical or similar to at least one of the components of the aerosol generating device described above, and accordingly, redundant descriptions thereof are omitted below. Also, it is natural that some components and structures may be replaced, added, or omitted within a range easily understandable to those skilled in the art with reference to the drawings and descriptions below.

The aerosol generating device body 100 may be located at the bottom of the heater assembly 300 to support the heater assembly 300, and components for operating the aerosol generating device 1 may be arranged inside the aerosol generating device body 100. The components described above may be a controller, a battery, and a memory, and descriptions thereof are described above, thereby being omitted.

An aerosol generating material may be stored in the cartridge 200, and the aerosol generating material stored in the cartridge 200 may be supplied to the heater assembly 300 arranged at the bottom (for example, a portion facing the -z direction) of the cartridge 200. The aerosol generating material stored in the cartridge 200 is identical or similar to the aerosol generating material described with reference to FIG. 9A, and accordingly, detailed description thereof is omitted.

According to an embodiment, the cartridge 200 may include a mouthpiece 200m for supplying an aerosol to a user. For example, the mouthpiece 200m may connect or fluidly connect the inside of the heater assembly 300 to the outside of the aerosol generating device 1, and an aerosol generated inside the heater assembly 300 may be discharged to the outside of the aerosol generating device 1 through the mouthpiece 200m. In this case, a user may cause the mouth to come into contact with the mouthpiece 200m and inhale the aerosol discharged to the outside of the aerosol generating device 1.

In the present disclosure, "fluid connection" may mean that components are connected to each other such that a fluid, such as air or liquid, may pass through and flow.

The heater assembly 300 may be located between the cartridge 200 and the aerosol generating device body 100 and may perform a function of generating an aerosol by converting a phase of an aerosol generating material into a gas phase. The heater assembly 300 may generate an aerosol by heating an aerosol generating material supplied from the cartridge 200.

For example, the heater assembly 300 may heat an aerosol generating material supplied from the cartridge 200 to generate vapor from the aerosol generating material. The generated vapor may be mixed with external air introduced into the heater assembly 300 from the outside of the heater assembly 300, and as a result, an aerosol may be generated.

The heater assembly 300 may include a chamber that provides a space where an aerosol is generated, a wick that absorbs an aerosol generating material, and a heating unit that heats the aerosol generating material absorbed by the wick.

According to an embodiment, the aerosol generating device 1 may enable the cartridge 200 and/or the heater assembly 300 to be replaced with each other through a structure in which the cartridge 200 is detachably coupled to the heater assembly 300, and the heater assembly 300 is detachably coupled to the aerosol generating device body 100.

When an aerosol generating material stored in the cartridge 200 is exhausted, a user may continue smoking by replacing the existing cartridge 200 with a new cartridge 200. In another example, when the performance of a component (for example, a heating unit or a wick) of the heater assembly 300 is degraded and a sufficient amount of aerosol is not generated, a user may replace the existing heater assembly 300 with a new heater assembly 300 to ensure that a sufficient amount of aerosol is generated.

When the cartridge 200 needs to be replaced because an aerosol generating material stored in the cartridge 200 is consumed, the aerosol generating device 1 according to an embodiment may have a structure in which only the cartridge 200 is replaced and the heater assembly 300 is reusable. Accordingly, even when the cartridge 200 needs to be replaced, a component, such as the heating unit included in the heater assembly 300, does not need to be replaced together with the cartridge, and thus, the entire use cost of the aerosol generating device 1 according to an embodiment may be reduced.

According to an embodiment, the sensor module 150 may recognize the identification material 10 arranged on one surface of the cartridge 200. An amount, concentration, type, and/or composition ratio of the identification material 10 may be determined according to the type of the aerosol generating material stored in the cartridge 200, and the controller 110 may control the power supply to the heating unit of the cartridge 200 based on the information on the aerosol generating material in the cartridge 200.

Although not illustrated, the sensor module 150 may include a light emitting unit that emits the light having a first wavelength to the identification material 10 of the cartridge 200, and a light receiving unit that receives light which has a second wavelength and is emitted from the identification material 10.

Although FIG. 10 illustrates an embodiment in which the identification material 10 is on a lower surface (for example, a portion facing the -z direction) of the cartridge 200 and the sensor module 150 is between the cartridge 200 and the heater assembly 300, the embodiment is not limited thereto. That is, in another example, the identification material 10 may be arranged on a side surface (for example, a surface facing the +y direction) of the cartridge 200, and the sensor module 150 may also be arranged in the aerosol generating device 1 to correspond thereto.

According to an embodiment, the aerosol generating device 1 may further include a cover 500 for protecting components of the aerosol generating device 1.

The cover 500 may surround at least part of the cartridge 200, the aerosol generating device body 100, and the heater assembly 300 and fix positions of the aerosol generating device body 100, the cartridge 200, and the heater assembly 300, and protect the aerosol generating device body 100, the cartridge 200, and the heater assembly 300 from an external impact or the introduction of foreign materials.

According to an embodiment, the cover 500 may be formed integrally with the aerosol generating device body 100 but is not limited thereto. In another embodiment, the cover 500 may be detachably coupled to the aerosol generating device body 100.

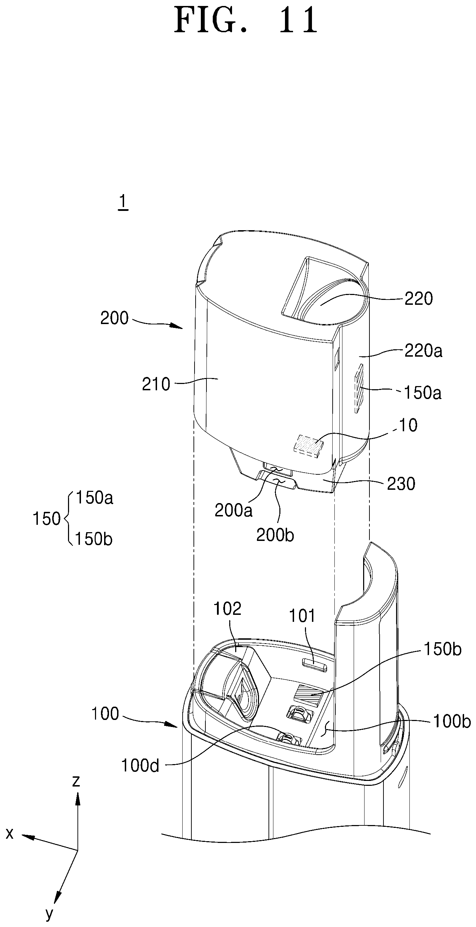

FIG. 11 is a perspective view illustrating another example of an aerosol generating device to which a sensor module is applied.

Referring to FIG. 11, an aerosol generating device 1 may include an aerosol generating device body 100, a sensor module 150, a cartridge 200, and a cap 400. At least one component (for example, the sensor module 150) among components of the aerosol generating device illustrated in FIG. 11 is identical or similar to at least one of the components of the aerosol generating device described above, and accordingly, redundant descriptions thereof are omitted below. Also, it is natural that some components and structures may be replaced, added, or omitted within a range easily understandable to those skilled in the art with reference to the drawings and descriptions below.

The aerosol generating device body 100 may be located at the bottom of the cartridge 200 and support the cartridge 200, and components for operating the aerosol generating device 1 may be arranged inside the aerosol generating device body 100. The components arranged inside the aerosol generating device body 100 may be a controller, a battery, and a memory, and descriptions thereof are described above, thereby being omitted.

The cartridge 200 may include a storage 210, a cavity 220, and a chamber 230.

The storage 210 may store an aerosol generating material and be arranged at an upper portion (for example, a portion facing the +z direction) of the chamber 230 and be connected or fluidly connected to an internal space of the chamber 230. For example, when the aerosol generating material stored in the storage 210 is exhausted, a user may replace the existing cartridge 200 with a new cartridge 200 to continue smoking. In another example, when the performance of a component (for example, a heating unit) of the cartridge 200 is degraded and a sufficient amount of aerosol is not generated or an aerosol generating material is leaked, a user may replace the existing cartridge 200 with a new cartridge 200 to enable a sufficient amount of aerosol to be generated or prevent the aerosol generating material from being leaked. The aerosol generating material stored in the storage 210 is identical to the aerosol generating material described with reference to FIG. 9A, and accordingly, detailed descriptions thereof are omitted.

The aerosol generating device 1 according to an embodiment enables the cartridge 200 to be replaced through a structure in which the cartridge 200 is detachably coupled to the aerosol generating device body 100. That is, the aerosol generating device 1 according to an embodiment may have a structure in which the storage 210 storing an aerosol generating material and the cavity 220 accommodating the aerosol generating article 5 (see FIGS. 4A to 6B) are replaced together through the replacement of the cartridge 200.

The cavity 220 may include an outer wall 220a, and an internal space of the cavity 220 may be spatially separated from the aerosol generating device body 100 through the outer wall 220a.

The chamber 230 may be arranged at a lower portion (for example, a portion facing the -z direction) of the storage 210 and a lower portion (for example, a portion facing the -z direction) of the cavity 220 and may be connected to the storage 210 and the cavity 220. Accordingly, the aerosol generating material stored in the storage 210 may be introduced into an internal space of the chamber 230, and an aerosol generated in the internal space of the chamber 230 may move to the cavity 220.

A coupling groove 200a and a coupling surface 200b for coupling the cartridge 200 to the aerosol generating device body 100 may be formed in an outer surface of the chamber 230. The coupling surface 200b may be formed to be inclined in a direction (for example, in the z-axis direction) in which the aerosol generating device 1 extends.

The aerosol generating device body 100 may include an insertion portion 100b into which the cartridge 200 is inserted and a coupling protrusion 101 protruding toward the insertion portion 100b.

For example, when the cartridge 200 moves toward the insertion portion 100b and the coupling protrusion 101 is inserted into the coupling groove 200a along a coupling surface 200b formed to be inclined on an outer surface of the chamber 230, the cartridge 200 may be coupled to the aerosol generating device body 100. Also, when the cartridge 200 moves away from the insertion portion 100b and the coupling protrusion 101 is separated from the coupling groove 200a, the cartridge 200 may be separated from the aerosol generating device body 100.

In the above manner, the cartridge 200 may be detachably coupled to the aerosol generating device body 100, but the coupling method between the cartridge 200 and the aerosol generating device body 100 is not limited thereto.

The aerosol generating device body 100 may include a terminal 100d and an induction plate 102.

The terminal 100d may perform a function of electrically connecting the cartridge 200 to the aerosol generating device body 100. For example, the terminal 100d may electrically connect a heating unit of the cartridge 200 to a battery of the aerosol generating device body 100. When the cartridge 200 is inserted into the insertion portion 100b to be coupled to the aerosol generating device body 100, the terminal 100d may be electrically connected to the cartridge 200. At least part of the terminal 100d may be exposed to the insertion portion 100b, and a hole may be formed in the aerosol generating device body 100 to expose the terminal 100d.

The induction plate 102 may be arranged between the cartridge 200 and the aerosol generating device body 100. The induction plate 102 may perform a function of inducing air introduced into the aerosol generating device 1 to flow into the chamber 230. The induction plate 102 may be arranged to be inclined with respect to a direction (for example, in the z-axis direction) in which the aerosol generating device 1 extends.

According to an embodiment, the sensor module 150 may include a first sensor module 150a and a second sensor module 150b.

The first sensor module 150a may be arranged in the cavity 220 and recognize an identification material of the aerosol generating article accommodated in the cavity 220, and the controller 110 may control the power supply to a heating unit of the cartridge 200 based on the information of an aerosol generating article.

Although not illustrated, the first sensor module 150a may include a light emitting unit that emits the light having a first wavelength to an identification material of an aerosol generating article, and a light receiving unit that receives light which has a second wavelength and is emitted from the identification material.

The second sensor module 150b may recognize the identification material 10 arranged on one surface of the cartridge 200. The second sensor module 150b may be arranged toward the insertion portion 100b of the aerosol generating device body 100. An amount, concentration, type, and/or composition ratio of the identification material 10 may be determined according to the type of an aerosol generating material stored in the storage 210, and the controller 110 may control the power supply to a heating unit of the cartridge 200 based on the information on an aerosol generating material in the storage 210.

Although not illustrated, the second sensor module 150b may include a light emitting unit that emits the light having a first wavelength to the identification material 10 of the cartridge 200, and a light receiving unit that receives light which has a second wavelength and is emitted from the identification material 10.

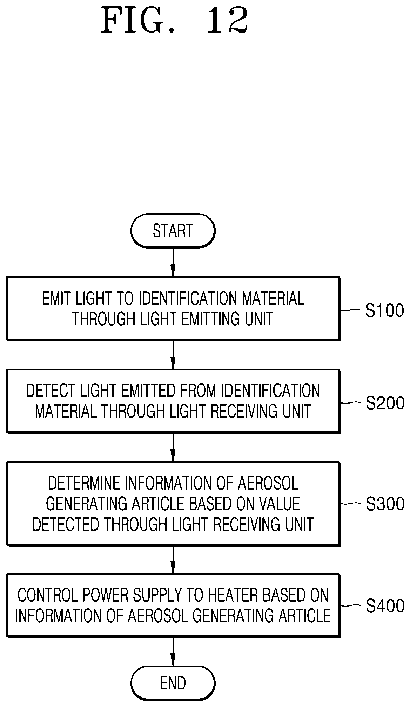

FIG. 12 is a flowchart illustrating an aerosol generating system, according to an embodiment, which determines information of an aerosol generating article to control power supply to a heater. In the description of FIG. 12, at least one of components of the aerosol generating system is identical or similar to the description described above, and accordingly, redundant descriptions thereof may be omitted.

Referring to FIG. 12, an operating method of the aerosol generating system, according to an embodiment may, may include four operations.

First, a controller of an aerosol generating device may irradiate light on an identification material through a light emitting unit in operation S100.

In an embodiment, when insertion of an aerosol generating article is detected, the controller may irradiate light having a preset wavelength through the light emitting unit. For example, the aerosol generating device may include an insertion detection sensor, such as an inductive sensor, a capacitive sensor, or a pressure sensor, and when insertion of an aerosol generating article is detected by the insertion detection sensor, the controller may irradiate the light having the preset wavelength through the light emitting unit.

In another embodiment, when a user's input to an aerosol generating device is received, the controller may irradiate light having a preset wavelength through the light emitting unit. For example, the aerosol generating device may include a physical button that allows a user to select a state (for example, power on/off) of the device, and when a user's input to the physical button is received, the controller may irradiate the light having the preset wavelength through the light emitting unit.

In an embodiment, a wavelength of the light irradiated from the light emitting unit may be in a first wavelength range. In this case, the first wavelength range may mean a wavelength range of light that may excite an identification material, and accordingly, the first wavelength range may be preset to correspond to the identification material. For example, in order to identify an aerosol generating article including an identification material excited at a wavelength of about 365 nm, the first wavelength range may be preset to a range from about 340 nm to about 375 nm.

In an embodiment, the first wavelength range in which the identification material may be excited may include at least one of wavelength ranges including about 250 nm to about 260 nm, about 300 nm to about 340 nm, about 350 nm to about 390 nm, about 600 nm to about 900 nm, and about 930 nm to about 990 nm.

For example, when the first wavelength range includes a wavelength range of about 300 nm to about 340 nm, the controller may irradiate ultraviolet light of about 320 nm to the identification material of the aerosol generating article through the light emitting unit.

In another example, when the first wavelength range includes a wavelength range of about 340 nm to 375 nm, the controller may irradiate ultraviolet light of about 365 nm to the identification material of the aerosol generating article through the light emitting unit.

In another example, when the first wavelength range includes a wavelength range of about 930 nm to 990 nm, the controller may irradiate infrared light of about 980 nm to the identification material of the aerosol generating article through the light emitting unit.

Next, the controller may detect the light emitted from the identification material through the light receiving unit in operation S200.

In an embodiment, a wavelength of the light detected through the light receiving unit may correspond to a second wavelength range. In this case, the second wavelength range may mean a wavelength range of the light emitted from an identification material that is excited when light having the first wavelength range is irradiated. For example, an identification material may emit light in a range of about 1000 nm to about 1020 nm when excited at a wavelength of about 320 nm, and the controller may determine a wavelength range of about 1000 nm to about 1020 nm obtained through the light receiving unit as the second wavelength range of the light emitted from the identification material.

In an embodiment, the controller may detect the light emitted from the identification material by receiving an ADC value from the light receiving unit. In this case, as light is received from the identification material, the light receiving unit may obtain an analog signal, and the 'ADC value' may mean a digital value converted from the analog signal such that the controller may recognize the signal obtained by the light receiving unit. For example, based on the ADC value received from the light receiving unit, the controller may determine a wavelength range of the light emitted from the identification material.

Next, the controller may determine information of an aerosol generating article based on a sensing value sensed through the light receiving unit in operation S300. In this case, the information of an aerosol generating article may include the type of the aerosol generating article, whether the aerosol generating article is counterfeit, and so on.

In an embodiment, the controller may determine information of the aerosol generating article based on different sensing values sensed according to the type of an identification material.

For example, the identification material may include a first identification material that emits light having a wavelength of about 1012 nm and a second identification material that emits light having a wavelength of about 700 nm.

In this case, when the sensing value sensed through the light receiving unit corresponds to a wavelength value (about 1012 nm) emitted from the first identification material, the controller may determine that the aerosol generating article is a first type of aerosol generating article including the first identification material.

Alternatively, when the sensing value sensed through the light receiving unit corresponds to a wavelength value (about 700 nm) of the light emitted from the second identification material, the controller may determine that the aerosol generating article is a second type of aerosol generating article including the second identification material.

A difference between the wavelength value of the light emitted from the first identification material and the wavelength value of the light emitted from the second identification material may be about 15 nm or more. When the wavelength value of the light emitted from the first identification material and the wavelength value of the light emitted from the second identification material are less than about 15 nm, the accuracy that the controller distinguishes the type of identification material may be reduced. Here, the wavelength value of the light emitted from the first identification material and the wavelength value of the light emitted from the second identification material may each mean a dominant wavelength (DWL). For example, a difference between the wavelength value of the light emitted from the first identification material and the wavelength value of the light emitted from the second identification material may be about 30 nm or more, about 50 nm or more, or about 100 nm or more.

In an embodiment, the controller may determine information of the aerosol generating article based on different sensing values sensed depending on different concentrations of the identification material.

For example, the identification material may include the same type of material but may include a first-concentration identification material having a first concentration (for example, 20 %) and a second-concentration identification material having a second concentration (for example, 30 %).

In this case, when the sensing value sensed through the light receiving unit exceeds a first threshold value, the controller may determine that the aerosol generating article is an aerosol generating article of the first type including the first-concentration identification material.

Alternatively, when the sensing value sensed through the light receiving unit exceeds a second threshold value that is greater than the first threshold value, the controller may determine that the aerosol generating article is an aerosol generating article of the second type including the second-concentration identification material.

Next, the controller 110 may control power supply to a heater based on information of the aerosol generating article in operation S400.

In an embodiment, the controller may control the power supply to the heater based on the type of the aerosol generating article. For example, when the type of the aerosol generating article is determined to be the first type of aerosol generating article, the controller may control the power supply to the heater based on a first temperature profile preset for the first type of aerosol generating article. In another example, when it is determined that the type of the aerosol generating article is a second type of aerosol generating article, the controller may control the power supply to the heater based on a second temperature profile preset for the second type of aerosol generating article. In this case, the preset first temperature profile may be different from the preset second temperature profile.

In an embodiment, the controller may control the power supply to the heater based on whether the aerosol generating article is counterfeit. For example, when it is determined that the aerosol generating article is a genuine article, the controller may control the power supply to the heater based on the preset temperature profile for the aerosol generating article 5. In another example, when it is determined that the aerosol generating article is a counterfeit article, the controller may not supply power to the heater or may disconnect the power being supplied.

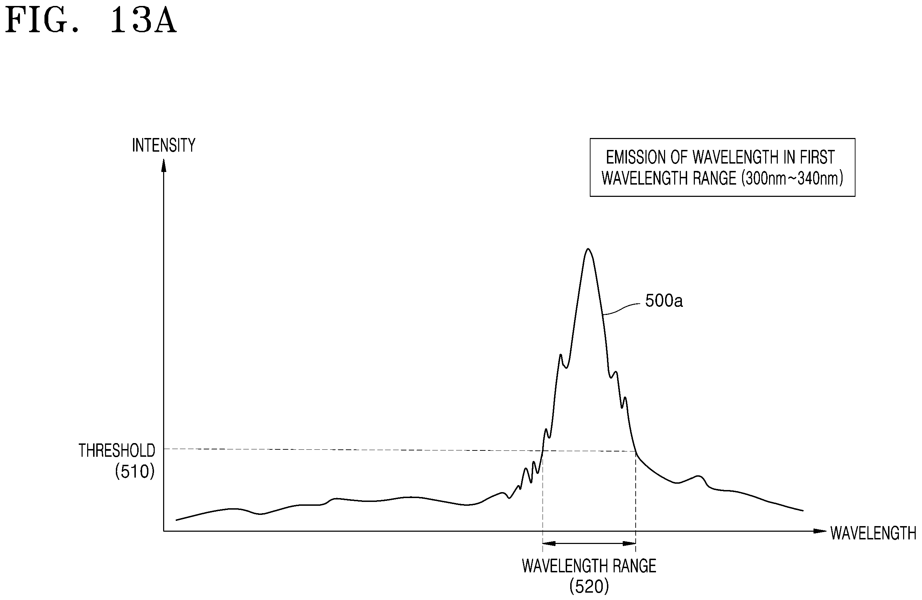

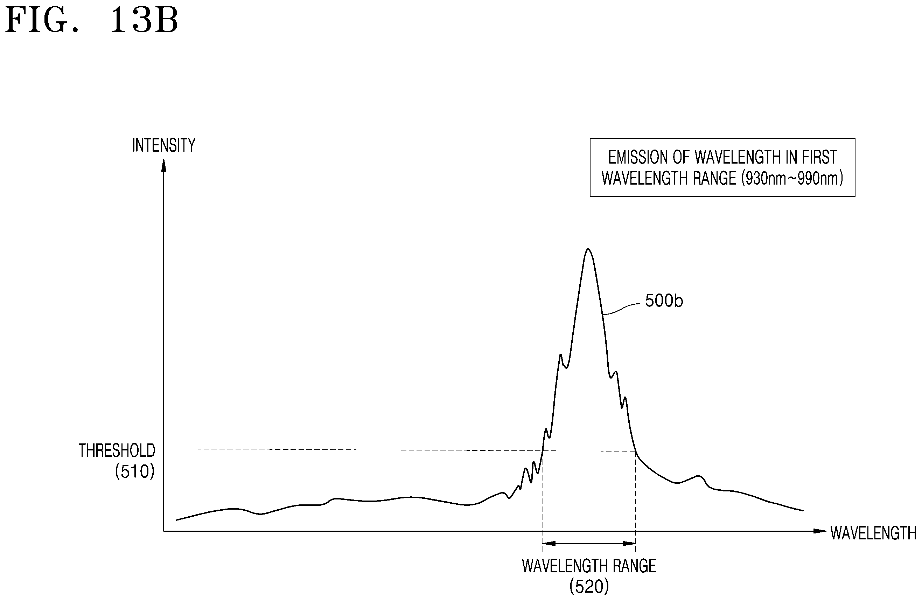

FIG. 13A is an example of a wavelength graph of the light emitted from a first identification material when the light having a wavelength in a first wavelength range is irradiated. FIG. 13B is an example of a wavelength graph of the light emitted from a second identification material when the light having the wavelength in the first wavelength range is irradiated.

Referring to FIG. 13A, a first identification material included in an aerosol generating article may emit light having a preset wavelength range due to light that has a first wavelength range and is emitted from a light emitting unit. In this case, the first wavelength range may be about 300 nm to about 340 nm.

In an embodiment, the controller of the aerosol generating device may determine a wavelength range 520 exceeding a threshold value 510 in a first graph 500a, which is a wavelength graph in which light is emitted from a first identification material, as a second wavelength range. For example, the controller may receive a sensing value corresponding to a wavelength range 520 through the light receiving unit, and the wavelength range 520, which is the second wavelength range, may be a wavelength range of about 1000 nm to about 1020 nm.

Referring to FIG. 13B, a second identification material included in an aerosol generating article may emit light having a preset wavelength range due to the light that has the first wavelength range and is emitted from the light emitting unit. In this case, the first wavelength range may be a wavelength range of about 930 nm to about 990 nm.

In an embodiment, the controller 110 of the aerosol generating device may determine the wavelength range 520 exceeding the threshold value 510 in a second graph 500b, which is a wavelength graph in which light is emitted from a second identification material, as a second wavelength range. For example, the controller may receive a sensing value corresponding to the wavelength range 520 through the light receiving unit, and the wavelength range 520, which is the second wavelength range, may be a wavelength range of about 1000 nm to about 1020 nm.

Although the first graph 500a of FIG. 13A and the second graph 500b of FIG. 13B are illustrated in the same form for the sake of convenience of description, embodiments are not limited thereto. For example, the first graph 500a of FIG. 13A and the second graph 500b of FIG. 13B may have similar wavelength ranges exceeding the threshold value 510 to some extent but may generally have different graph forms.

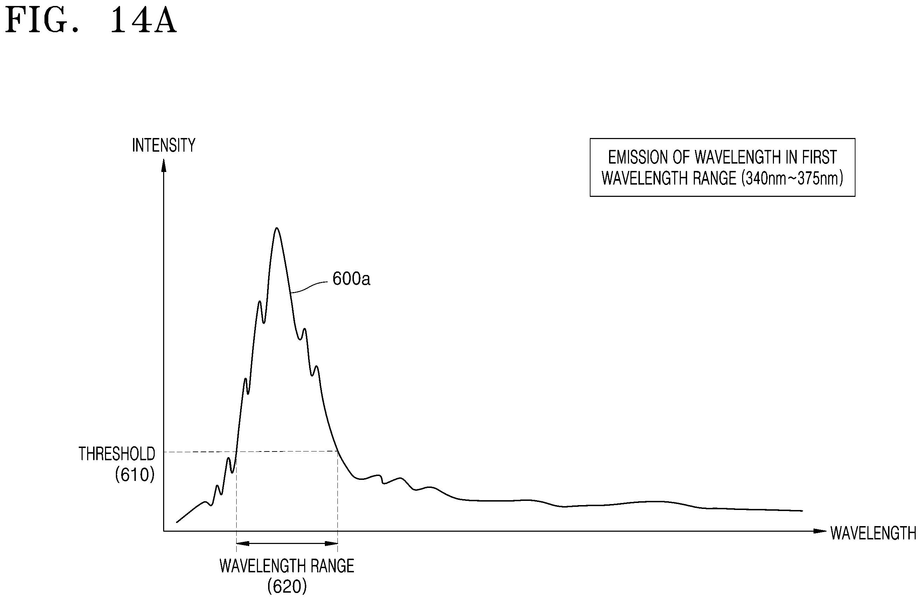

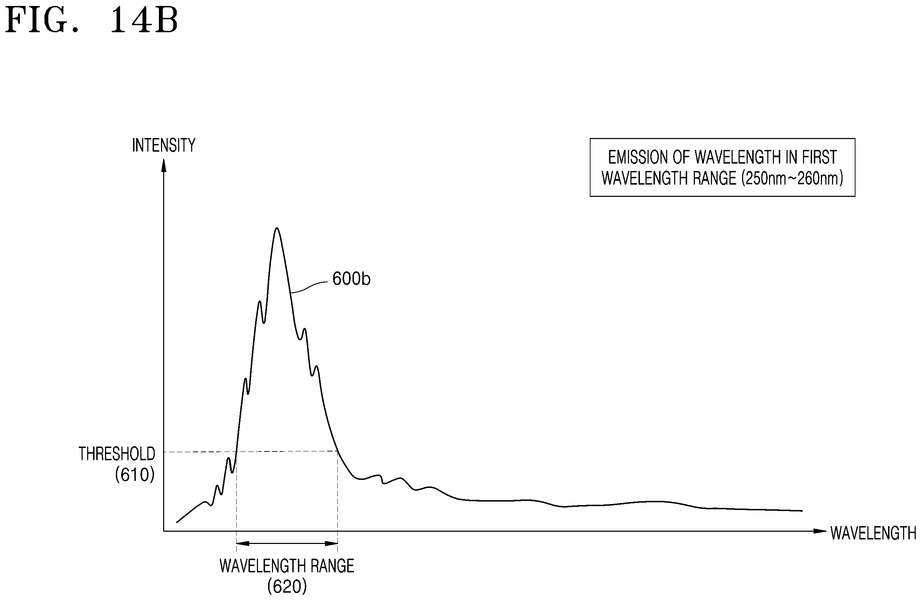

FIG. 14A is an example of a wavelength graph in which light is emitted from a third identification material when light having a wavelength in the first wavelength range is irradiated. FIG. 14B is an example of a wavelength graph in which light is emitted from a third identification material when light having a wavelength in the first wavelength range is irradiated.

Referring to FIG. 14A, the third identification material included in an aerosol generating article may emit light having a preset wavelength range due to the light that has the first wavelength range and is emitted from the light emitting unit. In this case, the first wavelength range may be about 340 nm to about 375 nm.

In an embodiment, the controller of the aerosol generating device may determine a wavelength range 620 exceeding a threshold value 610 in a third graph 600a, which is a wavelength graph in which light is emitted from a third identification material, as a second wavelength range. For example, the controller may receive a sensing value corresponding to the wavelength range 620 through the light receiving unit, and the wavelength range 620, which is a second wavelength range, may be part of a wavelength range of about 400 nm to about 750 nm.

For example, when the wavelength range 620 is about 450 nm to about 490 nm, the controller may determine that a sensing value sensed through the light receiving unit corresponds to 'blue' and may determine that an aerosol generating article in which an identification material is expressed as 'blue' is the first type of aerosol generating article.

In another example, when the wavelength range 620 is about 490 nm to about 570 nm, the controller may determine that the sensing value sensed through the light receiving unit corresponds to 'green' and may determine that the aerosol generating article in which the identification material is expressed as 'green' is the second type of aerosol generating article.

In another example, when the wavelength range 620 is about 630 nm to about 750 nm, the controller may determine that the sensing value sensed through the light receiving unit corresponds to 'red' and may determine that the aerosol generating article in which the identification material is expressed as 'red' is the third type of aerosol generating article.

Referring to FIG. 14B, the third identification material included in the aerosol generating article may emit light having a preset wavelength range due to the light that has a first wavelength range and is emitted from the light emitting unit. In this case, the first wavelength range may be about 250 nm to about 260 nm. That is, the third identification material may be excited in a wavelength range of about 350 nm to about 390 nm as well as a wavelength range of about 250 nm to about 260 nm.

In an embodiment, the controller of the aerosol generating device may determine the wavelength range 620 exceeding the threshold value 610 in a fourth graph 600b, which is a wavelength graph in which light is emitted from the third identification material, as a second wavelength range. For example, the controller may receive a sensing value corresponding to the wavelength range 620 through the light receiving unit, and the wavelength range 620, which is the second wavelength range, may be part of a wavelength range of about 400 nm to about 750 nm.

Although the third graph 600a of FIG. 14A and the fourth graph 600b of FIG. 14B are illustrated in the same form for the sake of convenience of description, embodiments are not limited thereto. For example, the third graph 600a of FIG. 14A and the fourth graph 600b of FIG. 14B may have similar wavelength ranges exceeding the threshold value 610 to some extent but may generally have different graph forms.

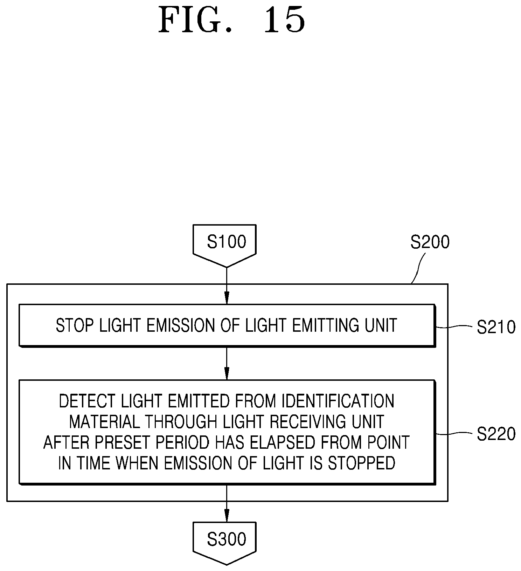

FIG. 15 is a flowchart of another specific example in which an aerosol generating system according to an embodiment determines information of an aerosol generating article. FIG. 15 is a flowchart specifically illustrating an operation of FIG. 12, and at least one of components of an aerosol generating system in describing the components with reference to FIG. 15 is identical or similar to the components described above, and accordingly, redundant descriptions thereof may be omitted.

Referring to FIG. 15, operation S200 may include operation S210 and operation S220.

First, a controller of an aerosol generating device may stop emission of light to an identification material through a light emitting unit in operation S210 after light is emitted to the identification material through the light emitting unit.

For example, when first time has elapsed from a point in time when light is emitted from the light emitting unit, a state of the identification material may change from a ground state to an excited state. In this case, the 'first time' may mean the time during which there is no further change in a state of a material after the identification material is excited by absorbing light. The controller may emit light to the identification material through a light emitting unit for the first time and may stop emission of light to the identification material through the light emitting unit when the first time has elapsed.

Next, the controller may detect the light emitted from the identification material through the light receiving unit after second time has elapsed from a point in time when emission of light of the light emitting unit to the identification material is stopped, in operation S220. In this case, the 'second time' may mean time that is taken for the light emitted from the light emitting unit to not be detected by the light receiving unit after emission of the light from the light emitting unit is stopped.

That is, the light receiving unit needs to mainly detect the light emitted from the identification material, but because the light emitted from the light emitting unit is detected together by the light receiving unit, some noise may be included in a sensing value.

However, the identification material according to the present disclosure may emit (that is, emit residual light) light for a preset time even when the light emitted from the light emitting unit is blocked. Therefore, in order for the light receiving unit to detect only the light emitted from the identification material, the controller may detect the light emitted from the identification material through the light receiving unit after second time has elapsed from a point in time when emission of the light of the light emitting unit is stopped.

In an embodiment, the controller may detect the light emitted from the identification material through the light receiving unit after time of about 200 µs to about 2000 µs has elapsed from a point in time when emission of the light from the light emitting unit to the identification material is stopped.

For example, when the identification material is a first type of material that emits light for a relatively long time even after the light emitted from the light emitting unit is blocked, or a material having a first concentration, the controller may detect the light emitted from the identification material through the light receiving unit after time of about 500 µs to about 2000 µs has elapsed.

In another example, when the identification material is a second type of material that emits light for a relatively short time after the light emitted from the light emitting unit is blocked, or is a material having a second concentration that is lower than the first concentration, the controller may detect the light emitted from the identification material through the light receiving unit after a time of about 200 µs to about 500 µs has elapsed.

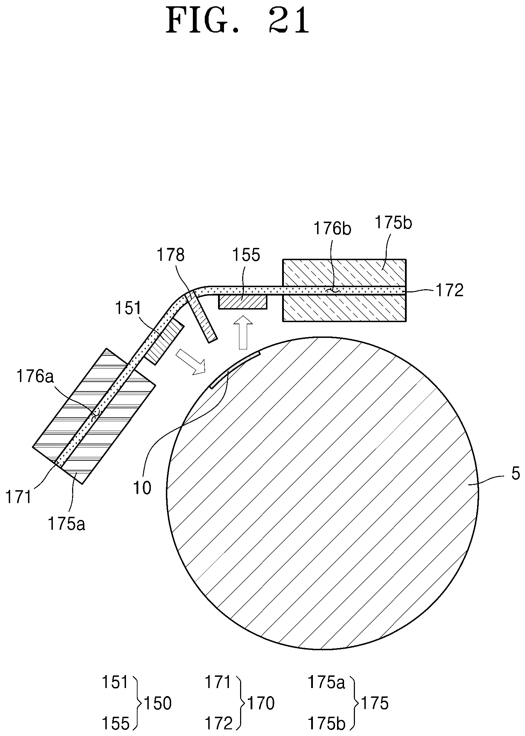

In addition, in another embodiment, while the light emitting unit may emit light, the light receiving unit may receive the light emitted from the identification material. Accordingly, the time for a sensor module to recognize the identification material may be reduced. However, because the light emitted from the light emitting unit is detected together with the light receiving unit, some noise may be included in a sensing value, and a specific structure for blocking the noise is described below with reference to FIG. 21 and FIGS. 27 to 29.

Hereinafter, various embodiments of a sensor module are described with reference to the attached drawings.

FIG. 16 is a schematic side view of an aerosol generating system including an example of a sensor module.

Referring to FIG. 16, an aerosol generating device 1 may include an aerosol generating device body 100, a controller 110, a battery 120, a memory 130, a heater 140, and a sensor module 150. At least one component (for example, the sensor module 150) among components of the aerosol generating system illustrated in FIG. 16 is identical or similar to at least one of the components of the aerosol generating system described above, and accordingly, redundant descriptions thereof are omitted below. Also, it is natural that some components and structures may be replaced, added, or omitted within a range easily understandable to those skilled in the art with reference to the drawings and descriptions below.

The sensor module 150 may be arranged to be movable in the aerosol generating device body 100 in a direction in which a cavity 100a extends. In this case, even when an identification material 10 is not located at a constant position in a length direction of an aerosol generating article 5, the sensor module 150 may recognize the identification material 10. Therefore, the degree of freedom of an operation of arranging the identification material 10 in the aerosol generating article 5 may be improved.

The sensor module 150 may be arranged to be movable by using a motor and gear but is not limited thereto. For example, the sensor module 150 may be moved under the control by the controller 110. in another example, the sensor module 150 may also be arranged to be movable based on a user's input signal.

Although not illustrated, the sensor module 150 may include a light emitting unit that emits light having a first wavelength to the identification material 10 and a light receiving unit that receives light which has a second wavelength and is emitted from the identification material 10.

FIG. 17 is a schematic side view of an aerosol generating system including a plurality of sensor modules.

Referring to FIG. 17, an aerosol generating device 1 may include an aerosol generating device body 100, a controller 110, a battery 120, a memory 130, a heater 140, and a sensor module 150. At least one component (for example, the sensor module 150) among components of the aerosol generating system illustrated in FIG. 17 is identical or similar to at least one of the components of the aerosol generating system described above, and accordingly, redundant descriptions thereof are omitted below. Also, it is obvious natural that some components and structures may be replaced, added, or omitted within a range easily understandable to those skilled in the art with reference to the drawings and descriptions below.

The sensor module 150 may include a first sensor module 150a and a second sensor module 150b that respectively identify a first identification material 10a and a second identification material 10b of an aerosol generating article 5. The aerosol generating article 5 illustrated in FIG. 17 may be identical to the aerosol generating article 5 illustrated in FIG. 5D.

In an embodiment, the first identification material 10a may be used to determine whether the aerosol generating article 5 is accommodated in a cavity 100a. Also, the second identification material 10b may be used to determine the type of the aerosol generating article 5.

Although not illustrated, the first sensor module 150a may include a light emitting unit that emits light having a first wavelength to the first identification material 10a and a light receiving unit that receives light which has a second wavelength and is emitted from the first identification material 10a. The first sensor module 150a may be arranged in the aerosol generating device body 100 to be located at a corresponding position of the first identification material 10a.

Also, the second sensor module 150b may include a light emitting unit that emits light having a first wavelength to the second identification material 10b and a light receiving unit that receives light which has a second wavelength and is emitted from the second identification material 10b. The second sensor module 150b may be arranged in the aerosol generating device body 100 to be located at a corresponding position of the second identification material 10b.

A second wavelength range of the light emitted from the first identification material 10a may be different from a second wavelength range of the light emitted from the second identification material 10b. For example, the second wavelength range of the light emitted from the first identification material 10a may be a wavelength range of 1000 nm to 1020 nm, and the second wavelength range of the light emitted from the second identification material 10b may be a wavelength range of 400 nm to 750 nm.

In an embodiment, when the first sensor module 150a receives light having a second wavelength of the light emitted from the first identification material 10a, a controller may determine that the aerosol generating article 5 is accommodated in the cavity 100a. Accordingly, the controller may activate a component (for example, heater 140) of the aerosol generating device 1.

Also, as the second sensor module 150b receives the light having the second wavelength emitted from the second identification material 10b, the controller may determine the type of the aerosol generating article 5 or whether the aerosol generating article 5 is counterfeit. Accordingly, the controller may control the power supply to a component (for example, the heater 140) of the aerosol generating device 1 based on information of the aerosol generating article 5.

According to an embodiment, because the first sensor module 150a and the second sensor module 150b separately recognize the first identification material 10a and the second identification material 10b, it is possible to more accurately determine whether the aerosol generating article 5 is inserted and the type of the aerosol generating article 5.

In an embodiment, as the first sensor module 150a receives the light having the second wavelength emitted from the first identification material 10a, the controller may control the second sensor module 150b to receive light, which has a second wavelength and is emitted from the second identification material 10b, after a component (for example, the heater 140) of the aerosol generating device 1 is activated. That is, an operation of the second sensor module 150b may be performed when the first sensor module 150a determines that the aerosol generating article 5 is accommodated in a cavity 100a, and may not be performed in other cases. That is, because the operation of the second sensor module 150b is selectively performed, the power consumed by the second sensor module 150b may be reduced.

Either the first sensor module 150a or the second sensor module 150b may be arranged to be movable in a direction in which the cavity 100a extends.

According to another embodiment, either the first sensor module 150a or the second sensor module 150b may be omitted. In this case, the sensor module 150 may be arranged to be movable in the aerosol generating device body 100 in the direction in which the cavity 100a extends. Accordingly, even when multiple identification materials 10 are arranged in the aerosol generating article 5, the multiple identification materials 10 may be recognized by one sensor module 150, and thus, a simple sensor module structure may be provided.

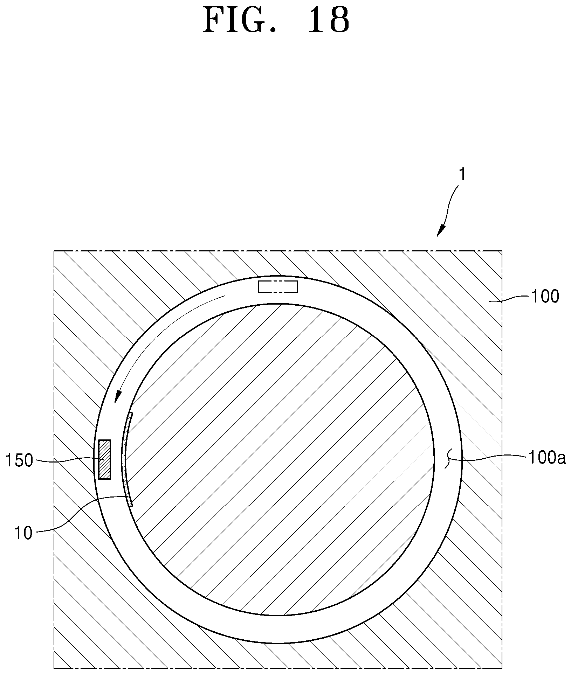

FIG. 18 is a schematic cross-sectional plan view of an aerosol generating system including another example of a sensor module.

Referring to FIG. 18, an aerosol generating device 1 may include an aerosol generating device body 100 and a sensor module 150. At least one component (for example, the sensor module 150) among components of the aerosol generating system illustrated in FIG. 18 is identical or similar to at least one of the components of the aerosol generating system described above, and accordingly, redundant descriptions thereof are omitted below. Also, it is natural that some components and structures may be replaced, added, or omitted within a range easily understandable to those skilled in the art with reference to the drawings and descriptions below.

The sensor module 150 may be arranged to be movable in the aerosol generating device body 100 in a circumferential direction of a cavity 100a. In this case, even when an identification material 10 is not located at the same position in the circumferential direction of the aerosol generating article 5, the sensor module 150 may recognize the identification material 10 by moving. Therefore, the degree of freedom of an operation of arranging the identification material 10 in the aerosol generating article 5 may be improved.

Also, regardless of a direction in which the aerosol generating article 5 is inserted into the cavity 100a, the sensor module 150 may move to a position corresponding to the identification material 10 and recognize the identification material 10, and thus, usability of the aerosol generating device 1 may be improved.

Also, even when the identification material 10 is arranged only in one region in the circumferential direction of the aerosol generating article 5, the sensor module 150 may move and recognize the identification material 10, and thus, the used amount of the identification material 10 may be reduced.

The sensor module 150 may be arranged to be movable by using a motor and gear but is not limited thereto. For example, the sensor module 150 may be moved under the control by the controller 110. In another example, the sensor module 150 may be arranged to be movable based on a user's input signal.

Although not illustrated, the sensor module 150 may include a light emitting unit that emits light having a first wavelength to the identification material 10 and a light receiving unit that receives light which has a second wavelength and is emitted from the identification material 10.

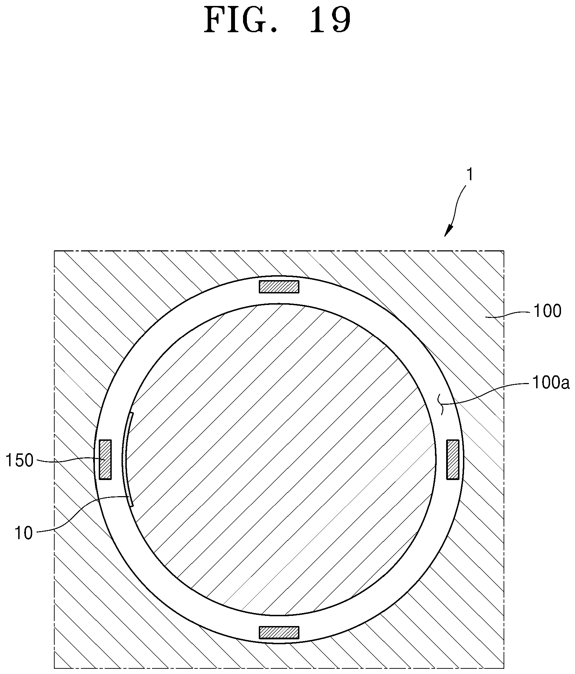

FIG. 19 is a schematic cross-sectional plan view of an aerosol generating system including a plurality of sensor modules.

Referring to FIG. 19, an aerosol generating device 1 may include an aerosol generating device body 100 and a sensor module 150. At least one component (for example, the sensor module 150) among components of the aerosol generating system illustrated in FIG. 19 is identical or similar to at least one of the components of the aerosol generating system described above, and accordingly, redundant description thereof are omitted below. Also, it is natural that some components and structures may be replaced, added, or omitted within a range easily understandable to those skilled in the art with reference to the drawings and descriptions below.

A plurality of sensor modules 150 may be arranged in a circumferential direction of a cavity 100a. In this case, even when an identification material 10 is not located at the same position in the circumferential direction of the aerosol generating article 5, the sensor module 150 may recognize the identification material 10. Therefore, the degree of freedom of an operation of arranging the identification material 10 in the aerosol generating article 5 may be improved.

Also, regardless of a direction in which the aerosol generating article 5 is inserted into the cavity 100a, the sensor modules 150 arranged in the circumferential direction of the cavity 100a may recognize the identification material 10, and thus, usability of the aerosol generating device 1 may be improved.

Also, even when the identification material 10 is arranged only in one region in the circumference of the aerosol generating article 5, the sensor modules 150 may recognize the identification material 10, and thus, the amount of the identification material 10 may be reduced.

Although not illustrated, the plurality of sensor modules 150 may each include a light emitting unit that emits light having a first wavelength to the identification material 10 and a light receiving unit that receives light which has a second wavelength and is emitted from the identification material 10.

Although four sensor modules 150 are illustrated in FIG. 19, the number of sensor modules 150 is not limited thereto.

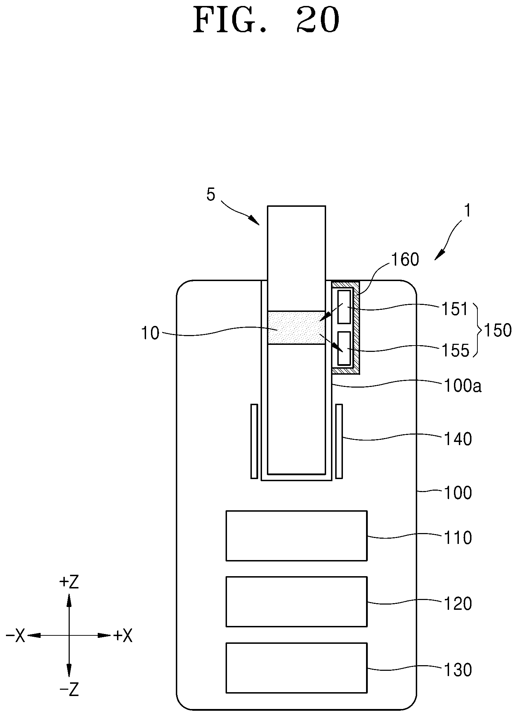

FIG. 20 is a schematic side view of an aerosol generating system including a shielding portion.

Referring to FIG. 20, an aerosol generating device 1 may include an aerosol generating device body 100, a controller 110, a battery 120, a memory 130, a heater 140, a sensor module 150, and a shielding portion 160. At least one component (for example, the sensor module 150) among components of the aerosol generating system illustrated in FIG. 20 is identical or similar to at least one of the components of the aerosol generating system described above, and accordingly, redundant descriptions thereof are omitted below. Also, it is natural that some components and structures may be replaced, added, or omitted within a range easily understandable to those skilled in the art with reference to the drawings and descriptions below.

The shielding portion 160 may perform a function of blocking an electric field/magnetic field signal generated from the outside of the aerosol generating device 1. Accordingly, the sensor module 150 may accurately recognize an identification material 10 without noise from the outside of the aerosol generating device 1.

In an embodiment, the shielding portion 160 may reduce electric/magnetic field signals generated from the outside of the aerosol generating device 1 by more than 90 %. The shielding portion 160 may absorb or reflect the electric/magnetic field signals.

The shielding portion 160 may include an electrically conductive material or a thermally conductive material. For example, the shielding portion 160 may include at least one of an aluminum material and a stainless steel material.

The shielding portion 160 may be arranged to surround the sensor module 150. The shielding portion 160 may include a first portion covering an upper portion (for example, a portion facing the +z direction) of the sensor module 150, a second portion covering a lower portion (for example, a portion facing the -z direction) of the sensor module 150, and a third portion connecting the first portion to the second portion and covering a side surface (for example, a portion facing the +x direction) of the sensor module 150.

Although FIG. 20 illustrates an embodiment in which the first portion of the shielding portion 160 is located above a light emitting unit 151 and the second portion of the shielding portion 160 is located below a light receiving unit 155, embodiments are not limited thereto. That is, positions of the light emitting unit 151 and the light receiving unit 155 may be changed, and in this case, the first portion of the shielding portion 160 may be located above the light receiving unit 155 and the second portion of the shielding portion 160 may be located below the light emitting unit 151.

FIG. 21 is a schematic plan cross-sectional plan view of an aerosol generating system including a support unit, a fixed unit, and a partition wall.

Referring to FIG. 21, an aerosol generating device 1 may include a sensor module 150, a sensor support unit 170, a fixed unit 175, and a partition wall 178. At least one component (for example, the sensor module 150) among components of the aerosol generation system illustrated in FIG. 21 is identical or similar to at least one of the components of the aerosol generation system described above, and accordingly, redundant descriptions thereof are omitted below. Also, it is natural that some components and structures may be replaced, added, or omitted within a range easily understandable to those skilled in the art with reference to the drawings and descriptions below. For example, the sensor module 150 illustrated in FIG. 21 may be arranged to be movable in a direction in which a cavity extends, or may be arranged to be movable in a circumferential direction of the cavity. Also, the shielding portion in FIG. 20 may be arranged on the outside of the sensor module 150 in FIG. 21.

According to an embodiment, a light emitting unit 151 and a light receiving unit 155 are arranged to form a preset angle, and accordingly, the light emitting unit 151 may emit light while the light receiving unit 155 may receive the light emitted from an identification material 10. This is because a path of the light having a first wavelength and a path of the light having a second wavelength do not overlap each other and are misaligned by forming a preset angle. Accordingly, the time for the sensor module 150 to recognize the identification material 10 may be reduced.

The sensor support unit 170 may support the light emitting unit 151 and the light receiving unit 155. The sensor support unit 170 may be fixed to a main body of the aerosol generating device. The sensor support unit 170 may include a light emitting support unit 171 that supports the light emitting unit 151 and a light receiving support unit 172 that supports the light receiving unit 155. The light emitting support unit 171 may be connected to the light receiving support unit 172 at a preset angle. Although FIG. 21 illustrates an example in which the light emitting support unit 171 and the light receiving support unit 172 are connected to each other at an obtuse angle, embodiments are not limited thereto. That is, the light emitting support unit 171 may be connected to the light receiving support unit 172 at an acute angle or a right angle. The light emitting support unit 171 may be formed integrally with the light receiving support unit 172.

In an embodiment, the sensor support unit 170 may be a printed circuit board (PCB) or a flexible printed circuit board (FPCB).

The fixed unit 175 may perform a function of fixing the sensor support unit 170 to the aerosol generating device body (not illustrated in FIG. 21). The fixed unit 175 may include a first fixed portion 175a that fixes the light emitting support unit 171 and a second fixed portion 175b that fixes the light receiving support unit 172. For example, the light emitting support unit 171 may be inserted into and fixed to a first fixed groove 176a formed in the first fixed portion 175a, and the light receiving support unit 172 may be inserted into and fixed to a second fixed groove 176b formed in the second fixed portion 175b.

The partition wall 178 may be arranged between the light emitting unit 151 and the light receiving unit 155. The partition wall 178 may perform a function of preventing the light receiving unit 155 from directly sensing the light emitted from the light emitting unit 151 such that the light receiving unit 155 may mainly detect the light emitted from an identification material 10. Even when the light emitting unit 151 emits light while the light receiving unit 155 receives the light emitted from the identification material 10, the light receiving unit 155 may relatively accurately recognize the light emitted from the identification material 10 without noise by the partition wall 178.

The partition wall 178 may extend from the sensor support unit 170 toward the cavity. The partition wall 178 may extend from the sensor support unit 170 toward the cavity to protrude further than the sensor module 150. The partition wall 178 may include an electrically conductive material. For example, the partition wall 178 may include at least one of an aluminum material or a stainless steel material.

Although FIG. 21 illustrates that one light emitting unit 151 and one light receiving unit 155 are arranged at a preset angle, this is an example. That is, the light emitting unit 151 and the light receiving unit 155 included in each of two sensor modules 150 arranged in a longitudinal direction of the aerosol generating article 5 may also be arranged at a preset angle.

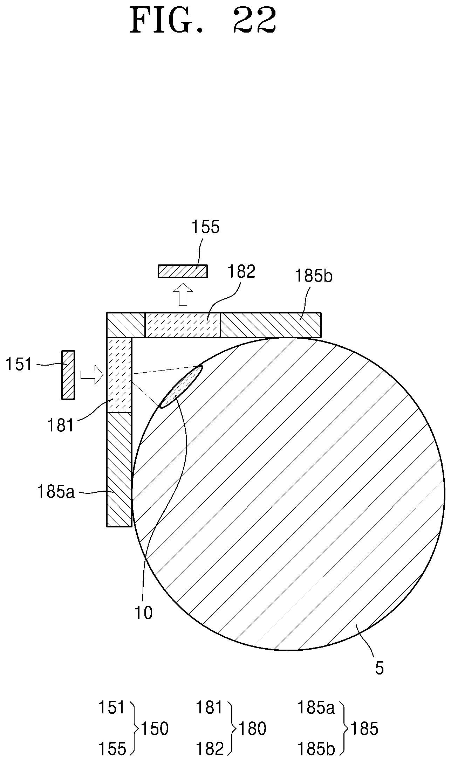

FIG. 22 is a schematic cross-sectional plan view of an aerosol generating system including a lens.

Referring to FIG. 22, an aerosol generating device 1 may include a sensor module 150, a lens 180, and a lens support unit 185. At least one component (for example, the sensor module 150) among components of the aerosol generating system illustrated in FIG. 22 is identical or similar to at least one of the components of the aerosol generating system described above, and accordingly, redundant descriptions thereof are omitted below. Also, it is natural that some components and structures (for example, a bulkhead in FIG. 21) may be replaced, added, or omitted within a range easily understandable to those skilled in the art with reference to the drawings and descriptions below. For example, the sensor module 150 illustrated in FIG. 22 may be arranged to be movable in a direction in which a cavity extends, or may be arranged to be movable in a circumferential direction of the cavity. Also, the shielding portion in FIG. 20 may be arranged on the outside of the sensor module 150 in FIG. 22.

According to an embodiment, a light emitting unit 151 and a light receiving unit 155 are arranged to form a preset angle, and accordingly, while the light emitting unit 151 emits light, the light receiving unit 155 may receive the light emitted from an identification material 10. This is because a path of the light having a first wavelength and a path of the light having a second wavelength do not overlap each other and are misaligned by forming a preset angle. Accordingly, the time for the sensor module 150 to recognize the identification material 10 may be reduced.

Although FIG. 22 illustrates an example in which the light emitting unit 151 is connected to the light receiving unit 155 at a right angle, embodiments are not limited thereto. That is, the light emitting unit 151 may be connected to the light receiving unit 155 at an acute angle or an obtuse angle.

The lens 180 may be arranged at an adjacent position to the sensor module 150. The lens 180 may be arranged between the sensor module 150 and the cavity. Light having a first wavelength emitted from the light emitting unit 151 and light having a second wavelength emitted from the identification material 10 may pass through the lens 180. For example, the lens 180 may be either a concave lens or a convex lens.

The lens 180 may include a first lens 181 and a second lens 182.

The first lens 181 may cause the light emitted from the light emitting unit 151 to be focused onto an identification material 10 of an aerosol generating article 5. A size of the first lens 181 may be greater than a size of the light emitting unit 151. Accordingly, the first lens 181 may increase the amount of light having the first wavelength and reaching the identification material 10.

The second lens 182 may cause the light emitted from the identification material 10 to be focused onto the light receiving unit 155. A size of the second lens 182 may be greater than a size of the light receiving unit 155. Accordingly, the second lens 182 may increase the amount of light having a second wavelength and reaching the light receiving unit 155.

The first lens 181 and the second lens 182 may transmit a wavelength in a certain range and absorb a wavelength in a certain range. The wavelength in a certain range transmitting through the first lens 181 may be in the range of the first wavelength described above, and the wavelength in a certain range absorbed by the first lens 181 may be a wavelength other than the first wavelength. Also, the wavelength in a certain range transmitting through the second lens 182 may be in the range of the second wavelength described above, and the wavelength in a certain range absorbed by the second lens 182 may be a wavelength other than the second wavelength.

According to an embodiment, the first lens 181 and the second lens 182 may each transmit a wavelength in a certain range therethrough, and by filtering out the wavelength in a certain range, noise may be removed, and thus, recognition accuracy of the sensor module 150 may be improved.

The lens support unit 185 may support the lens 180. The lens support unit 185 may include a first lens support unit 185a that supports the first lens 181 and a second lens support unit 185b that supports the second lens 182. The first lens support unit 185a may be connected to the second lens support unit 185b at a preset angle. Although FIG. 22 illustrates an example in which the first lens support unit 185a is connected to the second lens support unit 185b at a right angle, embodiments are not limited thereto. That is, the first lens support unit 185a may also be connected to the second lens support unit 185b at an acute angle or an obtuse angle. The first lens support unit 185a may be formed integrally with the second lens support unit 185b.

The lens support unit 185 may include a resin. For example, the lens support unit 185 may include polystyrene, polypropylene, or polyethylene.

The lens 180 may be coupled to the lens support unit 185 by being inserted into the lens support unit 185, but the coupling method is not limited thereto.

Although FIG. 22 illustrates that one light emitting unit 151 and one light receiving unit 155 are arranged at a preset angle, this is an example. That is, the light emitting unit 151 and the light receiving unit 155 in each of two sensor modules 150 arranged in a length direction of the aerosol generating article 5 may also be arranged at a preset angle.

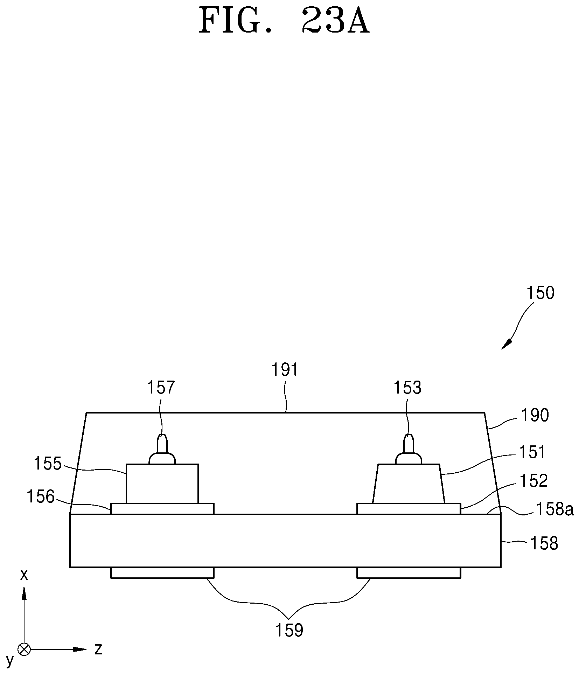

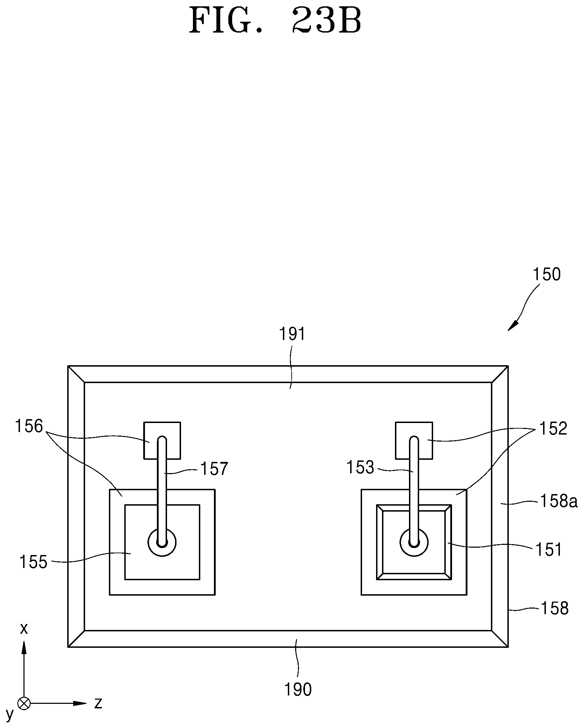

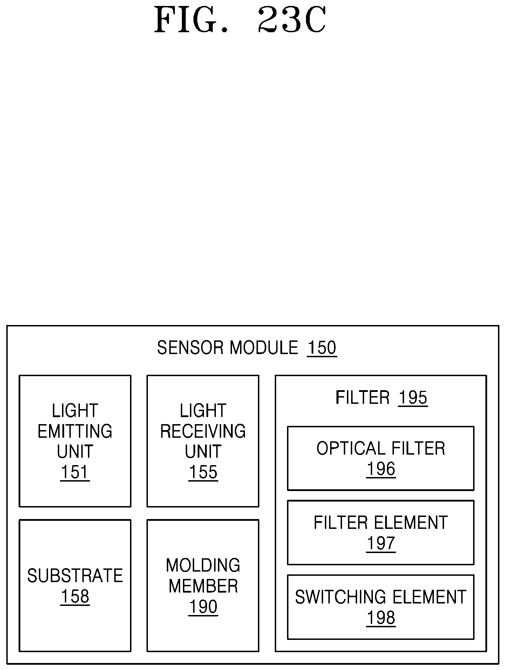

FIG. 23A is a side view of a sensor module 150 according to an embodiment, FIG. 23B is a plan view of the sensor module 150 according to the embodiment, and FIG. 23C is a block diagram of the sensor module 150 according to the embodiment.

Referring to FIGS. 23A, 23B, and 23C, the sensor module 150 according to the embodiment may include a light emitting unit 151, a light receiving unit 155, a substrate 158, a molding member 190, and a filter 195.

At least one component (for example, the light emitting unit 151) among the components of the sensor module 150 is identical or similar to at least one of the components of the sensor module described above, and accordingly, redundant descriptions thereof are omitted below. Also, it is obvious in the sensor module 150 that some components and structures may be replaced, added, or omitted within a range easily understandable to those skilled in the art with reference to the drawings and descriptions below.

In an embodiment, the substrate 158 may include a substrate surface 158a and a substrate terminal 159. The substrate surface 158a may be one surface (for example, a surface in the +x direction) of the substrate 158 on which a device or chip is placed. The substrate terminal 159 may be arranged on a surface (for example, a surface in the -x direction) opposite to the substrate surface 158a.

In an embodiment, the substrate surface 158a may be a surface facing a detection target (for example, an aerosol generating article or cartridge) of the sensor module 150. The substrate terminal 159 may be electrically and/or physically connected to an aerosol generating device.

The sensor module 150 may further include a first element 152, a first conductive member 153, a second element 156, and a second conductive member 157.

In an embodiment, the first element 152 and the second element 156 may be provided on the substrate surface 158a. The first element 152 may be connected to the light emitting unit 151. The second element 156 may be connected to the light receiving unit 155.

In an embodiment, the first conductive member 153 may electrically connect the first element 152 to the light emitting unit 151. The second conductive member 157 may electrically connect the second element 156 to the light receiving unit 155.

For example, the first element 152 may include two terminals including a negative terminal and a positive terminal. The light emitting unit 151 may be directly coupled to either of the two terminals of the first element 152. The first conductive member 153 may connect the light emitting unit 151 to the other one of the two terminals.

For example, the second element 156 may include two terminals (for example, a negative terminal and a positive terminal). The light receiving unit 155 may be directly coupled to either of the two terminals of the second element 156. The second conductive member 157 may connect the light receiving unit 155 to the other one of the two terminals.

In an embodiment, the first element 152 and the second element 156 may be arranged adjacent to each other on the substrate surface 158a in one direction (for example, the z-axis direction). Also, the light emitting unit 151 and the light receiving unit 155 may be arranged adjacent to each other on the substrate surface 158a. In addition, arrangement directions of the light emitting unit 151 and the light receiving unit 155 are not limited to the directions illustrated in FIGS. 23A and 23B. That is, the light emitting unit 151 may be arranged to be separated from the light receiving unit 155 in the x-axis direction or the y-axis direction.

In an embodiment, the sensor module 150 may be implemented in a package form by arranging the light emitting unit 151 and the light receiving unit 155 on the substrate surface 158a of one substrate 158. The sensor module 150 having the package form may be advantageous for miniaturization and may provide space efficiency of an aerosol generating device.

In an embodiment, the molding member 190 may be arranged on the substrate surface 158a. The molding member 190 may protect the substrate surface 158a and other components mounted on the substrate surface 158a. The molding member 190 may be formed of a non-conductive material. The molding member 190 may reduce or prevent an electrical short-circuit or an unnecessary short-circuit of the substrate surface 158a and other components mounted on the substrate surface 158a.

In an embodiment, the molding member 190 may include a base region 191. The base region 191 may surround the light emitting unit 151 and the light receiving unit 155 on the substrate surface 158a.

In an embodiment, the molding member 190 may be formed of a light-transmitting material. The molding member 190 may guide the light emitted from the light emitting unit 151 through the base region 191 to be transferred to a detection target of the sensor module 150.

In an embodiment, the base region 191 may be formed as a single body which connects a region surrounding the light emitting unit 151 to a region surrounding the light receiving unit 155. The base region 191 may be substantially and uniformly applied on the substrate surface 158a and cured. The base region 191 formed of a single body may provide efficiency in manufacturing the sensor module 150.

In the present disclosure, "substantially", "approximately ", or about" may mean the same level by reflecting tolerance or error in a general manufacturing process. Alternatively, "substantially" may refer to a range including any one of +/-0.1 %, +/-0.5 %, +/-1 %, +/-3 %, +/-5 %, +/-7 %, +/-10 %, +/-15 %, and +/-20 % based on the literally equivalent 0 %.

In an embodiment, the filter 195 may filter out at least part of the light received by the light receiving unit 155. For example, the filter 195 may filter out the light having a first wavelength among the lights received by the light receiving unit 155. Alternatively, for example, the filter 195 may filter out the light in a portion including the light having a first wavelength among the lights received by the light receiving unit 155.

In an embodiment, a controller may recognize identification information on an aerosol generating article or cartridge based on the amount of light filtered out by the filter 195 by executing the commands stored in a memory.

In an embodiment, the filter 195 may improve the identification accuracy of the sensor module 150 by blocking the light having a first wavelength transferred to the light receiving unit 155. Also, in an embodiment, the sensor module 150 including the filter 195 may provide ease of design of at least one controller and/or memory.

When the light receiving unit 155 receives the light having a first wavelength, at least one controller and/or memory may need to select the light having a second wavelength among the lights received by the light receiving unit 155, or ignore or block the light having the first wavelength. The controller and/or memory may require an additional configuration or operation in a circuit (or operationally, programmatically, or in a different manner), and as a result, a design difficulty level may be increased.

In an aerosol generating device according to an embodiment, as the filter 195 blocks the light having a first wavelength from the sensor module 150, the filter 195 may have an advantage in which identification accuracy may be provided and a design difficulty level of the controller and/or memory may be reduced.

In an embodiment, the filter 195 may include at least some of an optical filter 196, a filter element 197, and a switching element 198. Hereinafter, a filtering method and a configuration of the filter 195 are described by way of example with reference to FIG. 23C. However, the method and the configuration of the filter 195 described below are merely examples, and the filter 195 may filter out the light received by the light receiving unit 155 in various ways and configurations.

In an embodiment, the optical filter 196 may reflect (or absorb) the light having a first wavelength. The optical filter 196 may be arranged to physically surround at least part of the light receiving unit 155. The optical filter 196 may be arranged on an outer surface of the light receiving unit 155. Alternatively, the optical filter 196 may also be arranged in the molding member 190. The optical filter 196 may have an advantage in design difficulty level of the filter 195 by physically or structurally blocking the light having a first wavelength.

In an embodiment, the filter element 197 may controllably filter a detection result of the sensor module 150. The filter element 197 may be controllably connected to the light receiving unit 155. For example, the filter element 197 may be implemented as a wafer filter.

In an embodiment, the filter element 197 may remove noise in the light having a first wavelength among the lights received by the light receiving unit 155. The filter element 197 may be arranged in the light receiving unit 155 or on the substrate 158. For example, the filter element 197 may be a part of the second element 156 or the substrate 158.

In an embodiment, the switching element 198 may controllably filter a detection result of the sensor module 150. The switching element 198 may be controllably connected to the light emitting unit 151 and/or the light receiving unit 155. For example, the switching element 198 may be implemented as a wafer filter.

In an embodiment, the switching element 198 may block the light emitted from the light emitting unit 151 while the light receiving unit 155 receives light. The switching element 198 may be arranged in the light emitting unit 151 or on the substrate 158.

For example, the filter element 197 may be a part of the first element 152 or the substrate 158.

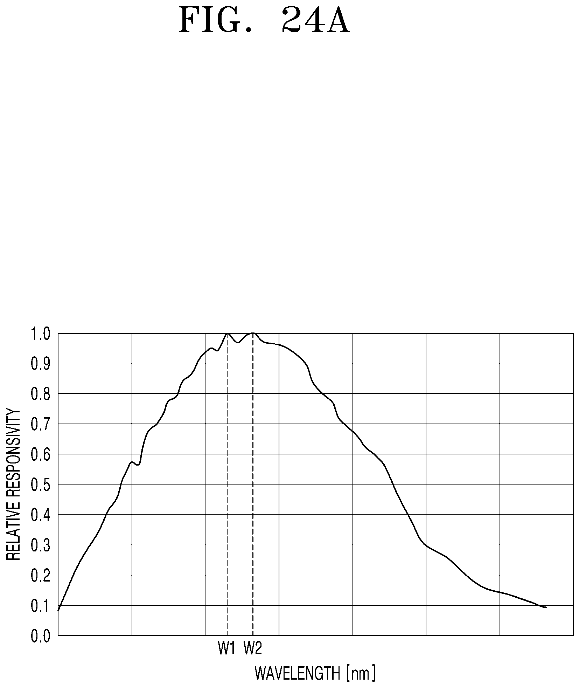

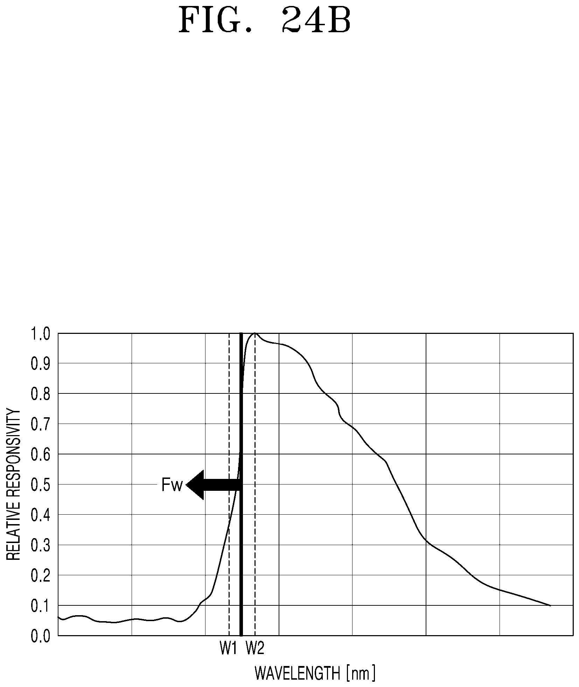

FIGS. 24A and 24B are graphs illustrating detection results of a sensor module according to an embodiment. Specifically, FIGS. 24A and 24B are graphs illustrating relative responsivity according to a wavelength of light received by a light receiving unit when a light emitting unit of a sensor module emits light having a first wavelength W1.

In describing FIGS. 24A and 24B, at least one component among components of an aerosol generating system is identical or similar to the at least one component described above, and accordingly, redundant descriptions thereof are omitted.

For example, FIG. 24A may be relative responsivity according to a wavelength of the light received by a sensor module before being filtered by a filter (for example, the filter in FIG. 23C). Alternatively, FIG. 24A may be relative responsivity according to a wavelength of the light received by a sensor module when the sensor module does not include a filter. The relative responsivity may be a parameter that relatively displays light of adjacent wavelength on the basis (1.0) of a wavelength of the largest amount of light among lights received by the light receiving unit.

For example, FIG. 24B may be relative responsivity according to a wavelength of the light received by a sensor module after being filtered by a filter. Alternatively, FIG. 24B may be a relative responsivity according to a wavelength of the light received by a sensor module when the sensor module includes a filter.

In an embodiment, the light having the first wavelength W1 emitted from a light emitting unit may substantially mean the light having a wavelength that mainly includes the light having the first wavelength W1. For example, the first wavelength W1 may be between 960 nm and 990 nm.

Referring to FIG. 24A, when the light emitting unit emits light having the first wavelength W1, it may be seen that the amount of light having the first wavelength W1 is the greatest, and that the amount of light having the wavelength substantially (or approximately) decreases as the wavelength moves away from the first wavelength W1.

In an embodiment, the light having the first wavelength W1 is excited by an identification material of an aerosol generating article or an identification material of a cartridge, and the identification material may emit the light having a second wavelength W2 that is different from the first wavelength W1.

In an embodiment, the light having the second wavelength W2 emitted from the identification material may substantially mean the light having a wavelength that mainly includes the light having the second wavelength W2. For example, the second wavelength W2 may be between 1000 nm and 1020 nm.

Referring to FIGS. 24A and 24B, when an identification material emits the light having the second wavelength W2, it may be seen that the amount of light having the second wavelength W2 is the greatest, and that the amount of light having the wavelength substantially (or approximately) decreases as a wavelength moves away from the second wavelength W2.

In an embodiment, a filter may filter out wavelengths in a first filtering range Fw. The first filtering range Fw may include the first wavelength W1 from a reference wavelength between the first wavelength W1 and the second wavelength W2. For example, the first filtering range Fw may be less than 1000 nm.

In an embodiment, a controller may recognize identification information on an aerosol generating article based on the amount of the light having the second wavelength W2 outside the first filtering range Fw by executing commands stored in the memory.

In an embodiment, when a difference between the first wavelength W1 and the second wavelength W2 is not larger, for example, when both the light having the first wavelength W1 and the light having the second wavelength W2 are infrared lights, a controller may have difficulty in recognizing identification information based on the amount of light having the second wavelength W2, and there is a possibility that an error may occur in an identification result or the accuracy may be reduced. According to an embodiment, a sensor module may reduce or remove an error in the identification result and improve the identification accuracy by physically blocking or controllably noise-processing the first filtering range Fw including the light having the first wavelength W1 through a filter.

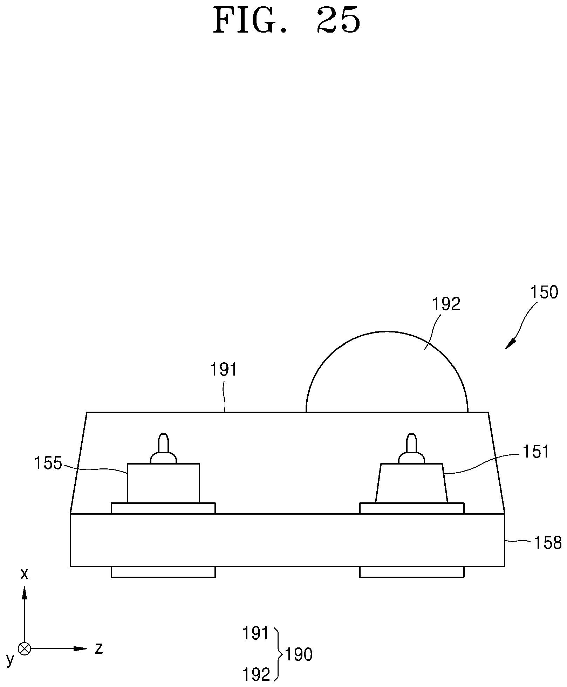

FIG. 25 is a side view of a sensor module 150 according to an embodiment.

Referring to FIG. 25, a sensor module 150 may include a light emitting unit 151, a light receiving unit 155, a substrate 158, a molding member 190, and a first dome-shaped molding region 192.

At least one component (for example, the light emitting unit 151) among components of the sensor module 150 is identical or similar to at least one of the components of the sensor module described above, and accordingly, redundant descriptions thereof are omitted below. Also, it is obvious in the sensor module 150 that some components and structures may be replaced, added, or omitted within a range easily understandable to those skilled in the art with reference to the drawings and descriptions below.

In an embodiment, the first dome-shaped molding region 192 may be arranged at a position corresponding to the light emitting unit 151 on one surface (for example, a surface in the +x direction) of a base region 191 facing a cavity. The first dome-shaped molding region 192 may guide the light emitted from the light emitting unit 151.

For example, the first dome-shaped molding region 192 may guide at least part of the light emitted from the light emitting unit 151 to be focused on an identification material of a detection target (an aerosol generating article or cartridge) of the sensor module 150.

In an embodiment, the first dome-shaped molding region 192 may provide light transfer efficiency of the light emitting unit 151, and the sensor module 150 may improve sensing accuracy through the first dome-shaped molding region 192.

In an embodiment, the first dome-shaped molding region 192 may be formed as a single body continuous with the base region 191. Alternatively, the first dome-shaped molding region 192 may have a discontinuous structure with the base region 191 and may be coupled to the base region 191.

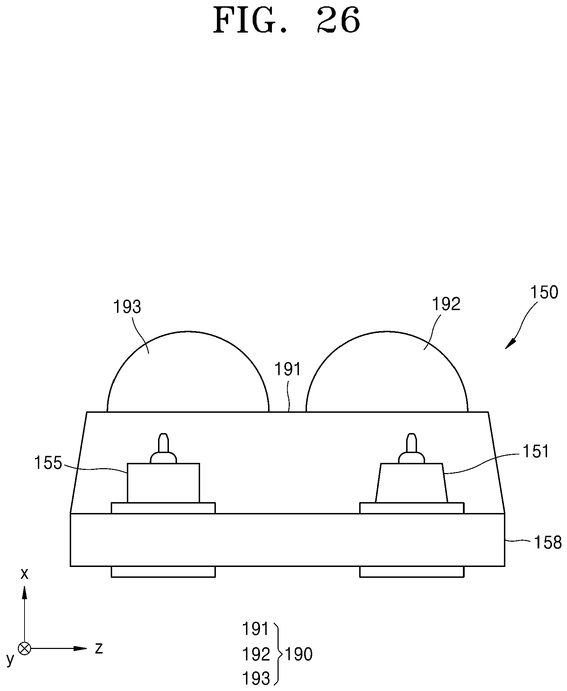

FIG. 26 is a side view of a sensor module 150 according to an embodiment.

Referring to FIG. 26, the sensor module 150 may include a light emitting unit 151, a light receiving unit 155, a substrate 158, a molding member 190, a first dome-shaped molding region 192, and a second dome-shaped molding region 193.

At least one component (for example, the light emitting unit 151) among the components of the sensor module 150 is identical or similar to at least one of the components of the sensor module described above, and accordingly, redundant descriptions thereof are omitted below. Also, it is obvious in the sensor module 150 that some components and structures may be replaced, added, or omitted within a range easily understandable to those skilled in the art with reference to the drawings and descriptions below.

In an embodiment, the second dome-shaped molding region 193 may be arranged at a position corresponding to the light receiving unit 155 on one surface (for example, a surface in the +x direction) of the base region 191 facing a cavity. The second dome-shaped molding region 193 may guide the light transferred to the light receiving unit 155.

For example, the second dome-shaped molding region 193 may guide the light emitted from the identification material to be focused on the light receiving unit 155.

In an embodiment, the second dome-shaped molding region 193 may provide light absorption efficiency of the light receiving unit 155, and the sensor module 150 may improve sensing accuracy through the second dome-shaped molding region 193.

In an embodiment, the second dome-shaped molding region 193 may be formed as a single body continuous with the base region 191. Alternatively, the second dome-shaped molding region 193 may have a discontinuous structure with the base region 191 and may be coupled to the base region 191.

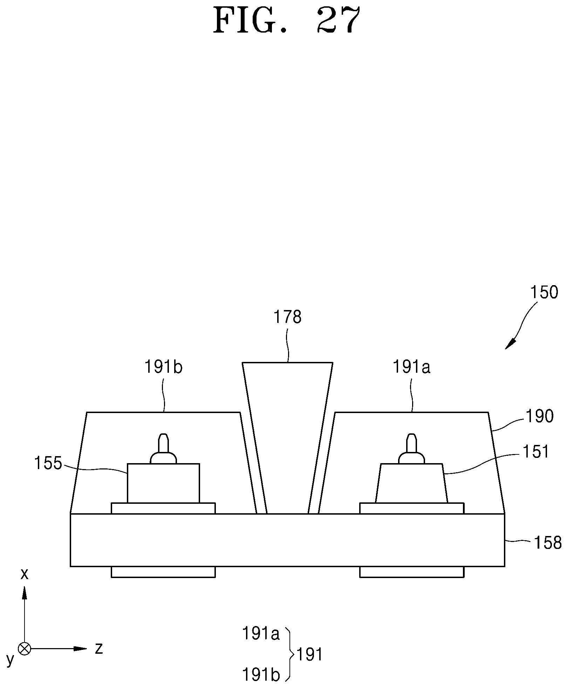

FIG. 27 is a side view of a sensor module 150 according to an embodiment.

Referring to FIG. 27, the sensor module 150 may include a light emitting unit 151, a light receiving unit 155, a substrate 158, a partition wall 178, and a molding member 190.

At least one component (for example, the light emitting unit 151) among components of the sensor module 150 is identical or similar to at least one of the components of the sensor module described above, and accordingly, redundant descriptions thereof are omitted below. Also, it is obvious in the sensor module 150 that some components and structures may be replaced, added, or omitted within a range easily understandable to those skilled in the art with reference to the drawings and descriptions below.

A base region 191 of the molding member 190 may be arranged on a substrate surface to surround the light emitting unit 151 and the light receiving unit 155.

The molding member 190 may include a light-transmitting material. The molding member 190 may guide the light emitted from the light emitting unit 151 through the base region 191 to be transferred to a detection target of the sensor module 150.

In an embodiment, the base region 191 may include a first molding region 191a and a second molding region 191b. The first molding region 191a may surround the light emitting unit 151. The second molding region 191b may surround the light receiving unit 155.

In an embodiment, the second molding region 191b may be arranged to be separated from the first molding region 191a. Alternatively, the first molding region 191a and the second molding region 191b may be arranged discontinuously from each other.

In an embodiment, because the first molding region 191a is separated from the second molding region 191b, the light emitted from the light emitting unit 151 may be prevented from being transferred to the light receiving unit 155 through the molding member 190. The sensor module 150 may improve sensing accuracy through the first molding region 191a and the second molding region 191b.

In an embodiment, the partition wall 178 may partition the first molding region 191a and the second molding region 191b. The partition wall 178 may be arranged between the first molding region 191a and the second molding region 191b. The partition wall 178 may have a shape that extends along the first molding region 191a and the second molding region 191b.

In an embodiment, the partition wall 178 may include an epoxy molding compound (EMC) material. The partition wall 178 may be formed of a material with relatively low light transmittance compared to the molding member 190. The partition wall 178 may prevent the light emitted from the light emitting unit 151 from being transferred to the light receiving unit 155. The sensor module 150 may improve sensing accuracy through the partition wall 178.

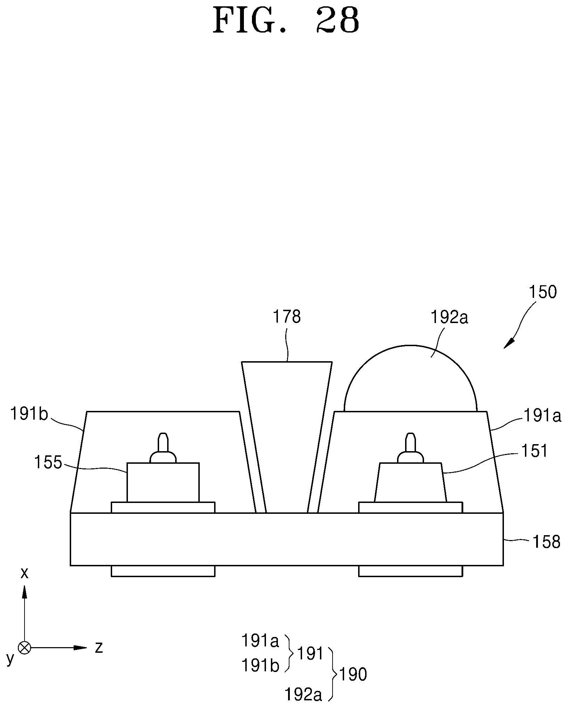

FIG. 28 is a side view of a sensor module 150 according to an embodiment.

Referring to FIG. 28, the sensor module 150 may include a light emitting unit 151, a light receiving unit 155, a substrate 158, a partition wall 178, a molding member 190, and a first dome-shaped molding region 192a.

At least one component (for example, the light emitting unit 151) among components of the sensor module 150 is identical or similar to at least one of the components of the sensor module described above, and accordingly, redundant descriptions thereof are omitted below. Also, it is obvious in the sensor module 150 that some components and structures may be replaced, added, or omitted within a range easily understandable to those skilled in the art with reference to the drawings and descriptions below.

The molding member 190 may include a base region 191 composed of a first molding region 191a surrounding the light emitting unit 151 and a second molding region 191b surrounding the light receiving unit 155.

The first dome-shaped molding region 192a may be arranged at a position corresponding to the light emitting unit 151 on one surface (for example, a surface in the +x direction) of the base region 191 facing a cavity. For example, the first dome-shaped molding region 192a may be arranged on the first molding region 191a.

In an embodiment, the first dome-shaped molding region 192a may guide the light emitted from the light emitting unit 151. For example, the first dome-shaped molding region 192a may guide at least part of the light emitted from the light emitting unit 151 to be focused on an identification material of a detection target (an aerosol generating article or cartridge) of the sensor module 150.

In an embodiment, the first dome-shaped molding region 192a may provide light transfer efficiency of the light emitting unit 151, and the sensor module 150 may improve sensing accuracy through the first dome-shaped molding region 192a.

In an embodiment, the first dome-shaped molding region 192a may be formed as a single body continuous with the first molding region 191a. alternatively, the first dome-shaped molding region 192a may have a discontinuous structure with the first molding region 191a and may be coupled to the first molding region 191a.

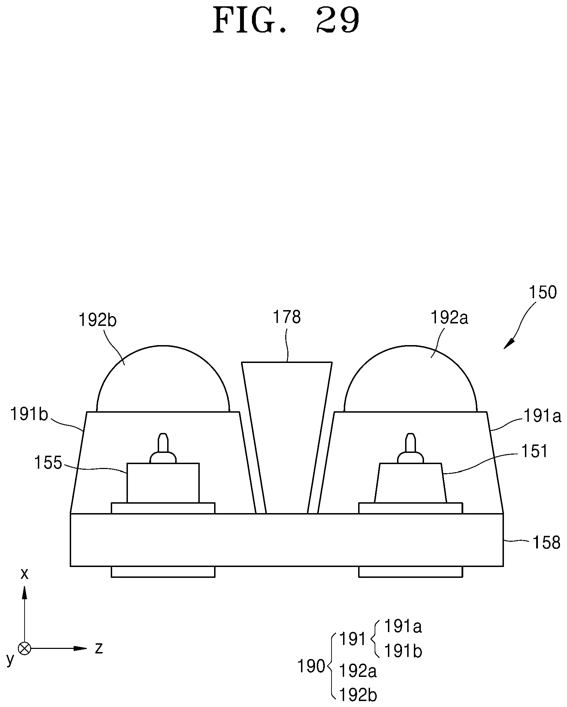

FIG. 29 is a side view of a sensor module 150 according to an embodiment.

Referring to FIG. 29, the sensor module 150 may include a light emitting unit 151, a light receiving unit 155, a substrate 158, a partition wall 178, a molding member 190, a first dome-shaped molding region 192a, and a second dome-shaped molding region 192b.

At least one component (for example, the light emitting unit 151) among the components of the sensor module 150 is identical or similar to at least one of the components of the sensor module described above, and accordingly, redundant descriptions thereof are omitted below. Also, it is obvious in the sensor module 150 that some components and structures may be replaced, added, or omitted within a range easily understandable to those skilled in the art with reference to the drawings and descriptions below.

In an embodiment, the molding member 190 may include a base region 191 composed of a first molding region 191a surrounding the light emitting unit 151 and a second molding region 191b surrounding the light receiving unit 155.

In an embodiment, the second dome-shaped molding region 192b may be arranged at a position corresponding to the light receiving unit 155 on one surface (for example, a surface in the +x direction) of the base region 191 facing a cavity. For example, the second dome-shaped molding region 192b may be arranged on an upper surface of the second molding region 191b.

In an embodiment, the second dome-shaped molding region 192b may guide the light transferred to the light receiving unit 155. For example, the second dome-shaped molding region 192b may guide the light emitted from the identification material to be focused on the light receiving unit 155.

In an embodiment, the second dome-shaped molding region 192b may provide light absorption efficiency of the light receiving unit 155, and the sensor module 150 may improve sensing accuracy through the second dome-shaped molding region 192b.

In an embodiment, the second dome-shaped molding region 192b may be formed as a single body continuous with the second molding region 191b. Alternatively, the second dome-shaped molding region 192b may have a discontinuous structure with the second molding region 191b and may be coupled to the second molding region 191b.

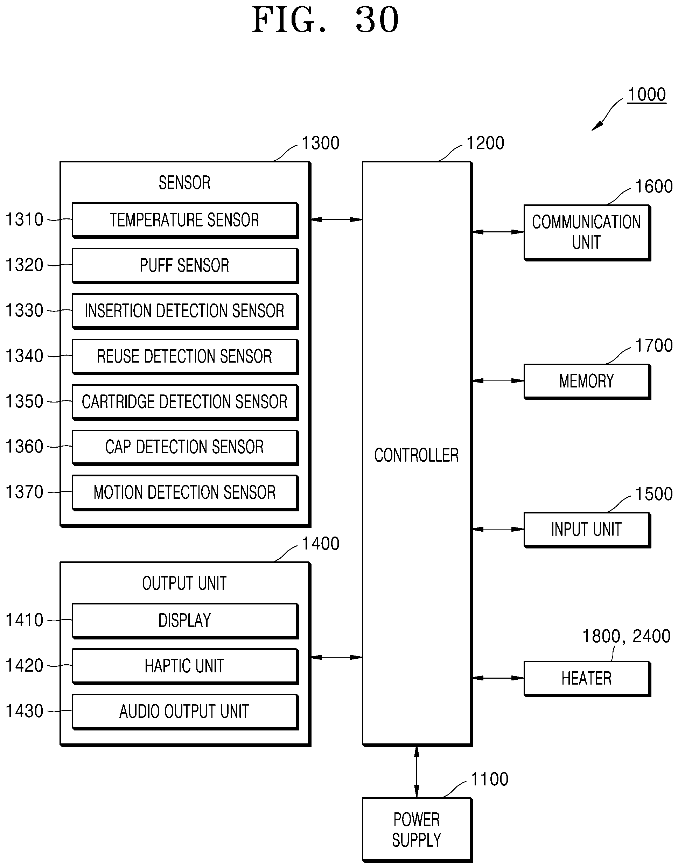

FIG. 30 is a block diagram of an aerosol generating device according to another embodiment.

The aerosol generating device 1000 may include a power supply 1100, a controller 1200, a sensor 1300, an output unit 1400, an input unit 1500, a communication unit 1600, memory 1700, and at least one heater 1800, 2400. However, an internal structure of the aerosol generating device 1000 is not limited to the illustration of FIG. 30. That is, it may be understood by those skilled in the art that some of the configuration illustrated in FIG. 30 may be omitted or a new configuration may be added depending on the design of the aerosol generating device 1000.

The sensor 1300 may detect a state of the aerosol generating device 1000 or a state around the aerosol generating device 1000 and may transmit the detected information to the controller 1200. The controller 1200 may control the aerosol generating device 1000 such that various functions, such as operation control of the cartridge heater 2400 and/or the heater 1800, smoking restrictions, determining whether an aerosol generating article and/or a cartridge 200 (see FIGS. 9A to 11) is inserted, and an alarm display, may be performed.

The sensor 1300 may include at least one of a temperature sensor 1310, a puff sensor 1320, an insertion detection sensor 1330, a reuse detection sensor 1340, a cartridge detection sensor 1350, a cap detection sensor 1360, and a movement detection sensor 1370.

The temperature sensor 1310 may detect the temperature at which the cartridge heater 2400 and/or the heater 1800 is heated. The aerosol generating device 1000 may include a separate temperature sensor for detecting the temperature of the cartridge heater 2400 and/or the heater 1800, or the cartridge heater 2400 and/or the heater 1800 itself may serve as a temperature sensor.

The temperature sensor 1310 may output signals corresponding to temperatures of the cartridge heater 2400 and/or the heater 1800. For example, the temperature sensor 1310 may include a resistor element of which resistance value changes according to a change in temperature of the cartridge heater 2400 and/or the heater 1800. The temperature sensor 1310 may be implemented with a thermistor or so on that is an element using a property in which resistance changes according to the temperature. In this case, the temperature sensor 1310 may output a signal corresponding to a resistance value of a resistor element as a signal corresponding to the temperature of the cartridge heater 2400 and/or the heater 1800. For example, the temperature sensor 1310 may include a sensor for detecting resistance values of the cartridge heater 2400 and/or the heater 1800. In this case, the temperature sensor 1310 may output signals corresponding to the resistance values of the cartridge heater 2400 and/or the heater 1800 as signals corresponding to temperatures of the cartridge heater 2400 and/or the heater 1800.

The temperature sensor 1310 may be arranged around the power supply 1100 to monitor the temperature of the power supply 1100. The temperature sensor 1310 may be arranged adjacent to the power supply 1100. For example, the temperature sensor 1310 may be attached to one surface of a battery that is the power supply 1100. For example, the temperature sensor 1310 may be mounted on one surface of a printed circuit board.

The temperature sensor 1310 may be arranged inside an aerosol generating device body to detect the internal temperature of the aerosol generating device body.

The puff sensor 1320 may detect a user's puff based on various physical changes of an air path. The puff sensor 1320 may output signals corresponding to puffs. For example, the puff sensor 1320 may be a pressure sensor. The puff sensor 1320 may output a signal corresponding to the internal pressure of the aerosol generating device. Here, the internal pressure of the aerosol generating device 1000 may correspond to pressure of the air path through which gas flows. The puff sensor 1320 may be arranged in the aerosol generating device 1000 to correspond to the air path through which gas flows.

The insertion detection sensor 1330 may detect insertion and/or removal of an aerosol generating article. The insertion detection sensor 1330 may detect a signal change according to insertion and/or removal of an aerosol generating article. The insertion detection sensor 1330 may be installed around an insertion space. The insertion detection sensor 1330 may detect insertion and/or removal of an aerosol generating article according to a change in dielectric constant in the insertion space. For example, the insertion detection sensor 1330 may be an inductive sensor and/or a capacitive sensor.

The inductive sensor may include at least one coil. The coil of the inductive sensor may be arranged adjacent to the insertion space. For example, when a magnetic field changes around a coil through which a current flows, characteristics of the current flowing through the coil may be changed according to the Faraday's law. Here, the characteristics of the current flowing through the coil may include a frequency of an alternating current, a current value, a voltage value, an inductance value, an impedance value, and so on.

The inductive sensor may output signals corresponding to the characteristics of the current flowing through the coil. For example, the inductive sensor may output a signal corresponding to an inductance value of the coil.

The capacitive sensor may include a conductor. The conductor of the capacitive sensor may be arranged adjacent to the insertion space. The capacitive sensor may output signals corresponding to electromagnetic characteristics of the surrounding, for example, capacitance around a conductor. For example, when the aerosol generating article including a metallic wrapper is inserted into the insertion space, the electromagnetic characteristics around the conductor may be changed by a wrapper of an aerosol generating article.

The reuse detection sensor 1340 may detect whether an aerosol generating article is reused. The reuse detection sensor 1340 may be a color sensor. The color sensor may detect a color of an aerosol generating article. The color sensor may detect a color of a part of a wrapper surrounding the outside of the aerosol generating article. The color sensor may detect values for optical characteristics corresponding to colors of an object based on the light reflected from an object. For example, optical characteristics may be wavelengths of light. The color sensor may be implemented with a proximity sensor as one configuration or with a separate configuration distinguished from the proximity sensor.

A color of at least part of a wrapper that constitutes the aerosol generating article may be changed by an aerosol. The reuse detection sensor 1340 may be arranged to correspond to a position in which at least part of a wrapper having a color changed by an aerosol is arranged, when an aerosol generating article is inserted into an insertion space. For example, before the aerosol generating article is used by a user, the color of at least part of the wrapper may be a first color. In this case, as at least part of the wrapper is wet by an aerosol while the aerosol generated by an aerosol generating device 1000 passes through an aerosol generating article, a color of at least part of the wrapper may be changed into a second color. The color of at least part of the wrapper may be maintained as the second color after being changed from the first color to the second color.

The cartridge detection sensor 1350 may detect insertion and/or removal of the cartridge 200 (see FIGS. 9A to 11). The cartridge detection sensor 1350 may be implemented with an inductance-based sensor, a capacitive sensor, a resistive sensor, a hall sensor (hall IC) using a hall effect, or so on.

The cap detection sensor 1360 may detect mounting and/or removal of a cap. When the cap is separated from an aerosol generating device body, a part of the cartridge 200 (see FIGS. 9A to 11) and the aerosol generating device body covered by the cap may be exposed to the outside. The cap detection sensor 1360 may be implemented with a contact sensor, a hall sensor (hall IC), an optical sensor, or so on.

The movement detection sensor 1370 may detect the movement of an aerosol generating device. The movement detection sensor 1370 may be implemented with at least one sensor among an acceleration sensor and a gyro sensor.

The sensor 1300 may further include at least one sensor among a humidity sensor, a barometric sensor, a magnetic sensor, a global positioning sensor, and a proximity sensor, in addition to the sensors 1310 to 1370 described above. Functions of sensors may be intuitively inferred by those skilled in the art from their names and accordingly, detailed descriptions thereof may be omitted.

The output unit 1400 may output information on a state of the aerosol generating device 1000 and may provide the information to a user. The output unit 1400 may include at least one of a display 1410, a haptic unit 1420, and a sound output unit 1430, but embodiments are not limited thereto. When the display 1410 and a touch pad include a touch screen while having a layer structure, the display 1410 may be used as an input device in addition to an output device.

The display 1410 may provide information on the aerosol generating device 1000 visually to a user. For example, the information on the aerosol generating device 1000 may mean various types of information, such as a charging/discharging state of the power supply 1100 of the aerosol generating device 1000, a preheating state of the heater 1800, an insertion/removal state of the aerosol generating article and/or the cartridge 200 (see FIGS. 9A to 11), a mounting/removal state of a cap, and a state in which the use of the aerosol generating device 1000 is limited (for example, detecting of an abnormal article), and the display 1410 may output the information to the outside. For example, the display 1410 may have a shape of a light emitting diode (LED). For example, the display 1410 may be a liquid crystal display (LCD), an organic light-emitting diode (OLED), or so on.

The haptic unit 1420 may convert an electrical signal into mechanical stimulus or electrical stimulus and may provide the information on the aerosol generating device 1000 tactually to a user. For example, the haptic unit 1420 may generate vibration corresponding to completion of initial preheating when initial power is supplied to the cartridge heater 2400 and/or the heater 1800 for a set time. The haptic unit 1420 may include a vibration motor, a piezoelectric element, or an electrical stimulus device.

The sound output unit 1430 may provide information on the aerosol generating device 1000 acoustically to a user. For example, the sound output unit 1430 may convert an electrical signal into a sound signal and may output the sound signal to the outside.

The power supply 1100 may supply power used to operate the aerosol generating device 1000. The power supply 1100 may supply power to heat the cartridge heater 2400 and/or the heater 1800. Also, the power supply 1100 may supply power required for operating the sensor 1300, the output unit 1400, the input unit 1500, the communication unit 1600, and the memory 1700, which are other configurations provided in the aerosol generating device 1000. The power supply 1100 may be a chargeable battery or a disposable battery. For example, the power supply 1100 may be a lithium polymer (LiPoly) battery, but embodiments are not limited thereto.

Although not illustrated in FIG. 30, the aerosol generating device 1000 may further include a power supply protection circuit. The power supply protection circuit may be electrically connected to the power supply 1100 and may include a switching element.

The power supply protection circuit may cut off an electric path for the power supply 1100 according to a certain condition. For example, the power supply protection circuit may cut off an electric path for the power supply 1100 when a voltage level of the power supply 1100 is greater than or equal to a first voltage corresponding to overcharging. For example, the power supply protection circuit may cut off an electric path for the power supply 1100 when a voltage level of the power supply 1100 is less than a second voltage corresponding to overdischarging.

The heater 1800 may heat a medium in an aerosol generating article or an aerosol generating material by receiving power from the power supply 1100. Although not illustrated in FIG. 30, the aerosol generating device 1000 may further include a power conversion circuit (for example, a DC/DC converter) for converting power of the power supply 1100 to supply the power to the cartridge heater 2400 and/or the heater 1800. Also, when the aerosol generating device 1000 generates an aerosol by using an induction heating method, the aerosol generating device 1000 may further include a DC/AC converter that converts direct current power of the power supply 1100 into alternating current power.

The controller 1200, the sensor 1300, the output unit 1400, the input unit 1500, the communication unit 1600, and the memory 1700 may perform functions by receiving power from the power supply 1100. Although not illustrated in FIG. 30, the aerosol generating device 1000 may further include a power conversion circuit for converting power of the power supply 1100 to supply the power to components, for example, a low dropout (LDO) circuit or a voltage regulator circuit. Also, although not illustrated in FIG. 30, a noise filter may be provided between the power supply 1100 and the heater 1800. The noise filter may be a low pass filter. The low pass filter may include at least one inductor and at least one capacitor. A cutoff frequency of the low pass filter may correspond to a frequency of a radio frequency switching current applied to the heater 1800 from the power supply 1100. Radio frequency noise components may be prevented from being applied to the sensor 1300, such as the insertion detection sensor 1330, by the low pass filter.

In an embodiment, the cartridge heater 2400 and/or the heater 1800 may be formed of a certain proper electric resistance material. For example, the proper electric resistance material may be a metal or a metal alloy including titanium, zirconium, tantalum, platinum, nickel, cobalt, chromium, hafnium, niobium, molybdenum, tungsten, tin, gallium, manganese, iron, copper, stainless steel, nichrome, and so on, but embodiments are not limited thereto. Also, the heater 1800 may be implemented with a metal heating wire, a metal heating plate on which an electric conductive track is arranged, a ceramic heating body, or so on, but embodiments are not limited thereto.

In another embodiment, the heater 1800 may be a heater using an induction heating method. For example, the heater 1800 may include a susceptor that generates heat by a magnetic field applied by a coil to heat an aerosol generating material.

The input unit 1500 may receive information input by a user or may output the information to the user. For example, the input unit 1500 may be a touch panel. The touch panel may include at least one touch sensor for detecting touch. For example, the touch sensor may include a capacitive touch sensor, a resistive touch sensor, a surface acoustic wave touch sensor, an infrared touch sensor, or so on, but embodiments are not limited thereto.

The display 1410 and the touch panel may be implemented as one panel. For example, the touch panel may be inserted (in on-cell type or in-cell type) into the display 1410. For example, the touch panel may be an add-on type on a panel of the display 1410.

The input unit 1500 may include a button, a key pad, a dome switch, a jog wheel, a jog switch, or so on, but embodiments are not limited thereto.

The memory 1700 may be hardware for storing various data to be processed in the aerosol generating device 1000 and may store the data processed by the controller 1200 and the data to be processed. The memory 1700 may include a storage medium of at least one type among flash memory type memory, hard disk type memory, multimedia card micro type memory, card type memory (for example, SD or XD memory or so on), random access memory (RAM), static random access memory (SRM), read-only memory (ROM), electrically erasable programmable read-only memory (EEPROM), programmable read-only memory (PROM), magnetic memory, a magnetic disk, and an optical disk. The memory 1700 may store data about the operating time of the aerosol generating device 1000, a maximum puff number, a current puff number, at least one profile, and a user's smoking pattern.

The communication unit 1600 may include at least one component for communication with other electronic devices. For example, the communication unit 1600 may include at least one of a short-range wireless communication unit and a wireless communication unit.

The short-range wireless communication unit may include a Bluetooth communication unit, a Bluetooth low energy (BLE) communication unit, a near field communication unit, a WLAN (Wi-Fi) communication unit, a Zigbee communication unit, an infrared data association (IrDA) communication unit, a Wi-Fi direct (WFD) communication unit, an ultra wideband (UWB) communication unit, an Ant+ communication unit, and so on, but embodiments are not limited thereto.

The wireless communication unit may include a cellular network communication unit, an Internet communication unit, a computer network (for example, LAN or WAN) communication unit, and so on, but embodiments are not limited thereto.

Although not illustrated in FIG. 30, the aerosol generating device 1000 may further include a connection interface, such as a universal serial bus (USB) interface, may transmit/receive information while being connected to another external device through a connection interface, such as a USB interface or so on, or may charge the power supply 1100.

The controller 1200 may control all operations of the aerosol generating device 1000. In an embodiment, the controller 1200 may include at least one processor. The processor may be implemented with an array of a plurality of logic gates or may also be implemented with a combination of a general microprocessor and memory including a program which is stored in the memory and may be executed by the microprocessor. Also, it may be understood by those skilled in the art that the processor may also be implemented with another type hardware.

The controller 1200 may control the supply of power of the power supply 1100 to the heater 1800, and accordingly, the temperature of the heater 1800 may be controlled. The controller 1200 may control the temperature of the cartridge heater 2400 and/or the heater 1800 based on the temperature of the cartridge heater 2400 and/or the heater 1800 detected by the temperature sensor 1310. The controller 1200 may control the power supplied to the cartridge heater 2400 and/or the heater 1800 based on the temperature of the cartridge heater 2400 and/or the heater 1800. For example, the controller 1200 may determine a target temperature of the cartridge heater 2400 and/or the heater 1800 based on a temperature profile stored in the memory 1700.

The aerosol generating device 1000 may include a power supply circuit (not illustrated) electrically connected to the power supply 1100 between the power supply 1100 and the cartridge heater 2400 and/or the heater 1800. The power supply circuit may be electrically connected to the cartridge heater 2400, the heater 1800, or the induction coil. The power supply circuit may include at least one switching element. The switching element may be implemented with a bipolar junction transistor(BJT), a field effect transistor(FET), or so on. The controller 1200 may control the power supply circuit.

The controller 1200 may control switching of the switching element of the power supply circuit, and accordingly, the supply of power may be controlled. The power supply circuit may be an inverter that converts direct current power output from the power supply 1100 into alternating current power. For example, the inverter may include a full-bridge circuit or a half-bridge circuit including a plurality of switching elements.

The controller 1200 may turn on the switching element such that power may be supplied to the cartridge heater 2400 and/or the heater 1800 from the power supply 1100. The controller 1200 may turn off the switching element such that the supply of power to the cartridge heater 2400 and/or the heater 1800 may be cut off. The controller 1200 may adjust a current that is supplied from the power supply 1100 by adjusting a frequency and/or duty ratio of a current pulse input to the switching element.

The controller 1200 may control a voltage output from the power supply 1100 by controlling switching of the switching element of the power supply circuit. The power conversion circuit may convert the voltage output from the power supply 1100. For example, the power conversion circuit may include a Buck-converter that drops the voltage output from the power supply 1100. For example, the power conversion circuit may be implemented with a Buck-boost converter, a Zener diode, or so on.

The controller 1200 may adjust a level of a voltage output from the power conversion circuit by controlling an on/off operation of the switching element included in the power conversion circuit. When an on state of the switching element is continued, the level of the voltage output from the power conversion circuit may correspond to a level of the voltage output from the power supply 1100. A duty ratio with respect to the on/off operation of the switching element may correspond to a ratio of the voltage output from the power conversion circuit to the voltage output from the power supply 1100. As the duty ratio with respect to the on/off operation of the switching element is decreased, the level of the voltage output from the power conversion circuit may be reduced. The heater 1800 may be heated based on the voltage output from the power conversion circuit.

The controller 1200 may control the power that is supplied to the heater 1800 by using at least one method among a pulse width modulation (PWM) method and a proportional-integral-differential(PID) method.

For example, the controller 1200 may control a current pulse having a certain frequency and duty ratio, which is supplied to the heater 1800, by using the PWM method. The controller 1200 may control the power that is supplied to the heater 1800 by adjusting the frequency and duty ratio of the current pulse.

For example, the controller 1200 may determine a target temperature that is a target of control based on a temperature profile. The controller 1200 may control the power that is supplied to the heater 1800 by using a PID method that is a feedback control method using a difference value between the temperature of the heater 1800 and a target temperature, a value obtained by integrating the difference value according to the flow of time, and a value obtained by differentiating the difference value according to the flow of time.

The controller 1200 may prevent the cartridge heater 2400 and/or the heater 1800 from being overheated. For example, the controller 1200 may control an operation of the power conversion circuit such that the supply of power to the cartridge heater 2400 and/or the heater 1800 is stopped, based on the temperature of the cartridge heater 2400 and/or the heater 1800 that exceeds a preset limit temperature. For example, the controller 1200 may reduce the amount of power supplied to the cartridge heater 2400 and/or the heater 1800, based on the temperature of the cartridge heater 2400 and/or the heater 1800 that exceeds the preset limit temperature. For example, the controller 1200 may determine that an aerosol generating material accommodated in the cartridge 200 (see FIGS. 9A to 11) is exhausted, based on the temperature of the cartridge heater 2400 that exceeds a limit temperature, and may cut off the supply of power to the cartridge heater 2400.

The controller 1200 may control charging/discharging of the power supply 1100. The controller 1200 may check the temperature of the power supply 1100 based on an output signal of the temperature sensor 1310.

When a power wire is connected to a battery terminal of the aerosol generating device 1000, the controller 1200 may check whether the temperature of the power supply 1100 is greater than or equal to a first limit temperature that is a basis for cutting off charging of the power supply 1100. The controller 1200 may control charging the power supply 1100 based on a preset charging current when the temperature of the power supply 1100 is less than the first limit temperature. The controller 1200 may cut off charging of the power supply 1100 when the temperature of the power supply 1100 is greater than or equal to the first limit temperature.

When power of the aerosol generating device 1000 is in an on state, the controller 1200 may check whether the temperature of the power supply 1100 is greater than or equal to a second limit temperature that is a basis for cutting off discharging of the power supply 1100. The controller 1200 may control use of the power stored in the power supply 1100 when the temperature of the power supply 1100 is less than the second limit temperature. The controller 1200 may stop using the power stored in the power supply 1100 when the temperature of the power supply 1100 is greater than or equal to the second limit temperature.

The controller 1200 may calculate residual capacity of the power stored in the power supply 1100. For example, the controller 1200 may calculate the residual capacity of the power supply 1100 based on a voltage and/or current sensing value of the power supply 1100.

The controller 1200 may determine whether an aerosol generating article is inserted in an insertion space, by using the insertion detection sensor 1330. The controller 1200 may determine that the aerosol generating article is inserted, based on an output signal of the insertion detection sensor 1330. When it is determined that the aerosol generating article is inserted in the insertion space, the controller 1200 may control supply of power such that the power is supplied to the cartridge heater 2400 and/or the heater 1800. For example, the controller 1200 may supply the power to the cartridge heater 2400 and/or the heater 1800 based on a temperature profile stored in the memory 1700.

The controller 1200 may determine whether the aerosol generating article is removed from the insertion space. For example, the controller 1200 may determine whether the aerosol generating article is inserted in the insertion space, by using the insertion detection sensor 1330. For example, the controller 1200 may determine that the aerosol generating article is removed from the insertion space, when the temperature of the heater 1800 is greater than or equal to a limit temperature or when a temperature change slope of the heater 1800 is greater than or equal to a set slope. When it is determined that the aerosol generating article is inserted in the insertion space, the controller 1200 may control power such that supply of the power to the cartridge heater 2400 and/or the heater 1800 is stopped.

The controller 1200 may control the time and/or amount of power that is supplied to the heater 1800 according to a state of an aerosol generating article detected by the sensor 1300. The controller 1200 may check a level range in which a level of a signal of a capacitive sensor is included, based on a lookup table. The controller 1200 may check a moisture amount for an aerosol generating article according to the checked level range.

When the aerosol generating article is overwatering, the controller 1200 may control the time of power that is supplied to the heater 1800, and increase the preheating time of the aerosol generating article rather than in a general state.

The controller 1200 may determine whether the aerosol generating article inserted in the insertion space is reused, by using the reuse detection sensor 1340. For example, the controller 1200 may compare a sensing value of a signal of the reuse detection sensor with a first reference range in which a first color is not included, and may determine that an aerosol generating article is not used when the sensing value is included in the first reference range. For example, the controller 1200 may compare the sensing value of the signal of the reuse detection sensor with a second reference range in which a second color is included, and may determine that the aerosol generating article is used when the sensing value is included in the second reference range. When it is determined that the aerosol generating article is used, the controller 1200 may cut off the supply of power to the cartridge heater 2400 and/or the heater 1800.

The controller 1200 may determine whether the cartridge 200 (see FIGS. 9A to 11) is attached and/or detached, by using the cartridge detection sensor 1350. For example, the controller 1200 may determine whether the cartridge 200 (see FIGS. 9A to 11) is attached and/or detached, based on a sensing value of a signal of the cartridge detection sensor.

The controller 1200 may determine whether an aerosol generating material of the cartridge 200 (see FIGS. 9A to 11) is exhausted. For example, the controller 1200 may preheat the cartridge heater 14 and/or the heater 1800 by applying power, may determine whether the temperature of the cartridge heater 2400 exceeds a limit temperature in a preheating section, and may determine that the aerosol generating material of the cartridge 200 (see FIGS. 9A to 11) is exhausted when the temperature of the cartridge heater 2400 exceeds the limit temperature. When it is determined that the aerosol generating material of the cartridge 200 (see FIGS. 9A to 11) is exhausted, the controller 1200 may cut off the supply of power to the cartridge heater 2400 and/or the heater 1800.

The controller 1200 may determine whether the cartridge 200 (see FIGS. 9A to 11) is used. For example, the controller 1200 may determine that the cartridge 200 (see FIGS. 9A to 11) may not be used based on the data stored in the memory 1700 when a current puff number is greater than or equal to the greatest puff number set in the cartridge 200 (see FIGS. 9A to 11). For example, the controller 1200 may determine that the cartridge 200 (see FIGS. 9A to 11) may not be used when a total time at which the heater 2400 is heated is longer than or equal to a preset maximum time or a total amount of power supplied to the heater 2400 is greater than or equal to a preset maximum power amount.

The controller 1200 may perform determination on a user's smoking through the puff sensor 1320. For example, the controller 1200 may determine whether puff occurs, based on a sensing value of a signal of the puff sensor. For example, the controller 1200 may determine the intensity of puff, based on a sensing value of a signal of the puff sensor 1320. When a puff number reaches the preset maximum puff number or puff is not detected for a preset time or more, the controller 1200 may cut off the supply of power to the cartridge heater 2400 and/or the heater 1800.

The controller 1200 may determine whether a cap is attached and/or detached, by using the cap detection sensor 1360. For example, the controller 1200 may determine whether the cap is attached and/or detached, based on a sensing value of a signal of a cap detection sensor.

The controller 1200 may control the output unit 1400 based on a result sensed by the sensor 1300. For example, when the number of puffs counted by the puff sensor 1320 reaches a preset number, the controller 1200 may notify a user in advance that the aerosol generating device 1000 will be ended soon, through at least one of the display 1410, the haptic unit 1420, and the sound output unit 1430. For example, the controller 1200 may notify the user through the output unit 1400 based on the determination that there is no aerosol generating article in an insertion space. For example, the controller 1200 may notify the user through the output unit 1400 based on the determination that a cartridge 200 (see FIGS. 9A to 11) and/or cap is not mounted. For example, the controller 1200 may transmit information on the temperature of the cartridge heater 2400 and/or the heater 1800 to a user through the output unit 1400.

The controller 1200 may store and update the history of an event occurring in the memory 1700 based on certain event occurrence. The event may include the insertion detection of an aerosol generating article, heating start of the aerosol generating article, puff detection, puff end, overheat detection of the cartridge heater 2400 and/or the heater 1800, detection of overvoltage applied to the cartridge heater 2400 and/or the heater 1800, heating end of the aerosol generating article, the power on/off operation of the aerosol generating device 1000, charging start of the power supply 1100, detection of overcharging of the power supply 1100, and charging end of the power supply 1100, which are performed by the aerosol generating device 1000. History of an event may include the date and time of the event, log data corresponding to the event, and so on. For example, when a preset event is insertion detection of the aerosol generating article, log data corresponding to the event may include data of a sensing value and so on of the insertion detection sensor 1330. For example, when the preset event is overheating detection of the cartridge heater 2400 and/or the heater 1800, the log data corresponding to the event may include data of the temperature of the cartridge heater 2400 and/or heater 1800, a voltage applied to the cartridge heater 2400 and/or the heater 1800, a current flowing through the cartridge heater 2400 and/or the heater 1800, and so on.

The controller 1200 may control formation of a communication link with an external device, such as a user's mobile terminal. By receiving data on authentication from the external device through the communication link, the controller 1200 may dismiss the limitation of use of at least one function of the aerosol generating device 1000. Here, the data on authentication may include data that indicates the completion of user authentication for users corresponding to external devices. A user may perform the user authentication through an external device. The external device may determine whether user data is valid based on a user's birthday and the unique number representing the user, and may receive data on the permission of the aerosol generating device 1 from an external server. An external device may transmit data indicating the completion of the user authentication to the aerosol generating device 1000 based on the data on the user authentication. When the user authentication is completed, the controller 1200 may dismiss the limitation of use of at least one function of the aerosol generating device 1000. For example, when the user authentication is completed, the controller 1200 may dismiss the limitation of use of heating functions that supply power to the heater 1800.

The controller 1200 may transmit data on a state of the aerosol generating device 1000 to an external device through a communication link formed with the external device. Based on the received state data, the external device may output residual capacity, an operation mode, and so on of the power supply 1100 in the aerosol generating device 1000 through the display of the external device based on the received state data.

The external device may transmit a position search request to the aerosol generating device 1000 based on input to start position search of the aerosol generating device 1000. When receiving the position search request from an external device, the controller 1200 may control an operation of at least one of an output device, which corresponds to position search, based on the received position search request. For example, the haptic unit 1420 may generate vibration in response to the position search request. For example, in response to the position search request, the display 1410 may output an object that corresponds to position search and search end.

The controller 1200 may control updating of firmware by receiving firmware data from an external device. The external device may check a current version of the firmware of the aerosol generating device 1000 and determine whether there is a new version of the firmware. The external device may receive a new version of firmware data and transmit the new version of the firmware data to the aerosol generating device 1000 when receiving an input that requests a firmware download. As the controller 1200 receives the new version of the firmware data, the firmware of the aerosol generating device 1000 may be updated.

The controller 1200 may transmit data on a sensing value of at least one sensor 1300 through the communication unit 1600 to an external server (not illustrated), and may receive and store a learning model generated by learning sensing values through machine learning, such as deep learning, from a server. The controller 1200 may perform an operation of determining a user's smoking pattern, an operation of generating a temperature profile by using a learning model received from a server. The controller 1200 may store, in the memory 1700, sensing value data of at least one sensor 1300, data for training an artificial neural network (ANN), and so on. For example, the memory 1700 may store a database for each configuration provided in the aerosol generating device 1000 for training the artificial neural network (ANN), a weight that forms an ANN structure, bias, and so on. The controller 1200 may learn data on the sensing value of at least one sensor 1300, a user's smoking pattern, a temperature profile, and so on, which are stored in the memory 1700, and may generate at least one learning model used for generation of the temperature profile.

The descriptions of the above-described embodiments are merely examples, and it will be understood by one of ordinary skill in the art that various changes and equivalents thereof may be made. Therefore, the scope of the disclosure should be defined by the appended claims, and all differences within the scope equivalent to those described in the claims will be construed as being included in the scope of protection defined by the claims.

Certain embodiments or other embodiments of the disclosure described above are not exclusive or distinct from each other. The certain embodiments or other embodiments of the disclosure described above may be combined with each other or used in combination with each other in their respective components or functions.

For example, it means that an A component described in a specific embodiment and/or the drawings and a B component described in another embodiment and/or the drawings may be combined with each other. In other words, even when it is not explained directly about combination between components, it is possible to combine unless it is explained that combination is impossible.

The above detailed description should not be interpreted restrictedly and should be considered as exemplary in all aspects. The scope of the disclosure should be determined by a rational interpretation of the attached claims, and all changes within the equivalent scope of the disclosure are included in the scope of the disclosure.

## Claims

1. An aerosol generating device comprising:
a cavity into which an aerosol generating article is inserted which includes an identification material that emits light having a second wavelength different from a first wavelength when being excited by light having the first wavelength;
a heater configured to heat the aerosol generating article inserted in the cavity;
a sensor module including a light emitting unit configured to emit the light having the first wavelength toward the identification material of the aerosol generating article inserted in the cavity, and a light receiving unit arranged at a preset angle with the light emitting unit and configured to receive the light having the second wavelength emitted from the identification material; and
a controller configured to determine information of the aerosol generating article based on a sensing value sensed through the light receiving unit, and to control power supply to the heater based on the determined information of the aerosol generating article,
wherein the light receiving unit receives the light having the second wavelength emitted from the identification material while the light emitting unit emits the light having the first wavelength.

2. The aerosol generating device of claim 1, wherein a path of the light having the first wavelength emitted from the light emitting unit is misaligned with a path of the light having the second wavelength received by the light receiving unit.

3. The aerosol generating device of claim 1, further comprising a partition wall arranged between the light emitting unit and the light receiving unit and extending toward the cavity.

4. The aerosol generating device of claim 1, further comprising a sensor support unit fixed to an aerosol generating device body including the cavity and supporting the sensor module.

5. The aerosol generating device of claim 4, wherein the sensor support unit includes a light emitting support unit supporting the light emitting unit, and a light receiving support unit forming a preset angle with the light emitting support unit and supporting the light receiving unit.

6. The aerosol generating device of claim 1, further comprising a shielding portion arranged to surround the sensor module and configured to block an electric or magnetic field signal generated from an outside.

7. The aerosol generating device of claim 6, wherein the shielding portion includes a first portion covering an upper portion of the sensor module, a second portion covering a lower portion of the sensor module, and a third portion connecting the first portion to the second portion and covering a side surface of the sensor module.

8. The aerosol generating device of claim 1, further comprising a lens arranged between the sensor module and the cavity, and through which the light having the first wavelength emitted from the light emitting unit and the light having the second wavelength emitted from the identification material pass.

9. The aerosol generating device of claim 8, wherein the lens includes a first lens which focuses the light having the first wavelength onto the identification material, and a second lens which focuses the light having the second wavelength onto the light receiving unit.

10. The aerosol generating device of claim 9, wherein
the first lens transmits the light having the first wavelength therethrough and absorbs light other than the light having the first wavelength, and
the second lens transmits the light having the second wavelength therethrough and absorbs light other than the light having the second wavelength.

11. The aerosol generating device of claim 1, wherein the sensor module is arranged to be movable in a direction in which the cavity extends.

12. The aerosol generating device of claim 1, wherein the sensor module is arranged to be movable in a circumferential direction of the cavity.

13. The aerosol generating device of claim 1, wherein the first wavelength is 10 nm to 340 nm, and the second wavelength is 380 nm to 780 nm.

14. The aerosol generating device of claim 1, further comprising a filter configured to filter out the light having the first wavelength among light received by the light receiving unit.

15. An aerosol generating device comprising:
a cavity into which an aerosol generating article is inserted which includes an identification material that emits light having a second wavelength different from a first wavelength when being excited by light having the first wavelength;
a heater configured to heat the aerosol generating article inserted in the cavity;
a sensor module including a light emitting unit configured to emit the light having the first wavelength toward the identification material of the aerosol generating article inserted in the cavity, and a light receiving unit arranged at a preset angle with the light emitting unit and configured to receive the light having the second wavelength emitted from the identification material; and
a controller configured to determine information of the aerosol generating article based on a sensing value sensed through the light receiving unit after the light emitting unit stops emitting light, and to control power supply to the heater based on the determined information of the aerosol generating article.
